# EUROPEAN PATENT SPECIFICATION

(11) **EP 2 175 709 B1**
(45) Date of publication and mention of the grant of the patent: **19.06.2013**
(21) Application number: 08803030.9
(22) Date of filing: 14.08.2008
(51) Int. Cl.: A01C 1/06, A01N 25/24

(54) **SEED TREATMENT METHODS**
SAMENBEHANDLUNGSVERFAHREN
PROCÉDÉS DE TRAITEMENT DE GRAINE

(30) Priority: 16.08.2007 EP 07114464
(43) Date of publication of application: 21.04.2010
(73) Proprietor: BASF SE, 67056 Ludwigshafen (DE)
(72) Inventor: ISRAELS, Rafel, 50674 Köln (DE); LANDES, Andreas, 67354 Römerberg (DE); VOESTE, Dirk, 67117 Limburgerhof (DE); STEPHAN, Doris, 67117 Limburgerhof (DE); SOWA, Christian, 67435 Neustadt (DE); BRUCHMANN, Bernd, 67251 Freinsheim (DE); SCHOENFELDER, Daniel, 68161 Mannheim (DE); CLAUSS, Joachim, 64297 Darmstadt (DE)
(86) International application number: PCT/EP2008/060673
(87) International publication number: WO 2009/021986

(56) References cited:
- GB-A- 2 110 518
- US-A- 6 121 193

## Description

The present Invention relates to methods of treating seed. The present invention also relates to the use of hyperbranched polymers in seed treatment compositions.

Seed treatment is the process of applying active ingredients to seeds in order to support the germination and/or the growth of a large variety of crops. Typical examples include the application of pesticides such as fungicides, insecticides and plant growth regulators.

Being an alternative to traditional broadcast spraying of pesticides, seed treatment compositions must fulfil a number of special requirements which include their applicability to seeds in commercial equipment, the adhesion of the active ingredients to the treated seeds, and good flowability of the treated seeds. Of course, the treated seeds must still be capable of germination.

In order to improve adhesion of the active ingredients to the seed, water-soluble or water-dispersable film-forming polymers may be added to a seed treatment composition. EP-A 1 139 738 describes a number of such polymers.

According to US 6,121,193, treatment of rice seeds is particularly challenging because rice seeds are sprinkled with water for 24 to 48 hours before sowing. This phase of sprinkling with water exhibits the disadvantage of leaching out the agrochemical active material attached to the seed. To address this problem US 6,121,193 proposes the use of hyperbranched polyethylenelmines to improve the adhesion of active ingredients to the rice seeds.

In a seed coating, polymers may also have an effect on the bioavailability of the active ingredient and thus provide a slow-release effect. This effect may be desirable if it results in a prolonged efficacy of the active ingredient(s). Also, slow-release coatings may improve germination of seeds by reducing the release of phytotoxic active ingredients in the early stages of plant development. Slow-release effects may be modulated by combining film-forming polymers with inert carriers such as clay. These effects may be further fine-tuned by applying a multi-layered coating (WO 2004/049778).

A disadvantage of using polymers to adhere active ingredients to seeds Is that the seeds often become sticky. Sticky seeds will show a reduced flowability. This can be problematic, e.g. during sowing.

Although the use of polymers In seed treatment compositions is well-known in the art, commonly used polymers tend to provide seed treatment compositions which are not entirely satisfactory. It Is especially the combination of seed-specific and general requirements for seed treatment compositions that remains hard to achieve.

It was an object of the present invention to provide seed treatment compositions which are effective in adhering active ingredient(s) to seeds, with the treated seeds still showing good flowability and germination.

It was now found that certain hyperbranched polymers can be advantageously used in seed treatment compositions. Such compositions are very effective in sticking active ingredients to seeds. Still the treated seeds show acceptable flowability and germination properties. The hyperbranched polymers can be incorporated in standard seed treatment compositions or mixed with them shortly before application.

The Invention therefore relates to a method of treating seed, which comprises applying to a lot of seeds an effective amount of a seed treatment composition comprising active ingredient and hyperbranched polymer, wherein the seed is corn, wheat, barley, oat, sys, spelt, vegetable, soybean or rape seed. Particular embodiments of the compostions are defined in the claims and are disclosed herein.

The compositions of the present invention show good adhesion of active ingredient(s) to the seeds and seeds treated with the compositions of the present invention show good flowability. Germination of the treated seeds is not affected.

As used herein, a "composltion" comprises at least one active ingredient and at least one auxiliary agent.

As used herein, ingredients comprise active ingredients and auxiliary agents.

In the present invention, an "active ingredient" is a compound which directly exerts a biologically relevant effect, preferably a pesticidal effect as described herein.

The term "auxiliary agent" refers to a compound or combination of compounds which do not exert a biologically relevant effect of their own, but support the effects of the active ingredient(s). When auxiliary agents are used, their choice will depend on the active ingredients and on the procedures selected for seed treatment.

The compositions thus comprise an active ingredient component ("A") and an auxiliary agent component ("B"). The active ingredient component ("A") of the composition comprises one or more than one active ingredient(s). The auxiliary agent component ("B") comprises one or more auxiliary agent(s).

As used herein, the term "at least one" refers to 1, 2, 3, or more members from a group and include mixtures of 2, 3, or more different members from the group.

Unless indicated otherwise, all amounts in % by weight refer to the weight of the total composition (or formulation).

In general, the compositions comprise from 0.005% by weight to 95% by weight, preferably from 0.1% by weight to 90% by weight, in particular from 5% by weight to 50% by weight, of the active ingredient component "A", the balance being formed by component "B". In this context, the active ingredients are employed in a purity of 90% to 100%, preferably 95% to 100% (according to NMR spectrum).

According to the invention, the active ingredient is especially selected from plant protection active agents (pesticides). Such an agent has the purpose or effect of preventing infection of a plant by any pest or of repelling, deterring or destroying the pest or of reducing in another way the damage caused by it. Plant pests can belong to different groups of organisms; the higher animals, in particular insects and acarids, include numerous important pests, as do nematodes and snails; vertebrates, such as mammals and birds, are today of secondary importance in industrialized countries. Numerous groups of microbes, including fungi, bacteria, inclusive of mycoplasmas, viruses and virolds, comprise pests, and even weeds, which compete with useful plants for limited habitat and other resources, can be classed as pests in the broad sense. Pesticides comprise in particular aphicides, acaricides, desiccants, bactericides, chemosterilants, defoliants, antifeedants, fungicides, herbicides, herbicide safeners, insect attractants, insecticides, insect repellents, molluscicides, nematicides, mating disrupters, plant activators, plant growth regulators, rodenticides, mammal repellents, synergists, bird repellents and virucides.

The following list of pesticides which can be used according to the invention, is intended to illustrate the possible active ingredients, but not to impose any limitation:
A. Insecticides and Acaricides
   A.1. Organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
   A.2. Carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
   A.3. Pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, gamma-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
   A.4. Growth regulators: a) chitin synthesis inhibitors: benzoylureas: chlorfluazuron, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
   A.5. Nicotinic receptor agonists/antagonists compounds: clothianidin, dinotefuran, imidacloprid, thiamethoxam, nitenpyram, acetamiprid, thiacloprid;
      the thiazol compound of formula (┌¹) 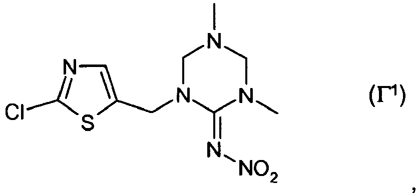
   A.6. GABA antagonist compounds: acetoprole, endosulfan, ethiprole, fipronil, vaniliprole, pyrafluprole, pyriprole, the phenylpyrazole compound of formula (┌²) 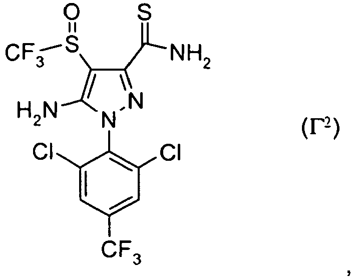
   A.7. Macrocyclic lactone insecticides: abamectin, emamectin, milbemectin, lepimectin, spinosad, the compound of formula (┌³) (CAS No. 187166-40-1) 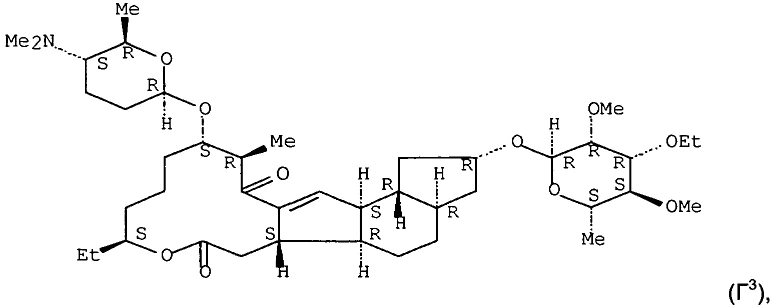
   A.8. METII compounds: fenazaquin, pyridaben, tebufenpyrad, tolfenpyrad, flufenerim;
   A.9. METI II and III compounds: acequinocyl, fluacyprim, hydramethylnon;
   A.10. Uncoupler compounds: chlorfenapyr;
   A.11. Oxidative phosphorylation inhibitor compounds: cyhexatin, diafenthiuron, fenbutatin oxide, propargite;
   A.12. Moulting disruptor compounds: cyromazine;
   A.13. Mixed Function Oxidase inhibitor compounds: piperonyl butoxide;
   A.14. Sodium channel blocker compounds: indoxacarb, metaflumizone;
   A.15. Various: benclothiaz, bifenazate, cartap, flonicamid, pyridalyl, pymetrozine, sulfur, thiocyclam, flubendiamide, cyenopyrafen, flupyrazofos, cyflumetofen, amidoflumet, the aminoquinazolinone compound of formula (┌⁴) 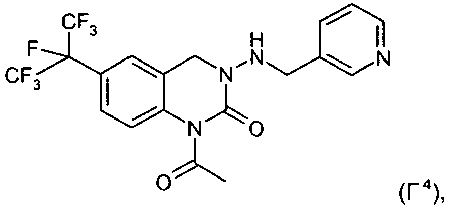 N-R'-2,2-dihalo-1-R"cyclo-propanecarboxamide-2-(2,6-dichloro-a,a,a-tri-fluoro-p-tolyl)hydrazone or N-R'-2,2-di(R"')propionamide-2-(2,6-dichloro-a,a,a-trifluoro-p-tolyl)-hydrazone, wherein R' is methyl or ethyl, halo is chloro or bromo, R" is hydrogen or methyl and R"' is methyl or ethyl, anthranilamide compounds of formula (┌⁵) 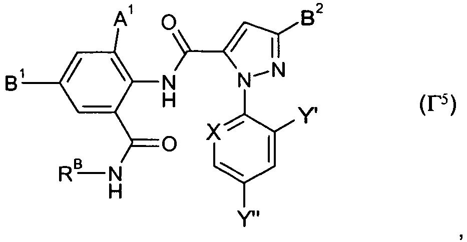 wherein A¹ is CH₃, Cl, Br, I, X is C-H, C-Cl, C-F or N, Y' is F, Cl, or Br, Y" is H, F, Cl, CF₃, B¹ is hydrogen, Cl, Br, I, CN, B² is Cl, Br, CF₃, OCH₂CF₃, OCF₂H, and R^{B} is hydrogen, CH₃ or CH(CH₃)₂, and malononitrile compounds as described in JP 2002 284608, WO 02/89579, WO 02/90320, WO 02/90321, WO 04/06677, WO 04/20399, JP 2004 99597, WO 05/68423, WO 05/68432, or WO 05/63694, especially the malononitrile compounds CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, and CF₃CF₂CH₂C(CN)₂CH₂(CF₂)₃CF₂H.
      The commercially available compounds of the group A may be found in The Pesticide Manual, 13th Edition, British Crop Protection Council (2003) among other publications. Thioamides of formula (┌²) and their preparation have been described in WO 98/28279. Lepimectin is known from Agro Project, PJB Publications Ltd, November 2004. Benclothiaz and its preparation have been described in EP-A1 454621. Methidathion and Paraoxon and their preparation have been described in Farm Chemicals Handbook, Volume 88, Meister Publishing Company, 2001. Acetoprole and its preparation have been described in WO 98/28277. Metaflumizone and its preparation have been described in EP-A1 462 456. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. Cyflumetofen and its preparation have been described in WO 04/080180.
      Anthranilamides of formula (┌⁵) and their preparation have been described in WO 01/70671; WO 02/48137; WO 03/24222, WO 03/15518, WO 04/67528; WO 04/33468; and WO 05/118552. The malononitrile compounds CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, and CF₃CF₂CH₂C(CN)₂CH₂(CF₂)₃CF₂H have been described in WO 05/63694.
B. Fungicides:
   B.1. Strobilurins such as azoxystrobin, dimoxystrobin, enestroburin, fluoxastrobin, kresoxim-methyl, metominostrobin, picoxystrobin, pyraclostrobin, trifloxystrobin, orysastrobin, methyl (2-chloro-5-[1-(3-methylbenzyloxyimino)ethyl]benzyl)carbamate, methyl (2-chloro-5-[1-(6-methylpyridin-2-ylmethoxyimino)ethyl]benzyl)carbamate, methyl 2-(ortho-((2,5-dimethylphenyloxymethylene)phenyl)-3-methoxyacrylate;
   B.2. Carboxamides such as
      carboxanilides: benalaxyl, benodanil, boscalid, carboxin, mepronil, fenfuram, fenhexamid, flutolanil, furametpyr, metalaxyl, ofurace, oxadixyl, oxycarboxin, penthiopyrad, thifluzamide, tiadinil, N-(4'-bromobiphenyl-2-yl)-4-difluoromethyl-2-methylthiazole-5-carboxamide, N-(4'-trifluoromethylbiphenyl-2-yl)-4-difluoromethyl-2-methylthiazole-5-carboxamide, N-(4'-chloro-3'-fluorobiphenyl-2-yl)-4-difluoromethyl-2-methylthiazole-5-carboxamide, N-(3',4'-dichloro-4-fluorobiphenyl-2-yl)-3-difluoromethyl-1-methylpyrazole-4-carboxamide, N-(2-cyanophenyl)-3,4-dichloroisothiazole-5-carboxamide; carboxylic acid morpholides: dimethomorph, flumorph; benzamides: flumetover, fluopicolide (picobenzamid), zoxamide; other carboxamides: carpropamid, diclocymet, mandipropamid, N-(2-(4-[3-(4-chlorophenyl)prop-2-ynyloxy]-3-methoxyphenyl)ethyl)-2-methanesulfonylamino-3-methyl-butyramide, N-(2-(4-[3-(4-chlorophenyl)prop-2-ynyloxy]-3-methoxyphenyl)ethyl)-2-ethanesulfonylamino-3-methylbutyramide;
   B.3. Azoles such as
      triazoles: bitertanol, bromuconazole, cyproconazole, difenoconazole, diniconazole, enilconazole, epoxiconazole, fenbuconazole, flusilazole, fluquinconazole, flutriafol, hexaconazole, imibenconazole, ipconazole, metconazole, myclobutanil, penconazole, propiconazole, prothioconazole, simeconazole, tebuconazole, tetraconazole, triadimenol, triadimefon, triticonazole; imidazoles: cyazofamid, imazalil, pefurazoate, prochloraz, triflumizole; benzimidazoles: benomyl, carbendazim, fuberidazole, thiabendazole; others: ethaboxam, etridiazole, hymexazole;
   B.4. Nitrogenous heterocyclyl compounds such as
      pyridines: fluazinam, pyrifenox, 3-[5-(4-chlorophenyl)-2,3-dimethylisoxazolidin-3-yl]-pyridine;
      pyrimidines: bupirimate, cyprodinil, ferimzone, fenarimol, mepanipyrim, nuarimol, pyrimethanil;
      piperazines: triforine;
      pyrroles: fludioxonil, fenpiclonil;
      morpholines: aldimorph, dodemorph, fenpropimorph, tridemorph;
      dicarboximides: iprodione, procymidone, vinclozolin;
      others: acibenzolar-S-methyl, anilazine, captan, captafol, dazomet, diclomezine, fenoxanil, folpet, fenpropidin, famoxadone, fenamidone, octhilinone, probenazole, proquinazid, pyroquilon, quinoxyfen, tricyclazole, 5-chloro-7-(4-methylpiperidin-1-yl)-6-(2,4,6-trifluorophenyl)-[1,2,4]triazolo[1,5-a]pyrimidine, 2-butoxy-6-iodo-3-propyl-chromen-4-one, N,N-dimethyl-3-(3-bromo-6-fluoro-2-methylindole-1-sulfonyl}-[1,2,4]triazole-1-sulfonamide;
   B.5. Carbamates and dithiocarbamates such as
      dithiocarbamates: ferbam, mancozeb, maneb, metiram, metam, propineb, thiram, zineb, ziram;
      carbamates: diethofencarb, flubenthiavalicarb, iprovalicarb, propamocarb, methyl 3-(4-chlorophenyl)-3-(2-isopropoxycarbonylamino-3-methylbutyrylamino)propionate, 4-fluorophenyl N-(1-(1-(4-cyanophenyl)ethanesulfonyl)but-2-yl)carbamate;
   B.6. Other fungicides such as
      guanidines: dodine, iminoctadine, guazatine;
      antibiotics: kasugamycin, polyoxins, streptomycin, validamycin A;
      organometallic compounds: fentin salts;
      sulfur-containing heterocyclyl compounds: isoprothiolane, dithianon; organophosphorus compounds: edifenphos, fosetyl, fosetyl-aluminum, iprobenfos, pyrazophos, tolclofos-methyl, phosphorous acid and its salts;
      organochlorine compounds: thiophanate-methyl, chlorothalonil, dichlofluanid, tolylfluanid, flusulfamide, phthalide, hexachlorbenzene, pencycuron, quintozene;
      nitrophenyl derivatives: binapacryl, dinocap, dinobuton;
      inorganic active compounds: Bordeaux mixture, copper acetate, copper hydroxide, copper oxychloride, basic copper sulfate, sulfur;
      others: spiroxamine, cyflufenamid, cymoxanil, metrafenone.
C. Herbicides:
   C.1 Lipid biosynthesis inhibitors such as chlorazifop, clodinafop, clofop, cyhalofop, diclofop, fenoxaprop, fenoxaprop-p, fenthiaprop, fluazifop, fluazifop-P, haloxyfop, haloxyfop-P, isoxapyrifop, metamifop, propaquizafop, quizalofop, quizalofop-P, trifop, alloxydim, butroxydim, clethodim, cloproxydim, cycloxydim, profoxydim, sethoxydim, tepraloxydim, tralkoxydim, butylate, cycloate, diallate, dimepiperate, EPTC, esprocarb, ethiolate, isopolinate, methiobencarb, molinate, orbencarb, pebulate, prosulfocarb, sulfallate, thiobencarb, tiocarbazil, triallate, vernolate, benfuresate, ethofumesate and bensulide;
   C.2 ALS inhibitors such as amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, imazamethabenz, imazamox, imazapic, imazapyr, imazaquin, imazethapyr, cloransulam, diclosulam, florasulam, flumetsulam, metosulam, penoxsulam, bispyribac, pyriminobac, propoxycarbazone, flucarbazone, pyribenzoxim, pyriftalid and pyrithiobac;
   C.3 Photosynthesis inhibitors such as atraton, atrazine, ametryne, aziprotryne, cyanazine, cyanatryn, chlorazine, cyprazine, desmetryne, dimethametryne, dipropetryn, eglinazine, ipazine, mesoprazine, methometon, methoprotryne, procyazine, proglinazine, prometon, prometryne, propazine, sebuthylazine, secbumeton, simazine, simeton, simetryne, terbumeton, terbuthylazine, terbutryne, trietazine, ametridione, amibuzin, hexazinone, isomethiozin, metamitron, metribuzin, bromacil, isocil, lenacil, terbacil, brompyrazon, chloridazon, dimidazon, desmedipham, phenisopham, phenmedipham, phenmedipham-ethyl, benzthiazuron, buthiuron, ethidimuron, isouron, methabenzthiazuron, monoisouron, tebuthiuron, thiazafluron, anisuron, buturon, chlorbromuron, chloreturon, chlorotoluron, chloroxuron, difenoxuron, dimefuron, diuron, fenuron, fluometuron, fluothiuron, isoproturon, linuron, methiuron, metobenzuron, metobromuron, metoxuron, monolinuron, monuron, neburon, parafluron, phenobenzuron, siduron, tetrafluron, thidiazuron, cyperquat, diethamquat, difenzoquat, diquat, morfamquat, paraquat, bromobonil, bromoxynil, chloroxynil, iodobonil, ioxynil, amicarbazone, bromofenoxim, flumezin, methazole, bentazone, propanil, pentanochlor, pyridate, and pyridafol;
   C.4 Protoporphyrinogen-IX oxidase inhibitors such as acifluorfen, bifenox, chlomethoxyfen, chlornitrofen, ethoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-ethyl, flumiclorac, flumioxazin, flumipropyn, fluthiacet, thidiazimin, oxadiazon, oxadiargyl, azafenidin, carfentrazone, sulfentrazone, pentoxazone, benzfendizone, butafenacil, pyraclonil, profluazol, flufenpyr, flupropacil, nipyraclofen and etnipromid;
   C.5 Bleacher herbicides such as metflurazon, norflurazon, flufenican, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, amitrole, clomazone, aclonifen, 4-(3-trifluoromethylphenoxy)- 2-(4-trifluoromethylphenyl)pyrimidine, and also 3-heterocyclyl-substituted benzoyl derivatives of the formula II (see in WO 96/26202, WO 97/41116, WO 97/41117 and WO 97/41118) 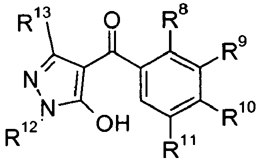 in which the variables R⁸ to R¹³ are as defined below:
      R⁸, R¹⁰ are hydrogen, halogen, C₁-C₆-alkyl, C₁-C₆-haloalkyl, C₁-C₆-alkoxy, C₁-C₆-haloalkoxy, C₁-C₆-alkylthio, C₁-C₆-alkylsulfinyl or C₁-C₆-alkylsulfonyl;
      R⁹ is a heterocyclic radical selected from the group consisting of such as thiazol-2-yl, thiazol-4-yl, thiazol-5-yl, isoxazol-3-yl, isoxazol-4-yl, isoxazol-5-yl, 4,5-dihydroisoxazol-3-yl, 4,5-dihydroisoxazol-4-yl and 4,5-dihydroisoxazol-5-yl, where the nine radicals mentioned may be unsubstituted or mono- or polysubstituted, e.g. mono-, di-, tri- or tetrasubstituted, by halogen, C₁-C₄-alkyl, C₁-C₄-alkoxy, C₁-C₄-haloalkyl, C₁-C₄-haloalkoxy or C₁-C₄-alkylthio;
      R¹¹ is hydrogen, halogen or C₁-C₆-alkyl;
      R¹² is C₁-C₆-alkyl;
      R¹³ is hydrogen or C₁-C₆-alkyl.
   C.7 EPSP synthase inhibitors such as glyphosate;
   C.8 glutamine synthase inhibitors such as glufosinate and bilanaphos;
   C.9 DHP synthase inhibitors such as asulam;
   C.10 Mitose inhibitors such as benfluralin, butralin, dinitramine, ethalfluralin, fluchloralin, isopropalin, methalpropalin, nitralin, oryzalin, pendimethalin, prodiamine, profluralin, trifluralin, amiprofos-methyl, butamifos, dithiopyr, thiazopyr, propyzamide, tebutam, chlorthal, carbetamide, chlorbufam, chlorpropham and propham;
   C.11 VLCFA inhibitors such as acetochlor, alachlor, butachlor, butenachlor, delachlor, diethatyl, dimethachlor, dimethenamid, dimethenamid-P, metazachlor, metolachlor, S-metolachlor, pretilachlor, propachlor, propisochlor, prynachlor, terbuchlor, thenylchlor, xylachlor, allidochlor, CDEA, epronaz, diphenamid, napropamide, naproanilide, pethoxamid, flufenacet, mefenacet, fentrazamide, anilofos, piperophos, cafenstrole, indanofan and tridiphane;
   C.12 Cellulose biosynthesis inhibitors such as dichlobenil, chlorthiamid, isoxaben and flupoxam;
   C.13 Decoupler herbicides such as dinofenate, dinoprop, dinosam, dinoseb, dinoterb, DNOC, etinofen and medinoterb;
   C.14 Auxin herbicides such as clomeprop, 2,4-D, 2,4,5-T, MCPA, MCPA thioethyl, dichlorprop, dichlorprop-P, mecoprop, mecoprop-P, 2,4-DB, MCPB, chloramben, dicamba, 2,3,6-TBA, tricamba, quinclorac, quinmerac, clopyralid, fluroxypyr, picloram, triclopyr and benazolin;
   C.15 Auxin transport inhibitors such as naptalam, diflufenzopyr;
   C.16 Benzoylprop, flamprop, flamprop-M, bromobutide, chlorflurenol, cinmethylin, methyldymron, etobenzanid, fosamine, metam, pyributicarb, oxaziclomefone, dazomet, triaziflam and methyl bromide.
D. Safeners:
   Benoxacor, cloquintocet, cyometrinil, dichlormid, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloroacetyl)-1,3-oxazolidine (R-29148), 4-(dichloroacetyl)-1-oxa-4-azaspiro[4.5]decane (AD-67; MON 4660) and oxabetrinil

Preferred insecticides are selected from:
acetamiprid, alpha-cypermethrin, beta-cypermethrin, bifenthrin, carbofuran, carbosulfan, clothianidin, cycloprothrin, cyfluthrin, cypermethrin, deltamethrin, diflubenzuron, dinotefuran, etofenprox, fenbutatin-oxide, fenpropathrin, fipronil, flucythrinate, imidacloprid, lambda-cyhalothrin, nitenpyram, pheromones, spinosad, teflubenzuron, tefluthrin, terbufos, thiacloprid, thiamethoxam, thiodicarb, tralomethrin, triazamate, zeta-cypermethrin, spirotetramat , flupyrazofos, NC 512, tolfenpyrad, flubendiamide, bistrifluron, benclothiaz, DPX-E2Y45, HGW86, pyrafluprole, pyriprole, F-7663, F-2704, amidoflumet, flufenerim, cyflumetofen. Particular preference is given to clothianidin, fipronil, imidacloprid and thiamethoxam.

Preferred fungicides are selected from:
metalaxyl, oxadixyl, guazatine, pyrimethanil, streptomycin, difenoconazole, epoxiconazole, fluquiconazole, flutriafol, hymexazole, imazalil, metconazole, prochloraz, prothioconazole, tebuconazole, thiabendazole, triadimenol, triticonazole, iprodion, maneb, mancozeb, metiram, thiram,benomyl, boscalid, carbendazim, carboxin, dazomet, silthiofam, copper fungicides, fludioxonil, sulfur, dazomet, azoxystrobin, kresoxim-methyl, orysastrobin, pyraclostrobin, trifloxystrobin, captan dimethomorph. Particular preference is given to pyraclostrobin, triticonazole and fluquinconazole.

In a particular embodiment of the invention, the composition may comprise one or more repellents for warm-blooded animals, e.g. birds, dogs and hedgehogs, for example nonanoic acid vanillyl amide. The amount of repellent will preferably range from 0.1 to 5 % by weight, based on the total weight of the composition.

In the context of the present invention, the term "hyperbranched polymer" refers very generally to polymers which are distinguished by a branched structure and a high functionality. Reference may also be made, for the general definition of hyperbranched polymers, to P.J. Flory, J. Am. Chem. Soc., 1952, 74, 2718, and H. Frey et al., Chem. Eur. J., 2000, 6, No. 14, 2499, which are incorporated herein by reference in their entirety. The "hyperbranched polymers" within the meaning of the invention include star polymers, dendrimers, both molecularly and structurally nonuniform hyperbranched polymers, and high molecular weight polymers different therefrom, such as, e.g., comb polymers. "Star polymers" are polymers in which three or more chains start at one center. The center can in this connection be an individual atom or a group of atoms. "Dendrimers" (cascade polymers, isotropically branched polymers, isobranched polymers, starburst polymers) are molecularly uniform macromolecules with a highly symmetrical structure. Dendrimers are derived structurally from the star polymers in which the individual chains are each for their part branched in a star-like way. They arise starting from small molecules through a continually repeating reaction sequence, resulting in ever higher branchings, at the ends of which are each time found functional groups which are in turn starting points for further branchings. Thus, the number of the monomer end groups grows exponentially with each reaction step, resulting at the end in a spherical tree structure. A characteristic feature of the dendrimers is the number of the reaction stages (generations) carried out to construct them. Due to their uniform structure, dendrimers as a rule exhibit a defined molar mass. Molecularly and structurally nonuniform hyperbranched polymers are dendrimer-like, but they exhibit side chains of varying length and branching, as well as a molar mass distribution.

Molecularly and structurally nonuniform hyperbranched polymers are preferably used according to the present invention. These are as a rule simple and consequently more economical to prepare than dendrimers. However, of course, structurally and molecularly uniform dendrimeric polymers and star polymers can also be used.

A hyperbranched polymer according to the present invention is any polymer that (i) has a weight average molecular weight (M_{w}) of more than 500 g/mol and (ii) a degree of branching (DB) of more than 5 %.

Preferably, the hyperbranched polymers used according to the invention exhibit a weight-average molecular weight (M_{w}) of more than 1000 g/mol, preferably of more than 1500 g/mol. Particular preference is given to polymers which exhibit a weight-average molecular weight in the range of approximately 500 to 200 000 g/mol, preferably 750 to 150 000 g/mol, in particular 1000 to 100 000 g/mol.

The number-average molecular weight (Mₙ) of the hyperbranched polymers used according to the invention is generally higher than 400 g/mol, preferably higher than 500 g/mol. Particular preference is given to polymers which exhibit a number-average molecular weight in the range of approximately 400 to 100 000 g/mol, preferably 500 to 80 000 g/mol, in particular 1000 to 50 000 g/mol.

The polydispersity of the hyperbranched polymers used according to the invention is in general from 1.2 to 50, preferably from 1.4 to 40, particularly preferably from 1.5 to 30 and very particularly preferably from 2 to 30.

The data on the polydispersity and on the number average and weight average molecular weight Mₙ and M_{w} relate here to gel permeation chromatography measurements, polymethyl methacrylate having been used as a standard and tetrahydrofuran, dimethylformamide, dimethylacetamide or hexafluoroisopropanol as an eluent. The method is described in Analytiker Taschenbuch Vol. 4, pages 433 to 442, Berlin 1984.

The degree of branching (DB) reflects the average number of dendritic linkages and terminal units per molecule. Preferably, the hyperbranched polymers used according to the invention exhibit a degree of branching (DB) of at least 10, 20, 30 or even 35 %. Preference is given to polymers which preferably exhibit a DB from 20 to 99%, preferably 30 to 95% and in particular 35 to 75%. Reference may be made, for the definition of the "Degree of Branching", to H. Frey et al., Acta Polym., 1997, 48, 30, which is incorporated herein in its entirety.

According to one aspect, the hyperbranched polymers usually have a glass transition temperature of -80°C or higher, - 70°C or higher, or - 60°C or higher. According to another aspect, the glass transition temperature of the hyperbranched polymers usually is at most 150°C, at most 100°C or at most 50°C. The glass transition temperature is determined according to the ASTM-method D3418-03 using DSC.

The acid number of the hyperbranched polymers according to the present invention is usually from 0 to 500, preferably from 0 to 400, more preferably from 0 to 300 and in particular from 0 to 200 mg KOH/g, as determined according to DIN 53240, part 2.

The hydroxyl number of the hyperbranched polymers according to the present invention is usually from 0 to 1000, preferably from 0 to 750 and in particular from 0 to 500 mg KOH/g, as determined according to DIN 53240, part 2.

The hyperbranched polymers according to the present invention are typically soluble or dispersible in water, i.e. it is possible to prepare clear solutions (without gel particles being detectable with the naked eye) or dispersions comprising at least 1% by weight, preferably at least 5% by weight and in particular at least 10% by weight, of hyperbranched polymer in water at about 23°C and about 1 atm.

According to a particular embodiment of the present invention, the viscosity of a 10% by weight solution of hyperbranched polymer in water at about 23°C is lower than 1000 mPas, preferably lower than 750 mPas and especially lower than 500 mPas, as determined on a TA Instruments CSL 500 Carri Med Rheometer with a cone-plate system at a shear rate of 100 1/s.

The hyperbranched polymers according to the present invention are preferably amphiphilic polymers. Amphilic hyperbranched polymers usually have an HLB value from 1 to 20, preferably 3 to 20 and in particular 4 to 20.

The HLB value is a measure for the hydrophilic and lipophilic portion of a compound. The determination of the HLB value is described, for instance, in W. C. Griffin, Journal of the Society of Cosmetic Chemists, 1949, 1, 311 and W. C. Griffin, Journal of the Society of Cosmetic Chemists, 1954, 5, 249, which are incorporated herein by reference in their entirety. To this end, 1 g of sample material is dissolved in a mixture of 4% benzene and 96% dioxane and water is added until the occurrence of cloudiness. The value thus determined is generally proportional to the HLB value.

In the case of a hyperbranched polymer having ethylene oxide groups (polyethylene glycol) the HLB value can be determined in accordance with a method described by C. D. Moore, M. Bell, SPC Soap, Perfum. Cosmet. 1956, 29. 893 (which is incorporated herein by reference in its entirety) as follows: HLB = (number of ethylene oxide groups) *100 / (number of carbon atoms in the lipophilic portion of the molecule).

In the context of this invention, the hyperbranched polymer is to be understood as meaning a product which, in addition to the functional groups which are part of the polymer skeleton (e.g. in the case of hyperbranched polycarbonates, carbonate groups; in the case of hyperbranched polyesters, ester groups; in the case of hyperbranched polyether, ether groups, and the like), furthermore comprises at least four, preferably at least eight, functional terminal or side groups (e.g. in the case of hyperbranched polycarbonates, carbonate and/or OH groups; in the case of hyperbranched polyesters, OH and/or carboxyl groups; in the case of hyperbranched polyether, OH groups, and the like). Moreover, the hyperbranched polymers may comprise further functional groups in addition to the functional groups already obtained by the polymerization reaction.

In principle, there is no upper limit to the number of functional terminal or side groups, but products having a very large number of functional groups may have undesired properties, such as, for example, high viscosity or poor solubility. The hyperbranched polymers of the present invention generally have not more than 500 functional terminal or side groups, preferably not more than 100, in particular not more than 30, functional terminal or side groups. The amount of functional terminal or side groups is preferably 4 to 100, especially 5 to 30 and more especially 6 to 20 per molecule.

The term "functionality" represents, here and subsequently, the average number of the respective functional terminal or side groups per molecule or per polymer chain.

The hyperbranched polymers are preferably selected from hyperbranched polycarbonates, hyperbranched polyesters, hyperbranched polyethers and mixed forms thereof such as hyperbranched polyestercarbonates, hyperbranched polyethercarbonates, hyperbranched polyetheresters and hyperbranched polyetherestercarbonates. Especially preferred hyperbranched polymers are selected from hyperbranched polycarbonates, hyperbranched polyesters, hyperbranched polyethercarbonates, hyperbranched polyetheresters, hyperbranched polyestercarbonates and hyperbranched polyetherestercarbonates, with hyperbranched polycarbonates, hyperbranched polyesters, hyperbranched polyethercarbonates and hyperbranched polyestercarbonates being particularly preferred. Further, hyperbranched polymers selected from hyperbranched polyurethanes, hyperbranched polyureas, hyperbranched polyamides, hyperbranched polyamines and mixed forms thereof such as hyperbranched polyureaurethanes, hyperbranched polyesteramides, hyperbranched polyesteramines and especially hyperbranched polyetheramines, may be suitable according to the present invention, with an emphasis on hyperbranched polyurethanes, hyperbranched polyureas, hyperbranched polyureaurethanes, hyperbranched polyesteramides, and optionally hyperbranched polyetheramines. In a further aspect, the hyperbranched polymer according to the present invention is not a hyperbranched polyethyleneamine, polyamidoamide, polyethyleneimine or polyether, or a copolymer thereof.

The hyperbranched polymers include in particular those which are disclosed below and/or are obtainable by the methods disclosed below.

So-called ABₓ, preferably AB₂ or AB₃, monomers are particularly suitable for the synthesis of the hyperbranched polymers. These have two different functional groups A and B in a molecule, which can undergo an intermolecular reaction with one another with formation of a link. The functional group A is comprised only once per molecule and the functional group B twice or more. The reaction of said ABₓ monomers with one another results in the formation of uncrosslinked polymers having regularly arranged branching points. The polymers have virtually exclusively B groups at the chain ends.

Furthermore, hyperbranched polymers can be prepared via the Aₓ + B_{y} synthesis route. Here, Aₓ and B_{y} are two different monomers having the functional groups A and B and the indices x and y for the number of functional groups per monomer. In the case of the Aₓ + By synthesis, presented here by way of example for an A₂ + B₃ synthesis, a difunctional monomer A₂ is reacted with a trifunctional monomer B₃. A 1:1 adduct of A and B having on average one functional group A and two functional groups B first forms and can then likewise react to give a hyperbranched polymer. The hyperbranched polymers thus obtained also have predominantly B groups as terminal groups.

The originally present functional groups (in particular A and B groups) can be transfunctionalized by polymer-analogous reaction with suitable compounds. In this way, particularly well-adapted hyperbranched polymers are obtainable for use according to the present invention.

The transfunctionalization of the hyperbranched polymers can be effected during the preparation of the polymers, immediately after the polymerization reaction or in a separate reaction.

If components which have further functional groups in addition to A and B groups are added before or during the polymer synthesis, a hyperbranched polymer having randomly distributed further functional groups, i.e. functional groups differing from A or B groups, is obtained.

Compounds used for the transfunctionalization may firstly comprise the desired functional group newly to be introduced and a second group which is capable of reacting with the B groups of the hyperbranched polymer used as starting material, with formation of a bond. An example of this is the reaction of an isocyanate group with a hydroxycarboxylic acid or an aminocarboxylic acid with formation of an acid functionality or the reaction of an OH group with acrylic anhydride with formation of a reactive acrylic double bond.

Examples of suitable functional groups which can be introduced by means of suitable reactants comprise in particular acidic or basic groups having H atoms and derivatives thereof, such as -OC(O)OR, -COOH, -COOR, -CONHR, -CONH₂, -OH, -SH, -NH₂, -NHR, -NR₂, -SO₃H, -SO₃R, -NHCOOR, -NHCONH₂, -NHCONHR, without there being any intention to limit the list thereto. If appropriate, the functional groups can also be converted into the corresponding salts with the aid of suitable acids or bases. Furthermore, for example, alkyl halides can also be used for quaternizing existing primary, secondary or tertiary amino groups. In this way, for example, water-soluble or water-dispersible hyperbranched polymers can be obtained.

The radicals R of said groups are as a rule straight-chain or branched alkyl radicals or are aryl radicals which may also furthermore be substituted. For example, they are C₁-C₃₀-alkyl radicals or are C₆-C₁₄-aryl radicals. It is also possible to use other functional groups, such as, for example, -CN or -OR.

For using the hyperbranched polymers according to the present invention, it may be advantageous if hydrophilic and hydrophobic molecule moieties have a certain ratio to one another. A hyperbranched polymer can be rendered hydrophobic, for example, by using monofunctional hydrophobic compounds with which existing reactive groups are modified before, during or after the polymerization. Thus, the polymers according to the invention can be rendered hydrophobic, for example, by reaction with monofunctional, saturated or unsaturated aliphatic or aromatic amines, alcohols, carboxylic acids, epoxides or isocyanates.

Furthermore, for example, difunctional or higher-functional monomers having hydrophobic groups can also be incorporated in the form of polymerized units while increasing the molecular weight. For this purpose, for example, difunctional or higher-functional alcohols, difunctional or higher-functional amines, difunctional or higher-functional isocyanates, difunctional or higher-functional carboxylic acids, difunctional or higher-functional epoxides, which carry aromatic radicals or long-chain alkane, alkene or alkyne radicals in addition to the reactive groups, can be used.

Examples of such monomers are alcohols, such as glyceryl monostearate, glyceryl monooleate, hexanediol, octanediol, decanediol, dodecanediol, octadecanediol or dimeric fatty alcohols, amines, such as hexamethylenediamine, octanediamine or dodecanediamine, isocyanates, such as aromatic or aliphatic di- and polyisocyanates, for example diphenylmethane diisocyanate and the more highly oligomeric species thereof, tolylene diisocyanate, naphthylene diisocyanate, xylylene diisocyanate, hexamethylene diisocyanate, hexamethylene diisocyanate trimers, isophorone diisocyanate, bis(diisocyanatocyclohexyl)methane or bis(isocyanatomethyl)-cyclohexane, and acids, such as adipic acid, octanedioic acid, dodecanedioic acid, octadecanedioic acid and dimeric fatty acids.

Furthermore, the polymers according to the invention can be rendered hydrophilic by converting, for example, hyperbranched polymers comprising hydroxyl groups or amino groups into highly functional polymer polyols by reaction with alkylene oxides, for example ethylene oxide, propylene oxide or butylene oxide, ethylene oxide preferably being used. As a further option, however, difunctional or higher-functional alkylene oxide-alcohols or alkylene oxide-amines can also be used as synthesis components for the polymer.

It is also possible to produce hyperbranched polymers which have different types of functionalities. This can be effected, for example, by reaction with a mixture of different compounds for transfunctionalization, or by reacting only some of the originally present functional groups.

Furthermore, compounds having mixed functionality can be produced by using monomers of the type ABC or AB₂C for the polymerization, where C is a functional group which is not reactive with A or B under the chosen reaction conditions.

OH-, COOH- and/or -OC(O)OR-terminated hyperbranched polymers have proven to be particularly advantageous for use according to the present invention. The use of hyperbranched polymers which have OH and COOH groups or OH and -OC(O)OR groups or OH, COOH and -OC(O)OR groups is very particularly advantageous.

Hyperbranched polycarbonates and their preparation are disclosed, for instance, in WO 2005/026234 and DE 102005009166, which are incorporated herein by reference in their entirety.

In particular, hyperbranched polycarbonates are obtainable by
a) reaction of at least one organic carbonate (A) of the general formula RO(CO)OR with at least one aliphatic alcohol (B) which has at least 3 OH groups, with elimination of alcohols ROH to give one or more condensates (K), R, in each case independently of one another, being a straight-chain or branched aliphatic, araliphatic or aromatic hydrocarbon radical having 1 to 20 carbon atoms, and
b) intermolecular reaction of the condensates (K) to give a hyperbranched polycarbonate,
the ratio of the OH groups to the carbonates in the reaction mixture being chosen so that the condensates (K) have on average either one carbonate group and more than one OH group or one OH group and more than one carbonate group.

The radicals R of the organic carbonates (A) of the general formula RO(CO)OR which are used as a starting material are, in each case independently of one another, a straight-chain or branched aliphatic, araliphatic or aromatic hydrocarbon radical having 1 to 20 carbon atoms. The two radicals R may also be linked to one another with formation of a ring. It is preferably an aliphatic hydrocarbon radical and particularly preferably a straight-chain or branched alkyl radical having 1 to 5 carbon atoms.

Dialkyl or diaryl carbonates can be prepared, for example, from the reaction of aliphatic, araliphatic or aromatic alcohols, preferably monoalcohols, with phosgene. Furthermore, they can also be prepared by oxidative carbonylation of the alcohols or phenols by means of CO in the presence of noble metals, oxygen or NOₓ. Regarding methods of preparation of diaryl or dialkyl carbonates, also see "Ullmann's Encyclopedia of Industrial Chemistry", 6th Edition, 2000 Electronic Release, Verlag Wiley-VCH.

Examples of suitable carbonates comprise aliphatic or aromatic carbonates, such as ethylene carbonate, 1,2- or 1,3-propylene carbonate, diphenyl carbonate, ditolyl carbonate, dixylyl carbonate, dinaphthyl carbonate, ethyl phenyl carbonate, dibenzyl carbonate, dimethyl carbonate, diethyl carbonate, dipropyl carbonate, dibutyl carbonate, diisobutyl carbonate, dipentyl carbonate, dihexyl carbonate, dicyclohexyl carbonate, diheptyl carbonate, dioctyl carbonate, didecyl carbonate and didodecyl carbonate.

Aliphatic carbonates are preferably used, in particular those in which each of the radicals independently comprises 1 to 5 carbon atoms, such as, for example, dimethyl carbonate, diethyl carbonate, dipropyl carbonate, dibutyl carbonate or diisobutyl carbonate.

The organic carbonates are reacted with at least one aliphatic alcohol (B) which has at least 3 OH groups.

Examples of aliphatic alcohols having at least three OH groups are glycerol, trimethylolmethane, trimethylolethane, trimethylolpropane, 1,2,4-butanetriol, tris(hydroxymethyl)amine, tris(hydroxyethyl)amine, tris(hydroxypropyl)amine, pentaerythritol, bis(trimethylolpropane) or sugars, such as, for example, glucose, trifunctional or higher-functional polyetherols based on trifunctional or higher-functional alcohols and ethylene oxide, propylene oxide or butylene oxide, or polyesterols. Glycerol, trimethylolethane, trimethylolpropane, 1,2,4-butanetriol, pentaerythritol and polyetherols thereof based on ethylene oxide or propylene oxide are particularly preferred.

These polyfunctional alcohols can also be used as a mixture with difunctional alcohols (B'), with the proviso that the average OH functionality of all alcohols used is altogether greater than 2. Examples of suitable compounds having two OH groups comprise ethylene glycol, diethylene glycol, triethylene glycol, 1,2- and 1,3-propanediol, dipropylene glycol, tripropylene glycol, neopentylglycol, 1,2-, 1,3- and 1,4-butanediol, 1,2-, 1,3-and 1,5-pentanediol, hexanediol, cyclopentanediol, cyclohexanediol, cyclohexanedimethanol and difunctional polyetherols or polyesterols.

The reaction of the carbonate with the alcohol or alcohol mixture to give the hyperbranched polycarbonate is effected with elimination of the monofunctional alcohol or phenol from the carbonate molecule.

In the preparation of the hyperbranched polycarbonates, it is necessary to adjust the ratio of the compounds comprising OH groups to the carbonate so that the resulting simplest condensate (referred to below as condensate (K)) comprises on average either one carbonate group and more than one OH group or one OH group and more than one carbonate group. The simplest structure of the condensate (K) from a carbonate (A) and a di- or polyalcohol (B) gives the arrangement XYₙ or YXₙ, where X is a carbonate group, Y is a hydroxyl group and n is as a rule a number from 1 to 6, preferably from 1 to 4, particularly preferably from 1 to 3. The reactive group which results as an individual group is referred to below generally as "focal group".

If, for example, the reaction ratio is 1:1 in the preparation of the simplest condensate (K) from a carbonate and a dihydric alcohol, a molecule of the type XY results on average, illustrated by the general formula 1.

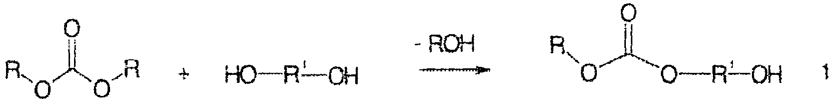

In the preparation of the condensate (K) from a carbonate and a trihydric alcohol with a reaction ratio of 1:1, a molecule of the type XY₂ results on average, illustrated by the general formula 2. The focal group here is a carbonate group.

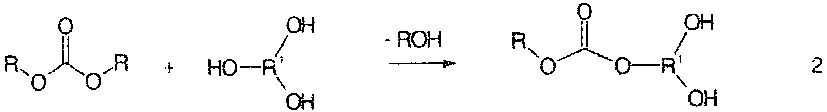

In the preparation of the condensate (K) from a carbonate and a tetrahydric alcohol, likewise with the reaction ratio of 1:1, a molecule of the type XY₃ results on average, illustrated by the general formula 3. The focal group here is a carbonate group.

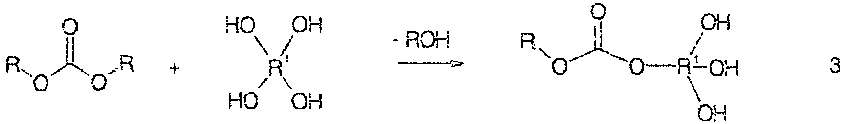

In the formulae 1 to 3, R has the meaning defined at the outset and R¹ is a, preferably aliphatic, hydrocarbon radical.

Furthermore, the preparation of the condensate (K) can also be effected, for example, from a carbonate and a trihydric alcohol, illustrated by the general formula 4, the molar reaction ratio being 2:1. Here, a molecule of the type X₂Y results on average, and the focal group here is an OH group. In the formula 4, R and R¹ have the same meaning as in the formulae 1 to 3.

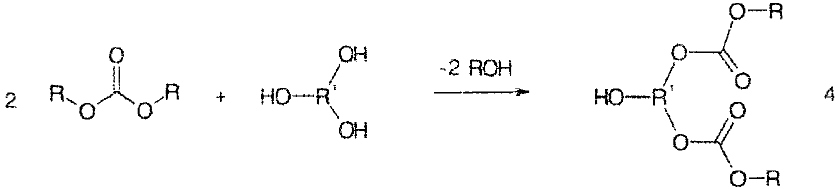

If difunctional compounds, for example a dicarbonate or a diol, are added in addition to the components, this results in a lengthening of the chains, as illustrated, for example, in the general formula 5. Once again, a molecule of the type XY₂ results on average, and the focal group is a carbonate group.

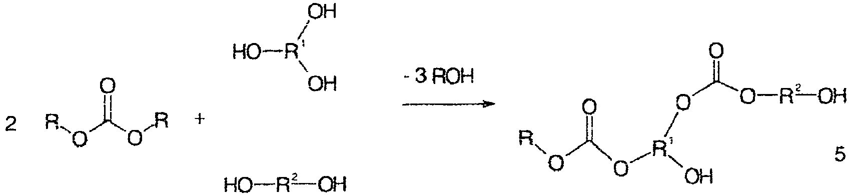

In formula 5, R² is an organic, preferably aliphatic, radical, and R and R¹ are defined as described above.

The simple condensates (K) described by way of example in the formulae 1-5 preferably undergo, according to the invention, an intermolecular reaction with formation of hyperbranched polycondensates, referred to below as polycondensates (P).

The reaction to give the condensate (K) and to give the polycondensate (P) is usually effected at a temperature of from 0 to 250°C, preferably at from 60 to 160°C, in the absence of a solvent or in solution. In general, it is possible to use all solvents which are inert to the respective starting materials. Organic solvents, such as, for example, decane, dodecane, benzene, toluene, chlorobenzene, xylene, dimethylformamide, dimethylacetamide or solvent naphtha, are preferably used.

In a preferred embodiment, the condensation reaction is carried out in the absence of a solvent. The monofunctional alcohol ROH or the phenol liberated in the reaction can be removed from the reaction equilibrium by distillation, if appropriate under reduced pressure, in order to accelerate the reaction.

If it is intended to distill off, it is usually advisable to use such carbonates which liberate, during the reaction, alcohols ROH having a boiling point of less than 140°C.

In order to accelerate the reaction, catalysts or catalyst mixtures may also be added. Suitable catalysts are compounds which catalyze for esterification or transesterification reactions, for example alkali metal hydroxides, alkali metal carbonates, alkali metal bicarbonates, preferably of sodium, of potassium or of cesium, tertiary amines, guanidines, ammonium compounds, phosphonium compounds, organic aluminum, tin, zinc, titanium, zirconium or bismuth compounds, and furthermore so-called double-metal cyanide (DMC) catalysts, as described, for example, in DE 10138216 or in DE 10147712, which are incorporated herein by reference in their entirety.

Potassium hydroxide, potassium carbonate, potassium bicarbonate, diazabicyclooctane (DABCO), diazabicyclononene (DBN), diazabicycloundecene (DBU), imidazoles, such as imidazole, 1-methylimidazole or 1,2-dimethylimidazole, titanium tetrabutylate, titanium tetraisopropylate, dibutyltin oxide, dibutyltin dilaurate, tin dioctoate, zirconium acetylacetonate or mixtures thereof are preferably used.

The addition of the catalyst is generally effected in an amount of from 50 to 10 000, preferably from 100 to 5000, ppm by weight, based on the amount of the alcohol or alcohol mixture used.

Furthermore, it is also possible to control the intermolecular polycondensation reaction by addition of a suitable catalyst, as well as by the choice of a suitable temperature. Furthermore, the average molecular weight of the polymer (P) can be established by the composition of the starting components and via the residence time.

The condensates (K) or the polycondensates (P) which are prepared at elevated temperature are usually stable over a relatively long period at room temperature.

Owing to the characteristics of the condensates (K), it is possible that polycondensates (P) having different structures, which have branches but no crosslinks, can result from the condensation reaction. Furthermore, the polycondensates (P) ideally have either a carbonate group as the focal group and more than two OH groups or an OH group as the focal group and more than two carbonate groups. The number of reactive groups arises from the characteristics of the condensates (K) used and the degree of polycondensation.

For example, a condensate (K) according to the general formula 2 can react by intermolecular tricondensation to give two different polycondensates (P) which are reproduced in the general formulae 6 and 7.

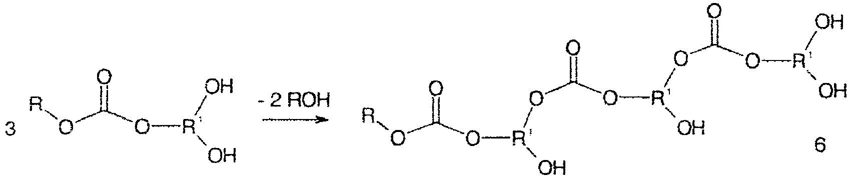

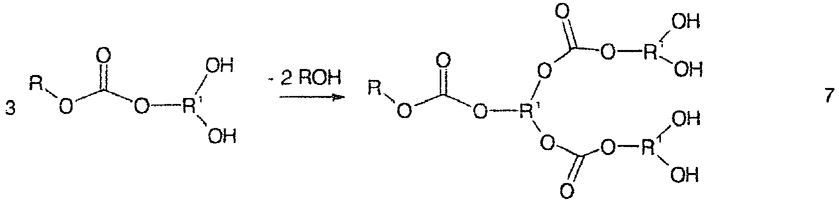

In formulae 6 and 7, R and R¹ are as defined above.

There are various possibilities for terminating the intermolecular polycondensation reaction. For example, the temperature can be reduced to a range in which the reaction stops and the product (K) or the polycondensate (P) is storage-stable.

In a further embodiment, a product having groups reactive toward the focal group of (P) can be added to the product (P) for terminating the reaction as soon as a polycondensate (P) having the desired degree of polycondensation is present as a result of the intermolecular reaction of the condensate (K). Thus, in the case of a carbonate group as the focal group, for example, a mono-, di- or polyamine can be added. In the case of a hydroxyl group as the focal group, for example, a mono-, di- or polyisocyanate, a compound comprising epoxide groups or an acid derivative reactive with OH groups can be added to the product (P).

The preparation of the polycarbonates according to the invention is generally effected in a pressure range of from 0.1 mbar to 20 bar, preferably at from 1 mbar to 5 bar, in reactors or reactor cascades which are operated in the batch mode, semicontinuously or continuously.

By the abovementioned adjustment of the reaction conditions and, if appropriate, by the choice of the suitable solvent, the products can be further processed after the preparation without further purification.

In a further preferred embodiment, the polycarbonates may comprise further functional groups in addition to the functional groups already obtained by the reaction. The functionalization can be effected during the increase in molecular weight or subsequently, i.e. after the end of the actual polycondensation.

If components which have further functional groups or functional elements in addition to hydroxyl or carbonate groups are added before or during the increase in molecular weight, a polycarbonate polymer having randomly distributed functionalities differing from the carbonate or hydroxyl groups is obtained.

Such effects can be achieved, for example, by adding, during the polycondensation, compounds which carry further functional groups or functional elements, such as mercapto groups, primary, secondary or tertiary amino groups, ether groups, derivatives of carboxylic acids, derivatives of sulfonic acids, derivatives of phosphonic acids, aryl radicals or long-chain alkyl radicals in addition to hydroxyl groups or carbonate groups. For modification by means of carbamate groups, for example ethanolamine, propanolamine, isopropanolamine, 2-(butylamino)ethanol, 2-cyclohexylamino)ethanol, 2-amino-1-butanol, 2-(2'-aminoethoxy)ethanol and higher alkoxylation products of ammonia, 4-hydroxypiperidine, 1-hydroxyethylpiperazine, diethanolamine, dipropanolamine, diisopropanolamine, tris(hydroxymethyl)-aminomethane, tris(hydroxyethyl)aminomethane, ethylenediamine, propylenediamine, hexamethylenediamine or isophoronediamine can be used.

For the modification with mercapto groups, for example, mercaptoethanol can be used. Tertiary amino groups can be produced, for example, by incorporation of N-methyldiethanolamine, N-methyldipropanolamine or N,N-dimethylethanolamine. Ether groups can be generated, for example, by incorporating difunctional or higher-functional polyetherols by condensation. By reaction with long-chain alkanediols, it is possible to introduce long-chain alkyl radicals, and the reaction with alkyl or aryl diisocyanates generates polycarbonates having alkyl, aryl and urethane groups.

Subsequent functionalization can be obtained by reacting the resulting hyperbranched polycarbonate with a suitable functionalizing reagent which can react with OH and/or carbonate groups of the polycarbonate.

Hyperbranched polycarbonates comprising hydroxyl groups can be modified, for example, by adding molecules comprising acid groups or isocyanate groups. For example, polycarbonates comprising acid groups can be obtained by reaction with compounds comprising anhydride groups.

Furthermore, hyperbranched polycarbonates comprising hydroxyl groups can also be converted into highly functional polycarbonate-polyetherpolyols by reaction with alkylene oxides, for example ethylene oxide, propylene oxide or butylene oxide.

The hyperbranched polycarbonates formed by the process described are readily soluble in various solvents, for example in water, alcohols, such as methanol, ethanol or butanol, alcohol/water mixtures, acetone, 2-butanone, ethyl acetate, butyl acetate, methoxypropyl acetate, methoxyethyl acetate, tetrahydrofuran, dimethylformamide, dimethylacetamide, N-methylpyrrolidone, ethylene carbonate or propylene carbonate.

According to a particular embodiment, the hyperbranched polycarbonate of the invention is a hyperbranched polycarbonate obtainable by reacting a dialkyl carbonate, e.g. diethylcarbonate, and a polyoxyethylene triol. The polyoxyethylene triol preferably is an ethoxylation product of trimethylolpropane with 2 to 25, e.g. 3 or 12, units of ethylene oxide.

Hyperbranched polyesters and their preparation are disclosed, for instance, in WO 93/17060, WO 01/46296, WO 03/54204, WO 03/93343, WO 05/037893, WO 04/020503, WO 05/118677, which are incorporated herein by reference in their entirety.

In particular, hyperbranched polyesters are obtainable by reacting at least one aliphatic, cycloaliphatic, araliphatic or aromatic dicarboxylic acid (A₂) or a derivative thereof with
a) at least one at least trifunctional aliphatic, cycloaliphatic, araliphatic or aromatic alcohol (B₃), or
b) with at least one dihydric aliphatic, cycloaliphatic, araliphatic or aromatic alcohol (B₂) and at least one x-functional aliphatic, cycloaliphatic, araliphatic or aromatic alcohol (Cₓ) which has more than two OH groups, where x is a number greater than 2, preferably from 3 to 8, particularly preferably from 3 to 6, very particularly preferably 3 or 4 and in particular 3,
   or by reacting at least one aliphatic, cycloaliphatic, araliphatic or aromatic carboxylic acid (D_{y}) or a derivative thereof which has more than two acid groups, where y is a number greater than 2, preferably from 3 to 8, particularly preferably from 3 to 6, very particularly preferably 3 or 4 and in particular 3, with
c) at least one at least difunctional aliphatic, cycloaliphatic, araliphatic or aromatic alcohol (B₂), or
d) with at least one dihydric aliphatic, cycloaliphatic, araliphatic or aromatic alcohol (B₂) and at least one x-functional aliphatic, cycloaliphatic, araliphatic or aromatic alcohol (Cₓ) which has more than two OH groups, where x is a number greater than 2, preferably from 3 to 8, particularly preferably from 3 to 6, very particularly preferably 3 or 4 and in particular 3,
e) if appropriate in the presence of further functionalized building blocks E and
f) optionally subsequent reaction with a monocarboxylic acid or a monocarboxylic acid derivative F,
the ratio of the reactive groups in the reaction mixture being chosen so that a molar ratio of OH groups to carboxyl groups or derivatives thereof of from 5:1 to 1:5, preferably from 4:1 to 1:4, particularly preferably from 3:1 to 1:3 and very particularly preferably from 2:1 to 1:2 results.

The dicarboxylic acids (A₂) include, for example, aliphatic dicarboxylic acids, such as oxalic acid, malonic acid, succinic acid, glutaric acid, adipic acid, pimelic acid, suberic acid, azelaic acid, sebacic acid, undecane-α,ω-dicarboxylic acid, dodecane-α,ω dicarboxylic acid, cis- and trans-cyclohexane-1,2-dicarboxylic acid, cis- and trans-cyclohexane-1,3-dicarboxylic acid, cis- and trans-cyclohexane-1,4-dicarboxylic acid, cis- and trans-cyclopentane-1,2-dicarboxylic acid, cis- and trans-cyclopentane-1,3-dicarboxylic acid. Furthermore, aromatic dicarboxylic acids, such as, for example, phthalic acid, isophthalic acid or terephthalic acid, can also be used. Unsaturated dicarboxylic acids, such as maleic acid or fumaric acid, can also be used.

Said dicarboxylic acids may also be substituted by one or more radicals selected from C₁-C₂₅-alkyl groups, C₃-C₁₂-cycloalkyl groups, C₂-C₃₀-alkenyl groups or C₅-C₁₄-aryl groups. The following may be mentioned as typical examples of substituted dicarboxylic acids: 2-methylmalonic acid, 2-ethylmalonic acid, 2-phenylmalonic acid, 2-methylsuccinic acid, 2-ethylsuccinic acid, C₁₈-alkenylsuccinic acid, 2-phenylsuccinic acid, itaconic acid and 3,3-dimethylglutaric acid.

The dicarboxylic acids can be used either as such or in the form of their derivatives.

Derivatives are the relevant anhydrides in monomeric or polymeric form, mono- or dialkyl esters, preferably mono- or di-C₁-C₄-alkyl esters, particularly preferably mono- or dimethyl esters and the corresponding mono- or diethyl esters, and furthermore mono- and divinyl esters and mixed esters, preferably mixed esters having different C₁-C₄-alkyl components, particularly preferably mixed methyl ethyl esters, as well as their anhydrides.

Furthermore, mixtures of two or more of the abovementioned dicarboxylic acids can be used.

It is also possible to use a mixture of a dicarboxylic acid and one or more of its derivatives. It is equally possible to use a mixture of a plurality of different derivatives of one or more dicarboxylic acids.

Particularly preferably, malonic acid, succinic acid, glutaric acid, adipic acid, 1,2-, 1,3- or 1,4-cyclohexanedicarboxylic acid (hexahydrophthalic acids), phthalic acid, isophthalic acid, terephthalic acid or mono- or dialkyl esters thereof are used.

Tricarboxylic acids or polycarboxylic acids (D_{y}) which can be reacted are, for example, aconitic acid, 1,3,5-cyclohexanetricarboxylic acid, 1,2,4-benzenetricarboxylic acid, 1,3,5-benzenetricarboxylic acid, 1,2,4,5-benzenetetracarboxylic acid (pyromellitic acid) and mellitic acid and low molecular weight polyacrylic acids.

Tricarboxylic acids or polycarboxylic acids (D_{y}) can be used either as such or in the form of derivatives.

It is also possible to use a mixture of a tri- or polycarboxylic acid and one or more of its derivatives, for example a mixture of pyromellitic acid and pyromellitic anhydride. It is also possible to use a mixture of a plurality of different derivatives of one or more tri- or polycarboxylic acids, for example a mixture of 1,3,5-cyclohexanetricarboxylic acid and pyromellitic dianhydride.

Examples of diols (B₂) used are ethylene glycol, propane-1,2-diol, propane-1,3-diol, butane-1,2-diol, butane-1,3-diol, butane-1,4-diol, butane-2,3-diol, pentane-1,2-diol, pentane-1,3-diol, pentane-1,4-diol, pentane-1,5-diol, pentane-2,3-diol, pentane-2,4-diol, hexane-1,2-diol, hexane-1,3-diol, hexane-1,4-diol, hexane-1,5-diol, hexane-1,6-diol, hexane-2,5-diol, heptane-1,2-diol, 1,7-heptanediol, 1,8-octanediol, 1,2-octanediol, 1,9-nonanediol, 1,2-decanediol, 1,10-decanediol, 1,2-dodecanediol, 1,12-dodecanediol, 1,5-hexadiene-3,4-diol, 1,2-and 1,3-cyclopentanediols, 1,2-, 1,3-and 1,4-cyclohexanediols, 1,1-, 1,2-, 1,3- and 1,4-bis(hydroxymethyl)cyclohexanes, 1,1-, 1,2-, 1,3- and 1,4-bis(hydroxyethyl)cyclohexanes, neopentylglycol, (2)-methyl-2,4-pentanediol, 2,4-dimethyl-2,4-pentanediol, 2-ethyl-1,3-hexanediol, 2,5-dimethyl-2,5-hexanediol, 2,2,4-trimethyl-1,3-pentanediol, pinacol, diethylene glycol, triethylene glycol, dipropylene glycol, tripropylene glycol, polyethylene glycols HO(CH₂CH₂O)ₙ-H or polypropylene glycols HO(CH[CH₃]CH₂O)ₙ-H, where n is an integer and n is ≥ 4, polyethylenepolypropylene glycols, it being possible for the sequence of the ethylene oxide of the propylene oxide units to be block-by-block or random, polytetramethylene glycols, preferably up to a molecular weight up to 5000 g/mol, poly-1,3-propanediols, preferably having a molecular weight up to 5000 g/mol, polycaprolactones or mixtures of two or more members of the above compounds. One or both hydroxyl groups in the abovementioned diols can be substituted by SH groups. Preferably used diols are ethylene glycol, 1,2-propanediol, 1,3-propanediol, 1,4-butanediol, 1,5-pentanediol, 1,6-hexanediol, 1,8-octanediol, 1,2-, 1,3- and 1,4-cyclohexanediol, 1,3- and 1,4-bis(hydroxymethyl)cyclohexane and diethylene glycol, triethylene glycol, dipropylene glycol, tripropylene glycol, polyethylene glycols HO(CH₂CH₂O)ₙ-H or polypropylene glycols HO(CH[CH₃]CH₂O)ₙ-H, where n is an integer and n is ≥ 4, polyethylenepolypropylene glycols, it being possible for the sequence of the ethylene oxide of the propylene oxide units to be block-by-block or random, or polytetramethylene glycols, preferably up to a molecular weight up to 5000 g/mol.

The dihydric alcohols B₂ can optionally also comprise further functionalities, such as, for example, carbonyl, carboxyl, alkoxycarbonyl or sulfonyl functions, such as, for example, dimethylolpropionic acid or dimethylolbutyric acid, and C₁-C₄-alkyl esters thereof, glyceryl monostearate or glyceryl monooleate.

Alcohols (Cₓ) having 3 or more OH groups comprise glycerol, trimethylolmethane, trimethylolethane, trimethylolpropane, 1,2,4-butanetriol, tris(hydroxymethyl)amine, tris(hydroxyethyl)amine, tris(hydroxypropyl)amine, pentaerythritol, diglycerol, triglycerol or higher condensates of glycerol, di(trimethylolpropane), di(pentaerythritol), trishydroxymethyl isocyanurate, tris(hydroxyethyl) isocyanurate (THEIC), tris(hydroxypropyl) isocyanurate, inositols or sugars, such as, for example, glucose, fructose or sucrose, sugar alcohols, such as, for example, sorbitol, mannitol, threitol, erythritol, adonitol (ribitol), arabitol (lyxitol), xylitol, dulcitol (galactitol), maltitol, isomalt, trifunctional or higher-functional polyetherols based on trifunctional or higher-functional alcohols and ethylene oxide, propylene oxide and/or butylene oxide.

Glycerol, diglycerol, triglycerol, trimethylolethane, trimethylolpropane, 1,2,4-butanetriol, pentaerythritol, tris(hydroxyethyl) isocyanurate and polyetherols thereof based on ethylene oxide and/or propylene oxide are particularly preferred.

According to a particular embodiment, the hyperbranched polymer is a hyperbranched polyester that is obtainable by reacting α, β-unsaturated carboxylic acids and derivatives thereof with a multifunctional alcohol. The α,β-unsaturated carboxylic acids and their derivatives are preferably dicarboxylic acids and their derivatives. Particular preference is given to dicarboxylic acids and derivatives wherein the double bond is in vicinity to both carboxylic acid groups. These preferred α, β-unsaturated carboxylic acids and their derivatives include maleic acid, maleic acid anhydride, maleic acid dichloride, furmaric acid, furmaric acid dichloride, itaconic acid, and itaconic acid dichloride. Maleic acid anhydride is particularly preferred. Said α, β-unsaturated carboxylic acids and their derivatives may be used alone or in combination or together with further carboxylic acids and their derivatives, preferably di- or polycarboxylic acids and their derivatives, for example adipic acid, for preparing the hyperbranched polyesters. Hyperbranched polyesters based on maleic acid anhydride are disclosed in, for instance, WO 05/037893, which is incorporated herein by reference in its entirety.

According to a further particular embodiment, the hyperbranched polymer is a hyperbranched polyester that is obtainable by using an AB₂ monomer such as dihydroxycarboxylic acids, e.g. dimethylolpropionic acid. "ABₓ monomers" are particularly suitable for the synthesis of hyperbranched polymers. These ABₓ monomers exhibit two different functional groups A and B which can react with one another for the formation of a linkage. The functional group A is in this connection only present once per molecule and the functional group B twice or several times. Reaction of said ABₓ monomers with one another produces essentially noncrosslinked polymers with regularly arranged branching positions. The polymers exhibit almost exclusively B groups at the chain ends. Further details will be found, for example, in Journal of Molecular Science, Rev. Macromol. Chem. Phys., C37(3), 555-579 (1997), which is incorporated herein by reference in its entirety.

The reaction can be carried out in the presence or absence of a solvent. Suitable solvents are, for example, hydrocarbons, such as paraffins, aromatics, ethers and ketones. The reaction is preferably carried out in the absence of solvents. The reaction can be effected in the presence of a dehydrating agent as an additive, which is added at the beginning of the reaction. For example, molecular sieves, in particular molecular sieve 4 A, MgSO₄ and Na₂SO₄ are suitable. Water or alcohol formed during the reaction can also be distilled off and it is possible to use, for example, a water separator in which the water is removed with the aid of an entraining agent.

The reaction can be carried out in the absence of a catalyst. Preferably, however, the procedure is effected in the presence of at least one catalyst. Acidic inorganic, organometallic or organic catalysts or mixtures of a plurality of acidic inorganic, organometallic or organic catalysts are preferred.

For example, sulfuric acid, sulfates and hydrogensulfates, such as sodium hydrogensulfate, phosphoric acid, phosphonic acid, hypophosphorous acid, aluminum sulfate hydrate, alum, acidic silica gel (having a pH in water of ≤ 6, in parlicular ≤ 5) and acidic alumina may be used. It is also possible, for example, to use aluminum compounds of the general formula Al(OR²)₃ and titanates of the general formula Ti(OR²)₄ as acidic inorganic catalysts, where the R² radicals may each be the same or different and are independently selected from butyl, isopropyl or 2-ethylhexyl. Preferred acidic organometallic catalysts are, for example, selected from dialkyltin oxides R³₂SnO or dialkyltin esters R³₂Sn(OR⁴)₂, where R³ and R⁴ may be selected from C₁-C₂₀-alkyl or C₃-C₁₂-cycloalkyl and may be the same or different. Particularly preferred representatives of acidic organometallic catalysts are dibutyltin oxide and dibutyltin dilaurate.

The reaction is carried out at temperatures of from 60 to 250°C.

According to a particular embodiment, the hyperbranched polyester of the invention is a hyperbranched polyester obtainable by reacting an optionally substituted succinic acid anhydride and a polyoxyethylene triol. The optionally substituted succinic acid anhydride is preferably a C₈-C₂₅-alkenyl succinic acid anhydride, e.g. C₁₈-alkenyl succinic acid anhydride The polyoxyethylene triol preferably is an ethoxylation product of trimethylolpropane with 2 to 25, e.g. 3 or 12, units of ethylene oxide.

Hyperbranched polyethers and their preparation are disclosed, for instance, in WO 03/062306, WO 00/56802, DE 102 11 664 or DE 199 47 631, which are incorporated herein by reference in their entirety.

Mixed forms of hyperbranched polycarbonates, polyesters and polyethers, such as hyperbranched polyestercarbonates, hyperbranched polyethercarbonates, polyetheresters, polyetherestercarbonates, can be prepared in analogy to the hyperbranched polycarbonates, polyesters and polyethers by combining reactants in a suitable manner. For instance, polyestercarbonates and their preparation are disclosed in DE 102005009166, which is incorporated herein by reference in its entirety.

Hyperbranched polyurethanes and their preparation are disclosed, for instance, in WO 97/02304 or DE 199 04 444, which are incorporated herein by reference in their entirety.

Hyperbranched polyureas and their preparation are disclosed, for instance, in WO 03/066702, DE 10351401.5 or DE 102004006304.4, which are incorporated herein by reference in their entirety.

Hyperbranched polyureapolyurethanes and their preparation are disclosed, for instance, in WO 97/02304 or DE 199 04 444, which are incorporated herein by reference in their entirety.

The term "polyurethanes" comprises, in the context of this invention, not only those polymers whose repeat units are bonded to one another via urethane groups but very generally polymers which can be obtained by reaction of at least one di- and/or polyisocyanate with at least one compound exhibiting at least one group which is reactive with regard to isocyanate groups. These include polymers whose repeat units, in addition to urethane groups, are also bonded by urea, allophanate, biuret, carbodiimide, amide, uretonimine, uretdione, isocyanurate or oxazolidone (oxazolidinone) groups (see, for example, Plastics Handbook, Saechtling, 26th edition, p. 491ff, Carl Hanser Verlag, Munich, 1995, which is incorporated herein in their entirety by reference The term "polyurethanes" comprises in particular polymers exhibiting urethane and/or urea groups.

Their content of urethane and/or urea groups (and, if present, additional groups obtained by reaction of an isocyanate group with a correspondingly reactive group with an active hydrogen atom) preferably lies in a range of 0.5 to 10 mol/kg, particularly preferably 1 to 10 mol/kg, especially 2 to 8 mol/kg.

The synthesis of hyperbranched polyurethanes and polyureas which can be used in accordance with the invention can, for example, be carried out as described below.

Use is preferably made, in the synthesis of the hyperbranched polyurethanes and polyureas, of ABₓ monomers exhibiting both isocyanate groups and groups which can react with isocyanate groups for the formation of a linkage. x is a natural number between 2 and 8. x is preferably 2 or 3. Either A relates to the isocyanate groups and B relates to groups which react with them or vice versa.

The groups which react with isocyanate groups are preferably OH, NH₂, NRH, SH or COOH groups.

The ABₓ monomers can be prepared in a known way using various techniques.

ABₓ monomers can, for example, be synthesized according to the method disclosed in WO 97/02304, which is incorporated herein by reference in their entirety, with the use of protective group techniques. By way of example, this technique was illustrated by the preparation of an AB₂ monomer from 2,4-toluylene diisocyanate (TDI) and trimethylolpropane. First, one of the isocyanate groups of the TDI is blocked in a known way, for example by reaction with an oxime. The remaining free NCO group is reacted with trimethylolpropane, one of the three OH groups reacting with the isocyanate group. After cleavage of the protective group, a molecule with one isocyanate group and 2 OH groups is obtained.

In a particularly advantageous way, the ABₓ molecules can be synthesized according to the method disclosed in DE-A 199 04 444, which is incorporated herein by reference in its entirety, in which no protective groups are required. In this method, di- or polyisocyanates are used and are reacted with compounds exhibiting at least two groups which react with isocyanate groups. At least one of the reaction partners exhibits groups with varying reactivity with regard to the other reaction partner. Preferably, both reaction partners exhibit groups with varying reactivity with regard to the other reaction partner. The reaction conditions are chosen so that only certain reactive groups can react with one another.

In addition, ABₓ molecules can be prepared as disclosed in the German patent application P 102 04 979.3, which is incorporated herein by reference in their entirety. In this instance, isocyanate groups protected by blocking agents are reacted with polyamines to give polyureas.

Possible di- or polyisocyanates are the aliphatic, cycloaliphatic, araliphatic and aromatic di- or polyisocyanates known as state of the art and mentioned subsequently by way of example. Mention may preferably be made, in this connection, of 4,4'-diphenylmethane diisocyanate, the mixtures of monomeric diphenylmethane diisocyanates and oligomeric diphenylmethane diisocyanates (polymer MDI), tetramethylene diisocyanate, tetramethylene diisocyanate trimers, hexamethylene diisocyanate, hexamethylene diisocyanate trimers, isophorone diisocyanate trimer, 4,4'-methylenebiscyclohexane diisocyanate, xylylene diisocyanate, tetramethylxylylene diisocyanate, dodecane diisocyanate, lysine alkyl ester diisocyanate, alkyl representing C₁-C₁₀ alkyl, 1,4-diisocyanatocyclohexane or 4-isocyanatomethyl-1,8-octamethylene diisocyanate.

Di- or polyisocyanates exhibiting NCO groups of varying reactivity are suitable particularly preferably for the synthesis of polyurethanes and polyureas. Mention may be made in this connection of 2,4-toluylene diisocyanate (2,4-TDI), 2,4'-diphenylmethane diisocyanate (2,4'-MDI), triisocyanatotoluene, isophorone diisocyanate (IPDI), 2-butyl-2-ethylpentamethylene diisocyanate, 2,2,4- or 2,4,4-trimethyl-1 ,6-hexamethylene diisocyanate, 2-isocyanatopropylcyclohexane isocyanate, 3(4)-isocyanatomethyl-1-methylcyclohexane isocyanate, 1,4-diisocyanato-4-methylpentane, 2,4'-methylenebiscyclohexane diisocyanate and 4-methylcyclohexane 1,3-diisocyanate (H-TDI).

Isocyanates, the NCO groups of which are first equally reactive, in which, however, the first addition of a reactant to an NCO group can induce a fall in reactivity in the second NCO group, are furthermore suitable for the synthesis of the polyurethanes and polyureas. Examples thereof are isocyanates, the NCO groups of which are coupled via a delocalized p-electron system, e.g. 1,3- and 1,4-phenylene diisocyanate, 1,5-naphthalene diisocyanate, biphenyl diisocyanate, tolidine diisocyanate or 2,6-toluylene diisocyanate.

Furthermore, use may be made, for example, of oligo- or polyisocyanates which can be prepared from the abovementioned di- or polyisocyanates or mixtures thereof by linking by means of urethane, allophanate, urea, biuret, uretdione, amide, isocyanurate, carbodiimide, uretonimine, oxadiazinetrione or iminooxadiazinedione structures.

Use is preferably made, as compounds with at least two groups which are reactive with isocyanates, of di-, tri- or tetrafunctional compounds, the functional groups of which exhibit a varying reactivity with regard to NCO groups.

Preference is given, for the preparation of polyurethanes and polyurea-polyurethanes, to compounds with at least one primary and at least one secondary hydroxyl group, at least one hydroxyl group and at least one mercapto group, particularly preferably with at least one hydroxyl group and at least one amino group in the molecule, in particular aminoalcohols, aminodiols and aminotriols, since the reactivity of the amino group is clearly higher in comparison with the hydroxyl group in the reaction with isocyanate.

Examples of the abovementioned compounds with at least two groups which react with isocyanates are propylene glycol, glycerol, mercaptoethanol, ethanolamine, N-methylethanolamine, diethanolamine, ethanolpropanolamine, dipropanolamine, diisopropanolamine, 2-amino-1,3-propanediol, 2-amino-2-methyl-1,3-propanediol or tris(hydroxymethyl)aminomethane. Furthermore, mixtures of the abovementioned compounds can also be used.

Isocyanate-reactive products exhibiting at least two amino groups in the molecule are preferably used for the preparation of polyureas.

These are, for example, ethylenediamine, N-alkylethylenediamine, propylenediamine, N-alkylpropylenediamine, hexamethylenediamine, N-alkylhexamethylenediamine, diaminodicyclohexylmethane, phenylenediamine, isophoronediamine, amine-terminated polyoxyalkylenepolyols (referred to as Jeffamines), bis(aminoethyl)amine, bis(aminopropyl)amine, bis(aminohexyl)amine, tris(aminoethyl)amine, tris(aminopropyl)amine, tris(aminohexyl)amine, trisaminohexane, 4-aminomethyl-1,8-octamethylenediamine, N'-(3-aminopropyl)-N,N-dimethyl-1,3-propanediamine, trisaminononane or melamine. Furthermore, mixtures of the abovementioned compounds can also be used.

The preparation of an ABₓ molecule for the preparation of a polyurethane from a diisocyanate and an aminodiol is illustrated here by way of example. In this connection, first one mole of a diisocyanate is reacted with one mole of an aminodiol at low temperatures, preferably in the range between -10 and 30°C. In this temperature range, the urethane formation reaction is virtually completely suppressed and the NCO groups of the isocyanate react exclusively with the amino group of the aminodiol. The ABₓ molecule formed, in this instance an AB₂ type, exhibits a free NCO group and two free OH groups and can be used for the synthesis of a hyperbranched polyurethane. This AB₂ molecule can react intermolecularly, by warming and/or addition of catalyst, to give a hyperbranched polyurethane. The synthesis of the hyperbranched polyurethane can advantageously take place at elevated temperature, preferably in the range between 30 and 80°C, without prior isolation of the AB₂ molecule in an additional reaction step. On using the AB₂ molecule with two OH groups and one NCO group described, a hyperbranched polymer is produced which, per molecule, exhibits one free NCO group and, depending on the degree of polymerization, a more or less large number of OH groups. The reaction can be carried out up to high conversions, through which very high molecular weight structures are obtained. However, it can also, for example, be terminated by addition of suitable monofunctional compounds or by addition of one of the starting compounds for the preparation of the AB₂ molecule on reaching the desired molecular weight. Depending on the starting compound used for the termination, either completely NCO-terminated or completely OH-terminated molecules are produced.

Alternatively, an AB₂ molecule can also be prepared, for example, from 1 mol of glycerol and 2 mol of 2,4-TDI. At low temperature, the primary alcohol groups and the isocyanate group in the 4-position preferably react and an adduct is formed which exhibits one OH group and two isocyanate groups and which, as described, can be converted at higher temperatures to give a hyperbranched polyurethane. There is produced first a hyperbranched polymer which exhibits one free OH group and, depending on the degree of polymerization, a more or less large number of NCO groups.

The preparation of the hyperbranched polyurethanes and polyureas can in principle be carried out without solvent but is preferably carried out in solution. All compounds liquid at the reaction temperature and inert with regard to the monomers and polymers are suitable in principle as solvent.

Other products are accessible by additional alternative synthetic forms. Mention may be made here, for example, of:
AB₃ molecules can, for example, be obtained by reaction of diisocyanates with compounds with at least 4 groups which are reactive with respect to isocyanates. Mention may be made, by way of example, of the reaction of toluylene diisocyanate with tris(hydroxymethyl)aminomethane.

Polyfunctional compounds can also be used to terminate the polymerization, which compounds can react with the respective A groups. In this way, several small hyperbranched molecules can be linked together to give a large hyperbranched molecule.

Hyperbranched polyurethanes and polyureas with chain-extended branches can, for example, be obtained by additionally using, in the polymerization reaction, in addition to the ABₓ molecules, in the molar ratio 1:1, a diisocyanate and a compound which exhibits two groups which react with isocyanate groups. These additional AA or BB compounds can also even have available additional functional groups which, under the reaction conditions, may not, however, be reactive with regard to the A or B groups. In this way, additional functionalities can be introduced into the hyperbranched polymer.

Hyperbranched polyamides and their preparation are disclosed, for instance, in US 4 507 466, US 6 541 600, US-A-2003055209, US 6 300 424, US 5 514 764, WO 92/08749, and DE 102004039101.7, which are incorporated herein by reference in their entirety.

A suitable procedure for the preparation of hyperbranched polyamides starts out from polyfunctional amines and polycarboxylic acids, use being made of at least one polyfunctional compound exhibiting three or more than three (e.g. 4, 5, 6, and the like) functional groups. Formally, in this procedure, a first class of monomers with two identical functional groups A₂ (e.g., a dicarboxylic acid or a diamine) is then reacted with a second class of monomers Bₙ, this second class comprising at least one compound with more than equal functional groups (e.g., at least one tricarboxylic acid (n =3) or a higher than trivalent carboxylic acid or at least one triamine (n = 3) or a higher than trivalent amine). Preferably, the second class of monomers comprises at least one divalent monomer B₂ which exhibits two functional groups complementary to the monomers A₂. Preferably, the monomers Bₙ exhibit a mean functionality of at least 2.1 (n = 2.1). Preferably, for the preparation of hyperbranched polyamides according to this alternative form, the monomers A₂ are used in a molar excess with regard to the monomers Bₙ. Preferably, the molar ratio of monomers A₂ to monomers Bₙ lies in a range from 1:1 to 20:1, particularly preferably of 1.1:1 to 10:1, in particular 1.2:1 to 5:1. In a preferred embodiment, a hyperbranched prepolymer with terminal groups A is first prepared and is further reacted subsequently with at least one monomer B₂ and/or Bₙ. To prepare the prepolymer, use is preferably made of monomers A₂ and monomers Bₙ in a molar ratio of 1:1 to 20:1, particularly preferably of 1.1:1 to 10:1, especially 1.2:1 to 5:1.

An additional suitable procedure for the preparation of hyperbranched polyamides starts out from polyfunctional aminocarboxylic acids, use being made of at least one polyfunctional compound exhibiting three or more than three (e.g., 4, 5, 6 and the like) functional groups, i.e. what is referred to as an ABₓ monomer (x is greater than or equal to 2). These can then be reacted with additional monomers AB, A₂ and/or B₂.

Suitable dicarboxylic acids are, for example, oxalic acid, malonic acid, succinic acid, glutaric acid, adipic acid, pimelic acid, suberic acid, azelaic acid, sebacic acid, undecane-α,ω-dicarboxylic acid, dodecane-α,ω-dicarboxylic acid, cis- and trans-cyclohexane-1,2-dicarboxylic acid, cis- and trans-cyclohexane-1,3-dicarboxylic acid, cis- and trans-cyclohexane-1,4-dicarboxylic acid, cis- and trans-cyclopentane-1,2-dicarboxylic acid, cis- and trans-cyclopentane-1,3-dicarboxylic acid, phthalic acid, isophthalic acid, terephthalic acid and mixtures thereof.

The abovementioned dicarboxylic acids can also be substituted. Suitable substituted dicarboxylic acids can exhibit one or more residues preferably chosen from alkyl, cycloalkyl and aryl as defined at the start. Suitable substituted dicarboxylic acids are, for example, 2-methylmalonic acid, 2-ethylmalonic acid, 2-phenylmalonic acid, 2-methylsuccinic acid, 2-ethylsuccinic acid, 2-phenylsuccinic acid, itaconic acid, 3,3-dimethylglutaric acid, and the like.

The dicarboxylic acids can be used either as such or in the form of derivatives. Suitable derivatives are anhydrides and their oligomers and polymers, mono- and diesters, preferably mono- and dialkyl esters, and acid halides, preferably chlorides. Suitable esters are mono- or dimethyl esters, mono- or diethyl esters, and mono- and diesters of higher alcohols, such as, for example, n-propanol, isopropanol, n-butanol, isobutanol, tert-butanol, n-pentanol, n-hexanol, and the like, also mono- and divinyl esters and mixed esters, preferably methyl ethyl ester.

In the context of the present invention, it is also possible to use a mixture of a dicarboxylic acid and one or more of its derivatives. Likewise, it is, in the context of the present invention, possible to use a mixture of several different derivatives of one or more dicarboxylic acids.

Use is made particularly preferably of succinic acid, glutaric acid, adipic acid, phthalic acid, isophthalic acid, terephthalic acid or their mono- or dimethyl esters. Use is made very particularly preferably of adipic acid.

Suitable polyfunctional amines for the preparation of hyperbranched polyamides exhibit 2 or more than 2 (e.g. 3, 4, 5, 6, and the like) primary or secondary amino groups capable of amide formation.

Suitable diamines are straight-chain and branched aliphatic and cycloaliphatic amines with generally approximately 2 to 30, preferably about 2 to 20, carbon atoms. Suitable diamines are, for example, those of the general formula R¹-NH-R²-NH-R³, in which R¹ and R³ represent, independently of one another, hydrogen, alkyl, cycloalkyl or aryl and R² represents alkylene, cycloalkylene or arylene. These include ethylenediamine, 1,2-diaminopropane, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, N-alkylethylenediamine, such as N-methylethylenediamine and N-ethylethylenediamine, N,N'-dialkylethylenediamine, such as N,N'- dimethylethylenediamine, N-alkylhexamethylenediamine, such as N-methylhexamethylenediamine, piperazine, bis(4-aminocyclohexyl)methane, phenylenediamine, isophoronediamine, bis(2-aminoethyl) ether, 1,2-bis(2-aminoethoxy)ethane and amine-terminated polyoxyalkylenepolyols ("Jeffamines" or α,ω-diaminopolyethers), which can be prepared, e.g., by amination of polyalkylene oxides with ammonia.

Suitable triamines are, e.g. bis(2-aminoethyl)amine (= diethylenetriamine), N,N'-diethyldiethylenetriamine, bis(3-aminopropyl)amine, bis(6-aminohexyl)amine, 4-aminomethyl-1,8-octamethylenediamine, N'-(3-aminopropyl)-N,N-dimethyl-1,3-propanediamine, melamine, and the like.

Suitable amines of higher valency are N,N'-bis(2-aminoethyl)ethylenediamine (= triethylenetetramine), N,N'-bis(2-aminoethyl)-1,3-diaminopropane, N,N'-bis(3-aminopropyl)-1,4-diaminobutane (= spermine), N,N'-bis(2-aminoethyl)piperazine, N,N'-bis(3-aminopropyl)piperazine, tris(2-aminoethyl)amine, tris(3-aminopropyl)amine, tris(6-aminohexyl)amine, and the like.

Polymeric polyamines are also suitable. These generally exhibit a number-average molecular weight of approximately 400 to 10 000, preferably approximately 500 to 8000. These include, e.g., polyamine with terminal primary or secondary amino groups, polyalkyleneimines, preferably polyethyleneimines, vinylamides obtained by hydrolysis of poly-N-vinylamides, such as, e.g., poly-N-vinylacetamide, the abovementioned α,ω-diamines based on aminated polyalkylene oxides, and copolymers comprising, copolymerized, αβ-ethylenically unsaturated monomers with appropriate functional groups, e.g. aminomethyl acrylate, aminoethyl acrylate, (N-methyl)aminoethyl acrylate, (N-methyl)aminoethyl methacrylate, and the like.

The above-described hyperbranched polyamides can generally already be used as in the compositions of the present invention. In an additional embodiment, the above-described hyperbranched polyamides are additionally also subjected to a polymer-analogous reaction, as is described subsequently. Suitable for this are, for example, monocarboxylic acids, monoamines, mono- or polyols, and also mono- and polycarboxylic acids, aminocarboxylic acids, mono- and polyamines, and mono- and polyols with special functional groups for the modification of the properties of the hyperbranched polyamides.

The preparation of the hyperbranched polyamides can be carried out in the presence of a conventional catalyst. These include, e.g., metal oxides and carbonates, strong acids, terephthalates, titanium halides, alkoxides and carboxylates, and the like. Suitable catalysts are disclosed, for example, in US 2 244 192, US 2 669 556, SU 775 106 and US 3 705 881. Additional suitable catalysts are mentioned subsequently with the polyesteramides.

Hyperbranched polyesteramides and their preparation are disclosed, for instance, in WO 99/16810, EP 1 036 106, WO 00/56804 and WO 06/018126, which are incorporated herein by reference in their entirety.

Polyesteramides are very generally polymeric compounds exhibiting ester groups and amide groups. Use may be made, to prepare hyperbranched polyesteramides, in principle of at least divalent compounds chosen from polycarboxylic acids, hydroxycarboxylic acids, aminocarboxylic acids, aminoalcohols, polyamines, polyols and derivatives of the abovementioned compounds. In this connection, first, the condition applies that the compounds are chosen in such a way that the polymers obtained exhibit both ester groups and amide groups. In this connection, in addition, the condition applies that the compounds are chosen in such a way that at least one polyfunctional compound is used which exhibits three or more than three (e.g., 4, 5, 6, and the like) functional groups.

A suitable procedure to prepare hyperbranched polyesteramides starts out from polyfunctional aminoalcohols and polycarboxylic acids, use being made of at least one polyfunctional compound exhibiting three or more than three (e.g., 4, 5, 6, and the like) functional groups.

An additional suitable procedure to prepare hyperbranched polyesteramides starts out from polyfunctional amines, polyfunctional alcohols and polycarboxylic acids, use being made of at least one polyfunctional compound exhibiting three or more than three (e.g., 4, 5, 6, and the like) functional groups.

Suitable polyfunctional aminoalcohols for the preparation of hyperbranched polyesteramides exhibit two or more than two (e.g., 3, 4, 5, 6, and the like) functional groups chosen from hydroxyl groups and primary and secondary amino groups. As defined, aminoalcohols in this connection always exhibit at least one hydroxyl group and at least one primary or secondary amino group. Suitable aminoalcohols are straight-chain and branched aliphatic and cycloaliphatic aminoalcohols with generally 2 to 30, preferably 2 to 20, carbon atoms.

Suitable divalent aminoalcohols are, e.g., 2-aminoethanol (= monoethanolamine), 3-amino-1-propanol, 2-amino-1-propanol, 1-amino-2-propanol, 2-amino-3-phenylpropanol, 2-amino-2-methyl-1-propanol, 2-amino-1-butanol, 4-amino-1-butanol, 2-aminoisobutanol, 2-amino-3-methyl-1-butanol, 2-amino-3,3-dimethylbutanol, 1-amino-1-pentanol, 5-amino-1-pentanol, 2-amino-1-pentanol, 2-amino-4-methyl-1-pentanol, 2-amino-3-methyl-1-pentanol, 2-aminocyclohexanol, 4-aminocyclohexanol, 3-(aminomethyl)-3,5,5-trimethylcyclohexanol, 2-amino-1,2-diphenylethanol, 2-amino-1,1-diphenylethanol, 2-amino-2-phenylethanol, 2-amino-1-phenylethanol, 2-(4-aminophenyl)ethanol, 2-(2-aminophenyl)ethanol, 1-(3-aminophenyl)ethanol, 2-amino-1-hexanol, 6-amino-1-hexanol, 6-amino-2-methyl-2-heptanol, N-methylisopropanolamine, N-ethylisopropanolamine, N-methylethanolamine, 1-ethylaminobutan-2-ol, 4-methyl-4-aminopentan-2-ol, 2-(2-aminoethoxy)ethanol, N-(2-hydroxyethyl)piperazine, 1-amino-2-indanol, N-(2-hydroxyethyl)aniline, amino sugars, such as D-glucosamine, D-galactosamine, 4-amino-4,6-dideoxy-α-D-glucopyranose, and mixtures thereof.

Suitable trivalent aminoalcohols and aminoalcohols of higher valency are, e.g., N-(2-hydroxyethyl)ethylenediamine, diethanolamine, dipropanolamine, diisopropanolamine, 2-amino-1,3-propanediol, 3-amino-1,2-propanediol, and the like.

Suitable polycarboxylic acids for the preparation of hyperbranched polyesteramides are those described above for the preparation of hyperbranched polyamides. Reference may be made in their entirety to the suitable and preferred embodiments mentioned therein.

Suitable polyfunctional amines for the preparation of hyperbranched polyesteramides are those described above for the preparation of hyperbranched polyamides. Reference may be made in their entirety to the suitable and preferred embodiments mentioned therein.

Suitable polyfunctional alcohols for the preparation of hyperbranched polyesteramides exhibit two or more than two (e.g., 3, 4, 5, 6, and the like) hydroxyl groups. In this connection, the hydroxyl groups can also be partially or completely replaced by mercapto groups.

Suitable diols are straight-chain and branched aliphatic and cycloaliphatic alcohols with generally approximately 2 to 30, preferably approximately 2 to 20, carbon atoms. These include 1,2-ethanediol, 1,2-propanediol, 1,3-propanediol, 1,2-butanediol, 1,3-butanediol, 1,4-butanediol, 2,3-butanediol, 1,2-pentanediol, 1,3-pentanediol, 1,4-pentanediol, 1,5-pentanediol, 2,3-pentanediol, 2,4-pentanediol 1,2-hexanediol, 1,3-hexanediol, 1,4-hexanediol, 1,5-hexanediol, 1,6-hexanediol, 2,5-hexanediol, 1,2-heptanediol, 1,7-heptanediol, 1,2-octanediol, 1,8-octanediol, 1,2-nonanediol, 1,9-nonanediol, 1,2-decanediol, 1,10-decanediol, 1,12-dodecanediol, 2-methyl-1,3-propanediol, 2-methyl-2-butyl-1,3-propanediol, 2,2-dimethyl-1,3-propanediol, 2,2-dimethyl-1,4-butanediol, pinacol, 2-ethyl-2-butyl-1,3-propanediol, diethylene glycol, triethylene glycol, dipropylene glycol, tripropylene glycol, polyalkylene glycols, cyclopentanediols, cyclohexanediols, and the like.

Suitable triols are, e.g., glycerol, butane-1,2,4-triol, n-pentane-1,2,5-triol, n-pentane-1,3,5-triol, n-hexane-1,2,6-triol, n-hexane-1,2,5-triol, trimethylolpropane and trimethylolbutane. Suitable triols are furthermore the triesters of hydroxycarboxylic acids with trivalent alcohols. Preferably, in this connection, they are triglycerides of hydroxycarboxylic acids, such as, e.g., lactic acid, hydroxystearic acid and ricinoleic acid. Naturally occurring mixtures comprising hydroxycarboxylic acid triglycerides, in particular castor oil, are also suitable. Suitable polyols of higher valency are, e.g., sugar alcohols and their derivatives, such as erythritol, pentaerythritol, dipentaerythritol, threitol, inositol and sorbitol. Reaction products of the polyols with alkylene oxides, such as ethylene oxide and/or propylene oxide, are also suitable. Relatively high molecular weight polyols with a number-average molecular weight in the range of approximately 400 to 6000 g/mol, preferably 500 to 4000 g/mol, can also be used. These include, e.g., polyesterols based on aliphatic, cycloaliphatic and/or aromatic di-, tri- and/or polycarboxylic acids with di-, tri- and/or polyols, and also the polyesterols based on lactone. These furthermore include polyetherols which can be obtained, e.g., by polymerization of cyclic ethers or by reaction of alkylene oxides with an initiator molecule. These furthermore also include conventional polycarbonates with terminal hydroxyl groups known to a person skilled in the art which can be obtained by reaction of the diols described above or also bisphenols, such as bisphenol A, with phosgene or carbonic diesters. αω-Polyamidols, poly(methyl (meth)acrylate) α,ω -diols and/or poly(butyl(meth)acrylate α,ω -diols, such as, e.g., MD-1000 and BD-1000 from Goldschmidt, are also suitable.

The preparation of hyperbranched polyesteramides can be carried out according to conventional processes known to a person skilled in the art. In a first embodiment, the preparation of hyperbranched polyesteramides is carried out in a single-stage one-pot process starting from polyfunctional aminoalcohols and dicarboxylic acids, use being made of at least one polyfunctional aminoalcohol exhibiting three or more than three (e.g., 4, 5, 6, and the like) functional groups. The molar ratio of dicarboxylic acid to aminoalcohol preferably lies in a range of 2:1 to 1.1:1, particularly preferably of 1.5:1 to 1.2:1. If, in a suitable embodiment of this single-stage process, only dicarboxylic acids, i.e. monomers of type A₂, and trifunctional aminoalcohols, i.e. monomers of type B₃, are used, it is advisable to interrupt the reaction before the gel point is reached. For the definition of the gel point, see Flory, Principles of Polymer Chemistry, Cornell University Press, 1953, pp. 387 - 398, which is incorporated herein by reference in its entirety. The gel point can both be calculated according to the theory of Flory and determined by monitoring the viscosity of the reaction mixture. It is practicable to interrupt the reaction as soon as a rapid rise in the viscosity is observed.

In a second embodiment, the preparation of hyperbranched polyesteramides is carried out in a two-stage one-pot process. In this connection, in the first stage, a prepolymer with free carboxylic acid groups is first prepared and this is subsequently reacted in a second stage with polyfunctional compounds exhibiting functional groups capable of ester or amide formation. In a suitable embodiment, the carboxylic acids A₂ and aminoalcohols B₃ are used for the preparation of the prepolymers in the first stage. The molar ratio of dicarboxylic acid to aminoalcohol preferably lies in a range of 2:1 to 10:1, particularly preferably of 2.5:1 to 5:1 and especially 2.7:1 to 4:1. In this procedure, the gelling of the reaction mixture can generally easily be avoided, even at high reaction rates. Use may be made, for the further reaction of the prepolymers in the second stage, of the abovementioned polyfunctional amines, aminoalcohols and polyamines, if appropriate in combination with additional polycarboxylic acids. Reference is made, for suitable and preferred embodiments of these compounds, to what was said above. Preferably, in the second reaction stage, use is predominantly or exclusively made of divalent compounds in accordance with a chain lengthening.

Comparable polymers to those obtained after the two-stage one-pot process can also be obtained if the hyperbranched polyesteramides obtained after the single-stage one-pot process described above are subjected to a subsequent modification in accordance with a polymer-analogous reaction, it being possible for the abovementioned polyfunctional amines, alcohols, aminoalcohols and carboxylic acids then to be used for this polymer-analogous reaction. A polymer-analogous reaction, both of the hyperbranched polyesteramides obtained after the single-stage process and of the hyperbranched polyesteramides obtained after the two-stage process, with monofunctional compounds, e.g. monoalcohols, monoamines and monocarboxylic acids, as described more specifically below, is naturally also possible. These monofunctional compounds can exhibit additional functional groups for additional modification of the polymer properties. Suitable stoppers are, for example, fatty acids, fatty acid derivatives, such as anhydrides and esters, fatty alcohols, acids and acid derivatives, which exhibit additional functional groups, and alcohols and amines, which exhibit additional functional groups.

The esterification and amidation reaction for the preparation of hyperbranched polyesteramides, as well as the amidation reaction for the preparation of hyperbranched polyamides, can be carried out in the presence of at least one catalyst. Suitable catalysts are, for example, acidic catalysts, organometallic catalysts, enzymes, and the like.

Suitable acidic catalysts are, e.g., sulfuric acid, phosphoric acid, phosphonic acid, hypophosphorous acid, aluminum sulfate hydrate, alum, acidic silica gel and acidic alumina. Suitable catalysts are furthermore organoaluminum compounds of the general formula Al(OR)₃ and organotitanium compounds of the general formula Ti(OR)₄, the R residues representing, independently of one another, alkyl or cycloalkyl according to the definition given at the start. Preferred R residues are, for example, chosen from isopropyl and 2-ethylhexyl.

Preferred acidic organometallic catalysts are, for example, chosen from dialkyltin oxides of the general formula R₂SnO, R representing, independently of one another, alkyl or cycloalkyl according to the definition given at the start. These preferably include di-n-butyltin oxide, which can be obtained as commercial "Oxo-Tin".

Suitable acidic organic catalysts are furthermore acidic organic compounds exhibiting at least one acid group chosen from phosphoric acid groups, phosphonic acid groups, sulfoxyl groups, sulfonic acid groups, and the like. p-Toluenesulfonic acid is preferred, for example. Suitable catalysts are furthermore acidic ion-exchange materials, for example polystyrene resins modified with sulfonic acid groups, which are crosslinked in the usual way, e.g. with divinylbenzene.

Hyperbranched polyamines and their preparation are disclosed, for instance, in: U. Steuerle, R. Feuerhake, "Aziridines", Ullmann's Encyclopedia of Industrial Chemistry, Wiley-VCH and in: G. Scherr, U.Steuerle, R. Fikentscher, "Imines, Cyclic", Kirk-Othmer Encyclopedia of Chemical Technology, Wiley and Sons, 2004-2007, which is incorporated herein by reference in its entirety.

Hyperbranched polyetheramines and their preparation are disclosed, for instance, in DE 10331770.8, which is incorporated herein by reference in its entirety.

Polyetheramines (also refered to as polyetheramine polyols) will be typically obtained from trialkanolamines, e.g. triethanolamine, tripropanolamine, triisopropanolamine, optionally as a mixture with mono- or dialkanolamines, by catalytic etherification, for example acid or basic catalysis, under elimination of water.

Preparation of these polymers is described, for example, in US 2,178,173, US 2,290,415, US 2,407,895 and DE 40 03 243, which are incorporated herein by reference in their entirety. The polymerization process can be carried out statistically, or alternatively block-like structures from single alkanolamines may be prepared, which will be linked with each other in a further step. See also US 4,404,362, which is incorporated herein by reference in its entirety.

The starting material may be triethanolamine, tripropanolamine, triisopropanolamine or tributanolamine, optionally in combination with dialkanolamines like diethanolamine, dipropanolamine, diisopropanolamine, dibutanolamine, N,N'-dihydroxyalkyl piperidine (alkyl = C₁-C₈), or in combination with di- or higher functional polyetheroles based on ethylenoxide and/or propylenoxide. The use of triethanolamine and triisopropanolamine or a mixture thereof as starting material is preferred.

After the reaction, thus without further modification, the hyperbranched polyetheramine polyols formed in the process described above are hydroxyl group terminated. They are well soluble in various solvents.

Examples of such solvents include aromatic and/or (cyclo)aliphatic hydrocarbons and mixtures thereof, halogenated hydrocarbons, ketones, esters and ethers.

The preparation of the polyetheramine polyols is carried out in the absence of a solvent or in solution. Solvents to be considered have been mentioned above. In a preferred embodiment the reaction will be carried out in the absence of a solvent.

The temperature during preparation should be high enough to allow the aminoalkanol to react. Typically a temperature range of 100 - 350°C, preferably 150 - 300°C, more preferably 180 - 280°C und particular 200 -250°C will be needed.

In a preferred embodiment the condensation reaction is carried out in the absence of a solvent. Water or low-molecular reaction products formed during the reaction may be removed, for instance by distillation, if appropriate under reduced pressure, to increase the speed of the reaction.

The separation of water or low-molecular reaction products may be promoted by passing through (stripping) a stream of a gas that is substantially inert under the reaction conditions, e.g. nitrogen, or a noble gas, e.g. helium, neon or argon. Catalysts or mixtures of catalysts may be added to increase the speed of the reaction. Suitable catalysts are compounds that catalyse etherification and reetherification reactions, for example alkali metal hydroxides, alkali metal carbonates, alkali metal bicarbonates, preferably sodium bicarbonate, potassium bicarbonate or cesium bicarbonate, acidic compounds, like iron chloride or zinc chloride, formic acid, oxalic acid, or phosphorus-containing acidic compounds, like phosphoric acid, polyphosphoric acid, phosphonic acid or phosphinic acid. It is preferred to use phosphoric acid, phosphonic acid or phosphinic acid, optionally diluted with water.

The addition of the catalyst is generally effected in an amount of from 0.001 to 10, preferably from 0.005 to 7, more preferably from 0.01 to 5 mole percent, based on the amount of the alkanolamine or alkanolamine mixture used.

It is furthermore possible to carry out the intramolecular polycondensation reaction as well by addition of a suitable catalyst as by selecting an appropriate temperature. It is also possible to adjust the average molecular mass of the polymer by carrying out the composition of the starting components and the retention time.

The polymers, which are prepared at elevated temperature, are usually stable at room temparature over a longer period, e.g. at least for 6 weeks, without showing clouding, precipitation and/or rise in viscosity.

There are several ways to terminate the intramolecular polycondensation reaction. The temperature may be, for example, reduced to a range that stops the reaction and gives a storage-stable polycondensation product. That typically happens at a temperature lower than 60°C, preferably lower than 50°C, more preferably lower than 40°C and in particular at room temperature.

Furthermore the catalyst may be desactivated, in the case of basic catalysts for example by adding of an acid component, such as a lewis acid or an organic or inorganic proton acid, as well as by adding of a basic component in the case of an acidic catalyst, for instance a lewis base or an organic or inorganic base.

It is further possible to stop the reaction by diluting with a precooled solvent. This is especially preferred if the viscosity of the reaction mixture has to be adjusted by addition of a solvent.

Preparation of the polyetheramine polyols is usually made at pressures from 0.1 mbar to 20 bar, preferably from 1 mbar to 5 bar, in reactors or reactor cascades using batch, semi-batch or continuous processes.

Due to the above-mentioned setting of reaction conditions and selection of a suitable solvent, if necessary, the products of the present invention can be processed after preparation without further purification.

The reaction mixture may be subjected to a decolourisation, if necessary, such as treatment with charcoal or metal oxides, e.g. aluminium oxide, silicon oxide, magnesium oxide, zirconium oxide, boron oxide or mixtures therof, in an amount of, for example, 0.1 to 50 % by weight, preferably 0.5 to 25 % by weight, more preferably 1 to 10 % by weight, at temperatures from, for example, 10 to 100°C, preferably from 20 to 80°C and more preferably from 30 to 60°C.

The reaction mixture also may be filtered to remove precipitates, if necessary.

In another preferred embodiment the product will be stripped, i.e., low-molecular volatile compounds are removed. For that purpose the catalyst optionally may be deactivated after the desired degree of conversion has been achieved, and the low-molecular volatile components, e.g. water, the aminoalkanols used as starting material, or volatile oligomeric or cyclic compounds may be removed by distillation, optionally with introduction of a gas, preferably nitrogen or noble gases, under reduced pressure, if necessary.

After the reaction, thus without further modification, the hyperbranched polyetheramines prepared according to the method are hydroxyl group terminated. They are well soluble in various solvents, e.g. in water, alcohols, like methanol, ethanol, butanol, mixtures of alcohol/water, acetone, 2-butanone, ethyl acetate, butyl acetate, methoxypropyl acetate, methoxyethyl acetate, tetrahydrofuran, dimethyl formamide, dimethyl acetamide, N-methylpyrrolidone, ethylene carbonate or propylene carbonate.

Hyperbranched polyesteramines and their preparation are disclosed, for instance, in DE 10331770, which is incorporated herein by reference in its entirety.

In the context of the present invention, the expression "polyesteramines" describes very generally polymeric compounds exhibiting ester groups and amino groups in the chain, amino groups not being part of an amide group. In principle, at least divalent compounds exhibiting one amino group, preferably no longer available for a subsequent reaction, and at least two additional functional groups, capable of an addition or condensation reaction, can be used for the preparation of hyperbranched polyesteramines. These include, for example, N-alkyl-N-(hydroxyalkyl)aminoalkanecarboxylic acids and carboxylic acid derivatives, N,N-di(hydroxyalkyl)aminoalkanecarboxylic acids and carboxylic acid derivatives, N-alkyl-N-(aminoalkyl)aminoalkanecarboxylic acids and carboxylic acid derivatives, N,N-di(aminoalkyl)aminoalkanecarboxylic acids and carboxylic acid derivatives, and the like. In addition to these monomers, the hyperbranched polyesteramines used according to the invention can comprise additional polyfunctional compounds incorporated exhibiting two or more than two (e.g., 3, 4, 5, 6, and the like) functional groups. These include the above-described polycarboxylic acids, polyfunctional amines, polyfunctional alcohols and polyfunctional aminoalcohols, reference to which is made here in their entirety.

The preparation of hyperbranched polyesteramines is preferably carried out with the use of AB₂ and/or AB₃ monomers which can be obtained by a reaction according to the Michael addition type.

In a first embodiment for the preparation of an AB₂ monomer by Michael addition, an aminoalcohol exhibiting a secondary amino group and two hydroxyl groups is reacted with a compound with an activated double bond, e.g. a vinylogous carbonyl compound.

Suitable aminoalcohols exhibiting a secondary amino group and two hydroxyl groups are, e.g., diethanolamine, dipropanolamine, diisopropanolamine, 2-amino-1,3-propanediol, 3-amino-1,2-propanediol, diisobutanolamine, dicyclohexanolamine, and the like.

Suitable compounds with an activated double bond are preferably chosen from esters of α,β-ethylenically unsaturated mono- and dicarboxylic acids with monovalent alcohols. The α,β-ethylenically unsaturated mono- and dicarboxylic acids are preferably chosen from acrylic acid, methacrylic acid, fumaric acid, maleic acid, itaconic acid, crotonic acid, maleic anhydride, monobutyl maleate and mixtures thereof. Preferably, acrylic acid, methacrylic acid and their mixtures are used as acid component. Preferred vinylogous compounds are methyl (meth)acrylate, methyl ethacrylates, ethyl (meth)acrylate, ethyl ethacrylate, n-butyl (meth)acrylate, tert-butyl (meth)acrylate, tert-butyl ethacrylate, n-octyl (meth)acrylate, 1,1,3,3-tetramethylbutyl (meth)acrylate, ethylhexyl (meth)acrylate, n-nonyl (meth)acrylate, n-decyl (meth)acrylate, n-undecyl (meth)acrylate, tridecyl (meth)acrylate, myristyl (meth)acrylate, pentadecyl (meth)acrylate, palmityl (meth)acrylate, heptadecyl (meth)acrylate, nonadecyl (meth)acrylate, arachidyl (meth)acrylate, behenyl (meth)acrylate, lignoceryl (meth)acrylate, ceryl (meth)acrylate, n-myricyl (meth)acrylate, palmitoleyl (meth)acrylate, oleyl (meth)acrylate, linoleyl (meth)acrylate, linolenyl (meth)acrylate, stearyl (meth)acrylate, lauryl (meth)acrylate and mixtures thereof. Methyl acrylate and n-butyl acrylate are particularly preferred.

In a second embodiment for the preparation of an AB₂ monomer by Michael addition, an aminoalcohol exhibiting a primary amino group and a hydroxyl group is reacted with a compound with an activated double bond.

Suitable aminoalcohols exhibiting a primary amino group and a hydroxyl group are the divalent aminoalcohols mentioned above for the preparation of hyperbranched polyesteramides, reference to which is made here in their entirety. Suitable compounds with activated double bond are those mentioned above in the first embodiment for the preparation of an AB₂ monomer by Michael addition.

In a third embodiment for the preparation of an AB₃ monomer by Michael addition, an aminoalcohol exhibiting a primary amino group, a secondary amino group and a hydroxyl group is reacted with a compound with three activated double bonds.

A suitable aminoalcohol exhibiting a primary amino group, a secondary amino group and a hydroxyl group is hydroxyethylethylenediamine. Suitable compounds with activated double bonds are those mentioned above in the first embodiment for the preparation of an AB₂ monomer by Michael addition.

The reaction according to the Michael addition type is preferably carried out in bulk or in a solvent which is inert under the reaction conditions. Suitable solvents are, e.g., high boiling alcohols, such as glycerol, aromatic hydrocarbons, such as benzene, toluene, xylene, and the like. The reaction is preferably carried out at a temperature in the range of 0 to 100°C, particularly preferably 5 to 80°C and especially 10 to 70°C. The reaction is preferably carried out in the presence of an inert gas, such as nitrogen, helium or argon, and/or in the presence of a radical inhibitor. General procedures for the addition of aminoalcohols to activated double bonds are known to a person skilled in the art. In a preferred embodiment, the preparation of the monomers by Michael addition and their subsequent reaction in a polycondensation are carried out in the form of a one-pot reaction.

The preparation of the hyperbranched polyesteramines from the abovementioned or from other ABₓ monomers is carried out according to conventional processes known to a person skilled in the art. In a suitable procedure, the preparation of suitable polyesteramines according to the invention is carried out with the use of the above-described AB₂ monomers which can be obtained by Michael addition. These can additionally be reacted in the presence of additional polyfunctional monomers. Suitable polyfunctional monomers are the polyfunctional aminoalcohols, polyfunctional amines, polyfunctional alcohols and polycarboxylic acids mentioned above in the preparation of the hyperbranched polyesteramides, reference to which is made here in their entirety. If desired, hydroxycarboxylic acids can additionally be used as chain extenders. These include, for example, lactic acid, glycolic acid, and the like.

In a suitable embodiment, the preparation of hyperbranched polyesteramines is carried out in the presence of an A₂B₂ monomer. This is preferably chosen from 2-amino-2-ethyl-1 ,3-propanediol, 2-amino-2-methyl-1,3-propanediol, 1-amino-2,3-propanediol, 2-amino-1,3-propanediol or 2-amino-1-phenyl-1,3-propanediol.

In an additional suitable embodiment, the preparation of the hyperbranched polyesteramines is carried out in the presence of a "core molecule". Suitable core molecules are, for example, trimethylolpropane, pentaerythritol, alkoxylated polyols, such as ethoxylated trimethylolpropane, ethoxylated glycerol, propoxylated trimethylolpropane or propoxylated glycerol, polyamines, such as tris(2-aminoethyl)amine, ethylenediamine or hexamethylenediamine, diethanolamine, diisopropanolamine, and the like. The addition of the core-forming monomers can be carried out at the beginning or in the course of the reaction.

In an additional suitable embodiment, the preparation of the hyperbranched polyesteramines is carried out with the use of an aromatic AB₂ monomer. Suitable aromatic AB₂ monomers are, e.g., amidol, aminobenzyl alcohol, 2-amino-5-chlorobenzyl alcohol, 2-amino-9-fluorenol, and the like.

The polycondensation reaction for the preparation of hyperbranched polyesteramines can be carried out in the presence of a catalyst. Suitable catalysts are the catalysts described above for the preparation of the hyperbranched polyesteramides, reference to which is made here in their entirety. Enzymes, such as lipases or esterases, are also suitable catalysts. Suitable lipases or esterases can be obtained from Candida cylindracea, Candida lipolytica, Candida rugosa, Candida antartica, Candida utilis, Chromobacterium viscosum, Geotrichum viscosum, Geotrichum candidum, Mucor javanicus, Mucor mihei, pig pancreas, Pseudomonas spp., Pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii, esterases from Bacillus spp. and Bacillus thermoglucosidasius. Preferred enzymes are Candida antartica lipases B and particularly preferably immobilized Candida antartica lipases B, as can be obtained commercially from Novozymes Biotech Inc. under the designation Novozyme 435.

Advantageously, with enzymatic catalysis, the reaction is possible at low temperatures in a range of approximately 40 to 90°C, preferably 60 to 70°C. Preferably, the enzymatic reaction is carried out in the presence of an inert gas, such as carbon dioxide, nitrogen, argon or helium.

According to a preferred ambodiment of the present invention, the hyperbranched polymers comprise hydrophobic moieties.

Hydrophobic moieties include in particular long chain aliphatic hydrocarbon radicals such as long-chain alkyl or alkenyl radicals, aromatic hydrocarbon radicals or araliphatic hydrocarbon radicals. These can be incorporated into the hyperbranched polymers during their synthesis by using suitable reactants, or subsequent to the synthesis of the hyperbranchend skeleton, e.g. in a polymer-analogous reaction.

For instance, long chain aliphatic carboxylic acids such as octanoic acid, decanoic acid, dodecanoic acid and tetraundecanoic acid; fatty acids such as stearic acid, oleic acid, lauric acid, palmitic acid, linolic acid and linolenic acid; aromatic carboxylic acids such as phthalic acid, isophthalic acid, terephthalic acid and trimellitic acid; cycloaliphatic carboxylic acids such as cyclohexane dicarboxylic acid; dicarboxylic acids such as octanedioic acid, decanedioic acid, dodecanedioic acid, tetradecanedioic acid and dimeric fatty acids are suitable for preparing hyperbranched polymers having hydrophobic moieties. Likewise aliphatic alcohols such as octanols, decanols, dodecanols and tetradecanols; fatty alcohols such as stearyl alcohol and oleyl alcohol; unsaturated alcohols such as allyl alcohol and crotyl alcohol; aromatic alcohols such as benzyl alcohol; cycloaliphatic alcohols such as cyclohexanol; mono fatty acid gylcerides such as glyceryl monostearate, glyceryl monooleate and glyceryl monopalmitate are suitable for preparing hyperbranched polymers having hydrophobic moieties.

Suitable hydrophobic groups for a polymer-analogous reaction are preferably chosen from saturated or unsaturated hydrocarbon residues with 8 to 40, preferably 9 to 35, in particular 10 to 30, carbon atoms. They are preferably alkyl, alkenyl, cycloalkyl or aryl residues. The cycloalkyl or aryl residues can exhibit 1, 2 or 3 substituents, preferably alkyl or alkenyl substituents.

For instance, for the polymer-analogous reaction, monovalent alcohols exhibiting one of the hydrophobic moieties mentioned herein can be used. Such alcohols and alcohol mixtures can, e.g., be obtained by hydrogenation of fatty acids from natural fats and oils or of synthetic fatty acids, e.g. from the catalytic oxidation of paraffins. Suitable alcohols and alcohol mixtures can furthermore be obtained by hydroformylation of olefins with simultaneous hydrogenation of the aldehydes, generally resulting in mixtures of straight-chain and branched primary alcohols (oxo alcohols). Suitable alcohols and alcohol mixtures can furthermore be obtained by partial oxidation of n-paraffins according to known processes, producing predominantly linear secondary alcohols. The essentially primary, straight-chain and even-numbered Ziegler alcohols obtainable by organoaluminum synthesis are furthermore suitable.

Suitable monovalent alcohols for the polymer-analogous reaction are, e.g., monofunctional alcohols, such as, e.g., octanol, nonanol, decanol, undecanol, dodecanol, tridecanol, tetradecanol, pentadecanol, hexadecanol, heptadecanol, octadecanol, and the like, and mixtures thereof.

According to a preferred embodiment, the hyperbranched polymer comprises hydrophobic moieties and is obtainable by
a) either reacting at least one dicarboxylic acid (A₂) having at least one polyisobutylene group or a derivative thereof, if appropriate in a mixture with a further dicarboxylic acid (D₂) or a derivative thereof, with at least one aliphatic or aromatic compound (Cₓ) which has at least 3 identical or different groups reactive toward acid groups or derivatives thereof,
   or
b) reacting at least one dicarboxylic acid (A₂) having at least one polyisobutylene group or a derivative thereof, if appropriate in a mixture with a further dicarboxylic acid (D₂) or derivatives thereof, with at least one aliphatic or aromatic compound (B₂) which has 2 identical or different groups reactive toward acid groups or derivatives thereof, and at least one aliphatic or aromatic compound (Cₓ) which has more than two identical or different groups reactive toward acid groups or derivatives thereof, with elimination of water or alcohols R¹OH where R¹ is a straight-chain or branched, aliphatic, cycloaliphatic, araliphatic or aromatic hydrocarbon radical having from 1 to 20 carbon atoms, and x is greater than 2, preferably between 3 and 8,
   or
c) reacting at least one aliphatic or aromatic compound (B₂) which has two identical or different groups reactive toward acid groups or a derivative thereof with at least one dicarboxylic acid (A₂) having polyisobutylene groups or a derivative thereof, if appropriate in a mixture with a further dicarboxylic acid (D₂) or a derivative thereof, and at least one aliphatic or aromatic carboxylic acid (D_{y}) or a derivative thereof which has more than two acid groups, with elimination of water or alcohols R¹OH where R¹ is a straight-chain or branched, aliphatic, cycloaliphatic, araliphatic or aromatic hydrocarbon radical having from 1 to 20 carbon atoms, and y is greater than 2, preferably between 3 and 8,
the ratio of the reactive partners in the reaction mixture being selected so as to establish a molar ratio of molecules having groups reactive toward acid groups to molecules having acid groups of from 2:1 to 1:2, preferably from 1.5:1 to 1:2, more preferably from 0.9:1 to 1:1.5 and most preferably of 1:1.

The compounds (A₂) are compounds which have at least one, preferably exactly one, polyisobutene group and at least two, preferably exactly two, carboxylic acid groups or derivatives thereof.

Reaction products of an ene reaction between polyisobutene and fumaryl chloride, fumaric acid, itaconic acid, itaconyl chloride, maleyl chloride, maleic anhydride and/or maleic acid, and/or the esters of the acids, are preferred.

In a preferred embodiment, they are 1:1 (mol/mol) reaction products of an ene reaction between a polyisobutene and fumaryl chloride, fumaric acid, itaconic acid, itaconyl chloride, maleyl chloride, maleic anhydride and/or maleic acid, and/or the esters of the acids, preferably with maleic anhydride or of maleyl chloride, more preferably with maleic anhydride.

The polyisobutenes are preferably those which have end groups formed from vinyl isomer and/or vinylidene isomer to an extent of at least 60 mol%.

The number-average molar mass Mₙ of the compounds (A₂) is preferably at least 100 g/mol, more preferably at least 800 g/mol. In general, the number-average molar mass Mn of the compounds (A₂) is up to 5000 g/mol, more preferably up to 2000 g/mol.

In a particularly preferred embodiment, the compounds (A₂) have a number-average molar mass Mₙ of 1000 +/- 500 g/mol.

Dicarboxylic acids (D₂) have exactly two carboxyl groups or derivatives thereof. These compounds may be aliphatic, cycloaliphatic, araliphatic or aromatic and have preferably up to 20 carbon atoms, more preferably up to 12 carbon atoms.

The dicarboxylic acids (D₂) include, for example, aliphatic dicarboxylic acids such as oxalic acid, malonic acid, succinic acid, glutaric acid, adipic acid, pimelic acid, suberic acid, azelaic acid, sebacic acid, undecanedicarboxylic acid, dodecanedicarboxylic acid, cis- and trans-cyclohexane-1,2-dicarboxylic acid, cis- and trans-cyclohexane-1,3-dicarboxylic acid, cis- and trans-cyclohexane-1,4-dicarboxylic acid, cis- and trans-cyclopentane-1,2-dicarboxylic acid, cis- and trans-cyclopentane-1,3-dicarboxylic acid. It is also possible to use aromatic dicarboxylic acids, for example phthalic acid, isophthalic acid or terephthalic acid. Unsaturated dicarboxylic acids such as maleic acid or fumaric acid can also be used.

The dicarboxylic acids mentioned may also be substituted by one or more radicals selected from

Examples of representatives of substituted dicarboxylic acids include: 2-methylmalonic acid, 2-ethylmalonic acid, 2-phenylmalonic acid, 2-methylsuccinic acid, 2-ethylsuccinic acid, 2-phenylsuccinic acid, itaconic acid, 3,3-dimethylglutaric acid.

It is also possible to use mixtures of two or more of the aforementioned dicarboxylic acids.

The dicarboxylic acids can be used either in protonated or unprotonated form, preferably in protonated form as such or in the form of derivatives.

Derivatives are preferably understood to mean
- the anhydrides in question, in monomeric or else polymeric form,
- mono- or dialkyl esters, preferably mono- or dimethyl esters or the corresponding mono- or diethyl esters, but also the mono- and dialkyl esters derived from higher alcohols, for example n-propanol, isopropanol, n-butanol, isobutanol, tert-butanol, n-pentanol, n-hexanol,
- and also mono- and divinyl esters and
- mixed esters, preferably methyl ether esters.

In the context of the present invention, it is also possible to use a mixture of a dicarboxylic acid and one or more of its derivatives. It is equally possible in the context of the present invention to use a mixture of two or more different derivatives of one or more dicarboxylic acids.

Particular preference is given to using malonic acid, succinic acid, glutaric acid, adipic acid, 1,2-, 1,3- or 1,4-cyclohexanedicarboxylic acid (hexahydrophthalic acids), phthalic acid, isophthalic acid, terephthalic acid or their mono- or dialkyl esters.

Compounds (D_{y}) have more than two carboxyl groups or derivatives thereof, preferably from 3 to 8, more preferably from 3 to 6. These compounds may be aliphatic, cycloaliphatic, araliphatic or aromatic and have preferably up to 20 carbon atoms, more preferably up to 12 carbon atoms.

Convertible tricarboxylic acids or polycarboxylic acids (D_{y}) are, for example, aconitic acid, 1,3,5-cyclohexanetricarboxylic acid, 1,2,4-benzenetricarboxylic acid, 1,3,5-benzenetricarboxylic acid, 1,2,4,5-benzenetetracarboxylic acid (pyromellitic acid) and mellitic acid, and low molecular weight polyacrylic acids, for example up to a molar mass up to 2000 g/mol, preferably up to 1000 g/mol and more preferably up to 500 g/mol.

Tricarboxylic acids or polycarboxylic acids (D_{y}) can be used in the reaction either as such or else in the form of derivatives.

Derivatives are preferably understood to mean
- the anhydrides in question, in monomeric or else polymeric form,
- mono-, di- or trialkyl esters, preferably mono-, di- or trimethyl esters or the corresponding mono-, di- or triethyl esters, but also the mono-, di- and triesters derived from higher alcohols, for example n-propanol, isopropanol, n-butanol, isobutanol, tert-butanol, n-pentanol, n-hexanol, and also mono-, di- or trivinyl esters,
- and mixed methyl ether esters.

It is also possible to use a mixture of a tri- or polycarboxylic acid and one or more of its derivatives, for example a mixture of pyromellitic acid and pyromellitic dianhydride. It is equally possible in the context of the present invention to use a mixture of a plurality of different derivatives of one or more tri- or polycarboxylic acids, for example a mixture of 1,3,5-cyclohexanetricarboxylic acid and pyromellitic dianhydride.

Groups reactive toward acid groups or derivatives thereof are preferably hydroxyl (-OH), primary amino (-NH₂), secondary amino (-NHR) or thiol groups (-SH), more preferably hydroxyl or primary amino groups and most preferably a hydroxyl group.

Secondary amino groups can be substituted by C₁-C₁₀-alkyl, C₃-C₁₂-cycloalkyl, aralkyl or C₆-C₁₄-aryl as R radicals.

The compounds reactive toward acid groups (B₂) used according to the present invention are, for example, difunctional alcohols such as ethylene glycol, propane-1,2-diol, propane- 1,3-diol, butane-1,2-diol, butane-1,3-diol, butane-1,4-diol, butane-2,3-diol, pentane-1,2-diol, pentane-1,3-diol, pentane-1,4-diol, pentane-1,5-diol, pentane-2,3-diol, pentane-2,4-diol, hexane-1,2-diol, hexane-1,3-diol, hexane-1,4-diol, hexane-1,5-diol, hexane-1,6-diol, hexane-2,5-diol, heptane-1,2-diol, 1,7-heptanediol, 1,8-octanediol, 1,2-octanediol, 1,9-nonanediol, 1,2-decanediol, 1,10-decanediol, 1,2-dodecanediol, 1,12-dodecanediol, 1,5-hexadiene-3,4-diol, 1,2-or1,3-cyclopentanediol, 1,2-, 1,3- or 1,4-cyclohexanediol, 1,2-, 1,3- or 1,4-bis(hydroxymethyl)cyclohexane, bis(hydroxyethyl)cyclohexanes, neopentyl glycol, 2-methyl-2,4-pentanediol, 2,4-dimethyl-2,4-pentanediol, 2-methyl-1,3-pentanediol, 2-ethyl-1,3-hexanediol, 2-propyl-1,3-heptanediol, 2,4-diethyloctane-1,3-diol, 2,5-dimethyl-2,5-hexanediol, 2,2,4-trimethyl-1,3-pentanediol, pinacol, diethylene glycol, triethylene glycol, dipropylene glycol, tripropylene glycol, polyethylene glycols HO(CH₂CH₂O)ₙ-H or polypropylene glycols HO(CH[CH₃]CH₂O)ₙ-H, where n is an integer and n ≥ 4, polytetrahydrofurans having a molar mass up to 2000, polycaprolactones or mixtures of two or more representatives of the above compounds. It is possible for one or even both hydroxyl groups in the aforementioned diols to be substituted by SH groups. Preference is given to ethylene glycol, 1,2-propanediol, 1,3-propanediol, 1,4-butanediol, 1,5-pentanediol, 1,6-hexanediol, 1,8-octanediol, 1,3-and 1,4-bis(hydroxymethyl)cyclohexane, and also diethylene glycol, triethylene glycol, dipropylene glycol and tripropylene glycol.

The compounds (B₂) used may also be molecules having one hydroxyl and one amino group, for example ethanolamine, 2-aminopropanol, 3-aminopropanol, isopropanolamine, 2-, 3- or 4-amino-1-butanol, 6-amino-1-hexanol, N-methylethanolamine, 2-(ethylamino)ethanol, 1-(ethylamino)-2-propanol 2-(butylamino)ethanol, 2-(cyclohexylamino)ethanol, 2-amino-2-methyl-1-propanol, 2-(2-aminoethoxy)ethanol, 9-amino-3,6-dioxanonan-1-ol or 2-(phenylamino)ethanol.

The compounds (B₂) used are also difunctional amines, for example ethylenediamine, N-alkylethylenediamine, the propylenediamines (1,2-diaminopropane and 1,3-diaminopropane), 2,2-dimethyl-1 ,3-propylenediamine, N-alkylpropylenediamine, piperazine, tetramethylenediamine (1,4-diaminobutane), N-alkylbutylenediamine, N,N'-dimethylethylenediamine, pentanediamine, hexamethylenediamine, N-alkylhexamethylenediamine, heptanediamine, octanediamine, nonanediamine, decanediamine, dodecanediamine, hexadecanediamine, 1,3-diamino-2,2-diethylpropane, 1,3-bis(methylamino)propane, 1,5-diamino-2-methylpentane, 3-(propylamino)propylamine, N,N'-bis(3-aminopropyl)piperazine, N,N'-bis(3-aminopropyl)piperazine, isophoronediamine (IPDA), tolylenediamine, xylylenediamine, diaminodiphenylmethane, cyclohexylenediamine, bis(aminomethyl)cyclohexane, diaminodiphenyl sulfone, 2-butyl-2-ethyl-1,5-pentamethylenediamine, 2,2,4- or 2,4,4-trimethyl-1 ,6-hexamethylenediamine, 2-aminopropylcyclohexylamine, 3(4)-aminomethyl-1-methylcyclohexylamine, 1,4-diamino-4-methylpentane, amine-terminated polyoxyalkylene polyols (so-called Jeffamines from Huntsmann Corp., Houston, Texas) or amine-terminated polytetramethylene glycols.

Examples of such diamines are the so-called Jeffamines® D or ED series. The D series is amino-functionalized polypropylenediols composed of 3 - 4 1,2-propylene units (Jeffamine® D-230, mean molar mass 230), 6 - 7 1,2-propylene units (Jeffamine® D-400, mean molar mass 400), an average of approx. 34 1,2-propylene units (Jeffamine® D-2000, mean molar mass 2000) or an average of approx. 69 1,2-propylene units (Jeffamine® XTJ-510 (D-4000), mean molar mass 4000). These products may in part also be present in the form of amino alcohols. The ED series is diamines based on polyethylene oxides which have ideally been propoxylated on both sides, for example Jeffamine® HK-511 (XTJ-511) composed of 2 ethylene oxide and 2 propylene oxide units with a mean molar mass of 220, Jeffamine® XTJ-500 (ED-600) composed of 9 ethylene oxide and 3.6 propylene oxide units with a mean molar mass of 600 and Jeffamine® XTJ-502 (ED-2003) composed of 38.7 ethylene oxide and 6 propylene oxide units with a mean molar mass of 2000.

The compounds (B₂) may also have further functional groups, for example carboxyl groups or ester groups. Examples of such compounds are dimethylolpropionic acid, dimethylolbutyric acid or neopentyl glycol hydroxypivalate.

However, preferred compounds (B₂) do not bear any further functional groups apart from carboxyl groups or derivatives thereof.

Preferred compounds (B₂) are alcohols or amino alcohols, more preferably alcohols.

Compounds (Cₓ) have an average of more than 2, preferably from 3 to 8, more preferably from 3 to 6 groups reactive toward acid groups and derivatives thereof. They may be aliphatic, cycloaliphatic, araliphatic or aromatic and have generally not more than 100, preferably not more than 50, more preferably not more than 20 carbon atoms.

At least trifunctional compounds having groups reactive toward acid groups (Cₓ) comprise trifunctional or higher-functionality alcohols such as glycerol, trimethylolmethane, trimethylolethane, trimethylolpropane, 1,2,4-butanetriol, tris(hydroxymethyl) isocyanurate, tris(hydroxyethyl) isocyanurate (THEIC), pentaerythritol, diglycerol, triglycerol or higher condensation products of glycerol, di(trimethylolpropane), di(pentaerythritol), inositols, sorbitol or sugars, for example glucose, fructose or sucrose, trifunctional or higher-functionality polyetherols based on trifunctional or higher-functionality alcohols and ethylene oxide, propylene oxide or butylene oxide. Particular preference is given to glycerol, diglycerol, triglycerol, trimethylolethane, trimethylolpropane, 1,2,4-butanetriol, pentaerythritol, and their polyetherols based on ethylene oxide or propylene oxide.

Preference is given to compounds (B₂) or (Cₓ) compounds of the formula (Ia) to (Id), 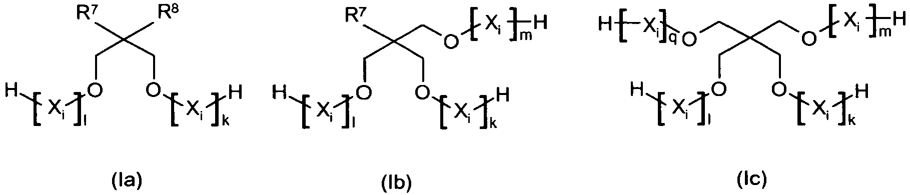 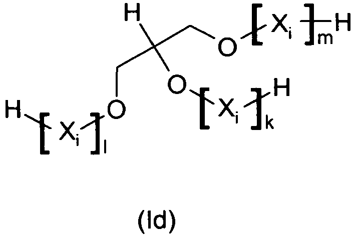 where
R⁷ and R⁸ are each independently hydrogen or C₁ - C₁₈-alkyl optionally substituted by aryl, alkyl, aryloxy, alkyloxy, heteroatoms and/or heterocycles,
k, l, m, q are each independently an integer from 1 to 15, preferably from 1 to 10 and more preferably from 1 to 7 and
each Xᵢ for i = 1 to k, 1 to I, 1 to m and 1 to q may each independently be selected from the group of -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- and -CHPh-CH₂-O-, preferably from the group of -CH₂-CH₂-O-, -CH₂-CH(CH₃)-O- and -CH(CH₃)-CH₂-O-, and more preferably -CH₂-CH₂-O-,
where Ph is phenyl and Vin is vinyl.

In these formulae, C₁ - C₁₈-alkyl optionally substituted by aryl, alkyl, aryloxy, alkyloxy, heteroatoms and/or heterocycles is, for example, methyl, ethyl, propyl, isopropyl, n-butyl, sec-butyl, tert-butyl, pentyl, hexyl, heptyl, octyl, 2-ethylhexyl, 2,4,4-trimethylpentyl, decyl, dodecyl, tetradecyl, heptadecyl, octadecyl, 1,1-dimethylpropyl, 1,1-dimethylbutyl, 1,1,3,3-tetramethylbutyl, preferably methyl, ethyl or n-propyl, most preferably methyl or ethyl.

Preference is given to one- to thirtyfold and particular preference to three- to twentyfold ethoxylated, propoxylated or mixed ethoxylated and propoxylated and especially exclusively ethoxylated neopentyl glycol, trimethylolpropane, trimethylolethane or pentaerythritol or glycerol.

At least trifunctional compounds having groups reactive toward acid groups (Cₓ) further comprise trifunctional or higher-functionality amino alcohols such as tris(hydroxymethyl)amine, tris(hydroxyethyl)amine, tris(hydroxypropyl)amine, diethanolamine, dipropanolamine, diisopropanolamine, di-sec-butanolamine, tris(hydroxymethyl)aminomethane, tris(hydroxyethyl)aminomethane, 3-amino-1,2-propanediol, 1-amino-1-deoxy-D-sorbitol and 2-amino-2-ethyl-1,3-propanediol.

At least trifunctional compounds having groups reactive toward acid groups (Cₓ) further comprise trifunctional or higher-functionality amines such as tris(2-aminoethyl)amine, tris(3-aminopropyl)amine, tris(aminohexyl)amine, trisaminohexane, 4-aminomethyl-1,8-octamethylenediamine, trisaminononane, diethylenetriamine (DETA), dipropylenetriamine, dibutylenetriamine, dihexylenetriamine, N-(2-aminoethyl)propanediamine, melamine, triethylenetetramine (TETA), tetraethylenepentamine (TEPA), isopropylenetriamine, dipropylenetriamine and N,N'-bis(3-aminopropylethylenediamine), oligomeric diaminodiphenylmethanes, N,N'-bis(3-aminopropyl)ethylenediamine, N,N'-bis(3-aminopropyl)butanediamine, N,N,N',N'-tetra(3-aminopropyl)ethylenediamine, N,N,N',N'-tetra(3-aminopropyl)butylenediamine, trifunctional or higher-functionality amine-terminated polyoxyalkylene polyols (so-called Jeffamines), trifunctional or higher-functionality polyethyleneimines or trifunctional or higher-functionality polypropyleneimines.

Examples of triamines are Jeffamine® T-403, a triamine based on a trimethylolpropane modified with 5 - 6 1,2-propylene units, Jeffamine® T-5000, a triamine based on a glycerol modified with approx. 85 1,2-propylene units, and Jeffamine® XTJ-509 (T-3000), a triamine based on a glycerol modified with 50 1,2-propylene units.

Preferred compounds (Cₓ) are alcohols or amino alcohols, more preferably alcohols.

The process is carried out in substance or in the presence of a solvent. Suitable solvents are, for example, hydrocarbons such as paraffins or aromatics. Particularly suitable paraffins are n-heptane and cyclohexane. Particularly suitable aromatics are toluene, ortho-xylene, meta-xylene, para-xylene, xylene as an isomer mixture, ethylbenzene, chlorobenzene and ortho- and meta-dichlorobenzene. Also suitable as solvents are ethers, for example dioxane or tetrahydrofuran and ketones, for example methyl ethyl ketone and methyl isobutyl ketone.

As already detailed above, unconverted polyisobutenes may also be present as inert diluents.

Further usable aromatic hydrocarbon mixtures are those which comprise predominantly aromatic C₇- to C₁₄-hydrocarbons and may comprise a boiling range from 110 to 300°C, more preferably toluene, o-, m- or p-xylene, trimethylbenzene isomers, tetramethylbenzene isomers, ethylbenzene, cumene, tetrahydronaphthalene and mixtures comprising them.

Examples of these are the Solvesso® brands from ExxonMobil Chemical, particularly Solvesso® 100 (CAS No. 64742-95-6, predominantly C₉ and C₁₀ aromatics, boiling range about 154 - 178°C), 150 (boiling range about 182 - 207°C) and 200 (CAS No. 64742-94-5), and the Shellsol® brands from Shell. Hydrocarbon mixtures of paraffins, cycloparaffins and aromatics are also commercially available under the names Kristallöl (for example Kristallöl 30, boiling range about 158 - 198°C, or Kristallöl 60: CAS No. 64742-82-1), petroleum spirit (for example likewise CAS No. 64742-82-1) or Solvent naphtha (light: boiling range about 155 - 180°C, heavy: boiling range about 225 - 300°C). The aromatics content of such hydrocarbon mixtures is generally more than 90% by weight, preferably more than 95% by weight, more preferably more than 98% by weight and most preferably more than 99% by weight. It may be sensible to use hydrocarbon mixtures with a particularly reduced content of naphthalene.

The amount of solvent added is at least 0.1% by weight based on the mass of the starting materials to be converted which are used, preferably at least 1% by weight and more preferably at least 10% by weight. It is also possible to use excesses of solvents based on the mass of starting materials to be converted which are used, for example from 1.01- to 10-fold. Amounts of solvent of more than 100 times the mass of starting materials to be converted which are used are not advantageous because the reaction rate declines significantly in the case of significantly lower concentrations of the reactants, which leads to uneconomic long reaction times.

To carry out this process, it is possible to work in the presence of a dehydrating agent as an additive, which is added at the start of the reaction. Suitable examples are molecular sieves, especially 4 A molecular sieve, MgSO₄ and Na₂SO₄. It is also possible to add further dehydrating agent during the reaction or to replace dehydrating agent with fresh dehydrating agent. It is also possible to distill off alcohol or water formed during the reaction and, for example, to use a water separator, in which case the water is removed with the aid of an azeotroping agent.

The process can be carried out in the absence of catalysts. However, when catalysts are employed, preference is given to using acidic inorganic, organometallic or organic catalysts or mixtures of a plurality of acidic inorganic, organometallic or organic catalysts.

In the context of the present invention, acidic inorganic catalysts are, for example, sulfuric acid, sulfates and hydrogensulfates, such as sodium hydrogensulfate, phosphoric acid, phosphonic acid, hypophosphorous acid, aluminum sulfate hydrate, alum, acidic silica gel (having a pH in water of ≤ 6, in particular ≤ 5) and acidic alumina. It is also possible, for example, to use aluminum compounds of the general formula Al(OR²)₃ and titanates of the general formula Ti(OR²)₄ as acidic inorganic catalysts, where the R² radicals may each be the same or different and are independently selected from butyl, isopropyl or 2-ethylhexyl. Preferred acidic organometallic catalysts are, for example, selected from dialkyltin oxides R³₂SnO or dialkyltin esters R³₂Sn(OR⁴)₂, where R³ and R⁴ may be selected from C₁-C₂₀-alkyl or C₃-C₁₂-cycloalkyl and may be the same or different. Particularly preferred representatives of acidic organometallic catalysts are dibutyltin oxide and dibutyltin dilaurate.

Preferred acidic organic catalysts are acidic organic compounds having, for example, phosphate groups, sulfonic acid groups, sulfate groups or phosphonic acid groups. Particular preference is given to sulfonic acids, for example para-toluenesulfonic acid. The acidic organic catalysts used may also be acidic ion exchangers, for example sulfonic acid-containing polystyrene resins which have been crosslinked with about 2 mol% of divinylbenzene.

It is also possible to use combinations of two or more of the aforementioned catalysts. It is also possible to use such organic or organometallic or else inorganic catalysts which are present in the form of discrete molecules in immobilized form, for example on silica gel or on zeolites.

When the use of acidic inorganic, organometallic or organic catalysts is desired, from 0.1 to 10% by weight, preferably from 0.2 to 2% by weight of catalyst is used in accordance with the invention.

The process according to the invention is preferably carried out under an inert gas atmosphere, i.e., for example, under carbon dioxide, nitrogen or noble gas, among which particular mention should be made of argon.

A gas inert under the reaction conditions can preferably be passed through the reaction mixture, so that volatile compounds are stripped out of the reaction mixture.

The process according to the invention is carried out at temperatures of from 60 to 250°C. Preference is given to working at temperatures of from 80 to 200°C, more preferably at from 100 to 180°C.

The pressure conditions of the process according to the invention are uncritical per se. It is possible to work at distinctly reduced pressure, for example at from 1 to 500 mbar. The process according to the invention can also be carried out at pressures above 500 mbar. For reasons of simplicity, preference is given to reaction at atmospheric pressure; but it is also possible to perform it at slightly elevated pressure, for example up to 1200 mbar. It is also possible to work under distinctly elevated pressure, for example at pressures up to 10 bar. Preference is given to reaction at atmospheric pressure and at reduced pressures.

The reaction time of the process according to the invention is typically from 10 minutes to 48 hours, preferably from 30 minutes to 24 hours and more preferably from 1 to 12 hours.

After the reaction has ended, the hyperbranched polymers can be isolated easily, for example by filtering off the catalyst and, if appropriate, removing the solvent, the removal of the solvent being carried out typically at reduced pressure. Further suitable workup methods are, for example, precipitation of the polymer after addition of water and subsequent washing and drying.

These hyperbranched polymers have, in addition to the polyisobutylene groups and the ester or amide groups which form the polymer skeleton, terminally or laterally, also at least three, preferably at least six, more preferably at least ten functional groups. The functional groups are acid groups and/or amino or hydroxyl groups. There is in principle no upper limit on the number of terminal or pendant functional groups, but products with a very high number of functional groups can have undesired properties, for example high viscosity. The hyperbranched polyesters that are useful in the present invention usually have not more than 500 terminal or pendant functional groups, preferably not more than 100 terminal or pendant functional groups.

In a further preferred embodiment, the inventive polymers, in addition to the functional groups already obtained by the reaction, may obtain further functional groups. The functionalization can be effected during the molecular weight buildup or else subsequently, i.e. after the actual polycondensation has ended.

When components which have further functional groups or functional elements in addition to hydroxyl, amino or carboxyl groups are added before or during the molecular weight buildup, a polymer is obtained with randomly distributed functionalities other than the carboxyl, amino or hydroxyl groups.

Such effects can be achieved, for example, by addition of compounds during the polycondensation which, in addition to hydroxyl groups, primary or secondary amino groups or carboxyl groups, bear further functional groups or functional elements such as mercapto groups, tertiary amino groups, ether groups, in particular polyethylene oxide and/or propylene oxide groups, carbonyl groups, sulfonic acids or derivatives of sulfonic acids, sulfinic acids or derivatives of sulfinic acids, phosphonic acids or derivatives of phosphonic acids, phosphinic acids or derivatives of phosphonic acids, silane groups, siloxane groups, aryl radicals or long-chain alkyl radicals, or fluorinated or perfluorinated aryl or alkyl radicals.

For modification with mercapto groups, it is possible, for example, to use mercaptoethanol. Tertiary amino groups can be obtained, for example, by incorporating N-methyldiethanolamine, N-methyldipropanolamine or N,N-dimethylethanolamine. Ether groups can be generated, for example, by incorporating difunctional or higher-functionality polyetherols by condensation. Reaction with long-chain alkanediols allows long-chain alkyl radicals to be introduced; the reaction with alkyl or aryl diisocyanates generates polymers having alkyl, aryl and urethane or urea groups.

For a modification, it is advantageously also possible to use compounds which bear at least one primary and/or secondary amino group and at least one carboxyl, sulfonic acid or phosphonic acid group.

Examples of these are amino acids, hydroxyalkyl- or -arylsulfonic acids, for example taurine or N-methyltaurine, or N-cyclohexylaminopropane- and -ethanesulfonic acid.

Examples of amino acids are glycine, alanine, β-alanine, valine, lysine, leucine, isoleucine, tert-leucine, phenylalanine, tyrosine, tryptophan, proline, aspartic acid, glutamic acid, asparagine, glutamine, serine, threonine, cysteine, methionine, arginine, histidine, 4-aminobutyric acid, cystine, citrulline, theanine, homocysteine, 4-hydroxyproline, alliin or ornithine.

Subsequent functionalization can be obtained by reacting the hyperbranched polymer obtained, in an additional process step, with a suitable functionalizing reagent which can react with the OH and/or NH and/or carboxyl groups of the polymer.

Hyperbranched polymers comprising hydroxyl groups or amino groups can be modified, for example, by adding molecules comprising isocyanate groups. For example, polymers comprising urethane groups or urea groups can be obtained by reacting with alkyl or aryl isocyanates.

In addition, hyperbranched polymers comprising hydroxyl groups or amino groups may also be converted to high-functionality polyether polyols by reacting with alkylene oxides, for example ethylene oxide, propylene oxide or butylene oxide. These compounds can then be obtained, for example, in water-soluble form.

It is also possible to incorporate additional hydrophilic resudues into a hyperbranched polymer of the invention. For instance, monovalent polyetheralcohols with a number-average molecular weight in the range of approximately 500 to 10 000 g/mol, preferably of 1000 to 5000 g/mol may be used. Monovalent polyetheralcohols can be obtained by alkoxylation of monovalent initiator molecules, such as, for example, methanol, ethanol or n-butanol, ethylene oxide or mixtures or ethylene oxide with other alkylene oxides, in particular propylene oxide, being used as alkoxylating agent.

The compositions of the present invention may contain one kind of hyperbranched polymer or a blend of two or more than two different hyperbranched polymers.

According to a particular embodiment, the seed treatment composition of the present invention comprises at least 1% by weight, preferably at least 2% by weight, and in particular at least 5% by weight of hyperbranched polymer.

According to a further particular embodiment, the seed treatment composition comprises at most 50% by weight, preferably at most 30% by weight, and in particular at most 20% by weight of hyperbranched polymer.

According to one aspect, the weight ratio of hyperbranched polymer to the active ingredient(s) is at least 0.1:1, preferably at least 0.2:1, and in particular at least 0.5:1.

According to another aspect, the weight ratio of hyperbranched polymer to the active ingredient(s) is at most 50:1, preferably at most 10:1, and in particular at most 5:1.

In the compositions of the present invention, the hyperbranched polymer is used as seed coating agent, especially as a binder to promote adhesion of the active ingredient(s) to the seeds. Adhesion of active ingredient(s) to the seeds can be determined by shearing the treated seeds and determining the active ingredient loading before and after shearing.

The present invention thus also relates to the use of a hyperbranched polymer as defined herein as seed coating agent.

The composition of the invention is a seed treatment composition. A seed treatment composition according to the present invention comprises at least one auxiliary agent that is specifically suited for the seed treatment, i.e. an auxiliary agent which in particular promotes adhesion of the active ingredient to and/or penetration into the seeds and/or otherwise improves stability and/or manageability of the composition or the seeds treated therewith. Thus, the seed treatment composition the present invention comprises at least one seed treatment auxiliary agent(s), and optionally one or more further auxiliary agents.

The compositions of the present invention comprise an agent suitable for seed coating materials, i.e. a hyperbranched polymer. The compositions may comprise further seed treatment auxiliary agents which are in particular selected from the group consisting of agents suitable for solid matrix priming materials, penetration enhancers suitable for promoting seed imbibition, colorants, antifreezes, and gelling agents.

According to the invention, the seed coating material of the compositions of the present invention comprises the hyperbranched polymer as binder (or sticker). Therefore, usually no further binders need to be added to the composition. However, combinations of the hyperbranched polymers with one or more than one conventional binder may be expedient.

Further binders (or stickers) are all customary binders (or stickers) which can be employed in seed treatment compositions. Further binders (or stickers) that are useful in the present invention preferably comprise an adhesive polymer that may be natural or partly or wholly synthetic and is without phytotoxic effect on the seed to be coated. Preferably, the further binder (or sticker) is biodegradable.

The further binder (or sticker) may be selected from polyesters, polyether esters, polyanhydrides, polyester urethanes, polyester amides; polyvinyl acetates; polyvinyl acetate copolymers; polyvinyl alcohols and tylose; polyvinyl alcohol copolymers; polyvinylpyrolidones; polysaccharides, including starches, modified starches and starch derivatives, dextrins, maltodextrins, alginates, chitosanes and celluloses, cellulose esters, cellulose ethers and cellulose ether esters including ethylcelluloses, methylcelluloses, hydroxymethylcelluloses, hydroxypropylcelluloses and carboxymethylcellulose; fats; oils; proteins, including casein, gelatin and zeins; gum arabics; shellacs; vinylidene chloride and vinylidene chloride copolymers; lignosulfonates, in particular calcium lignosulfonates; polyacrylates, polymethacrylates and acrylic copolymers; polyvinylacrylates; polyethylene oxide; polybutenes, polyisobutenes, polystyrene, polyethyleneamines, polyethylenamides; acrylamide polymers and copolymers; polyhydroxyethyl acrylate, methylacrylamide monomers; and polychloroprene.

Typically, the amount of further binders will not exceed 10% by weight. Preferably, it does not exceed 5 % by weight and in particular 1% by weight, based on the total weight of the composition. According to a particular embodiment, the compositions of the present invention do not contain significant amounts of further binders, i.e. they contain no further binder or the amount is below 0.5% by weight and preferably below 0.1% by weight, based on the total weight of the composition.

Optionally, the coating material also comprises one or more additional seed treatment auxiliary agents selected from the group consisting of fillers and plasticizers.

The filler can be an absorbent or an inert filler, such as are known in the art, and may include wood flours, cereal flours, tree bark mill, wood meal and nut shell meal, sugars, in particular polysaccharides, activated carbon, fine-grain inorganic solids, silica gels, silicates, clays, chalk, diatomaceous earth, calcium carbonate, magnesium carbonate, dolomite, magnesium oxide, calcium sulfate and the like. Clays and inorganic solids which may be used include calcium bentonite, kaolin, china clay, talc, perlite, mica, vermiculite, silicates, quartz powder, montmorillonite, attapulgite, bole, loess, limestone, lime and mixtures thereof. Sugars which may be useful include dextrin and maltodextrin. Cereal flours include wheat flour, oat flour and barley flour. The filler may also comprise fertilizer substances such as, for example, ammonium sulfate, ammonium phosphate, ammonium nitrate, ureas and mixtures thereof.

The filler is selected so that it will provide a proper microclimate for the seed, for example the filler is used to increase the loading rate of the active ingredients and to adjust the control-release of the active ingredients. The filler can aid in the production or process of coating the seed. The amount of filler can vary, but generally the weight of the filler components, if present, will be in the range of about 0.05 to about 75% of the total weight, more preferably about 0.1 to about 50%, and even more preferably about 0.5% to 15%.

It is preferred that the binder (or sticker) be selected so that it can serve as a matrix for the active ingredient(s). While the binders disclosed above may all be useful as a matrix, it is preferred that a continuous solid phase of one or more binder compounds is formed throughout which is distributed as a discontinuous phase the active ingredient(s). Optionally, a filler and/or other components can also be present in the matrix. The term "matrix" is to be understood to include what may be viewed as a matrix system, a reservoir system or a microencapsulated system. In general, a matrix system consists of the active ingredient(s) and a filler uniformly dispersed within a polymer, while a reservoir system consists of a separate phase comprising the active ingredient(s) that is physically dispersed within a surrounding, rate-limiting, polymeric phase. Microencapsulation includes the coating of small particles or droplets of liquid, but also to dispersions in a solid matrix.

Especially if the active ingredient(s) used in the coating is an oily type composition and little or no inert filler is present, it may be useful to hasten the drying process by drying the composition. This optional step may be accomplished by means well known in the art and can include the addition of fillers such as calcium carbonate, kaolin or bentonite clay, perlite, diatomaceous earth, or any absorbent material that is added preferably concurrently with the active ingredient(s) coating layer to absorb the oil or excess moisture. The amount of absorbent necessary to effectively provide a dry coating will be in the range of about 0.5 to about 10% of the weight of the seed.

Optionally, the coating material comprises a plasticizer. Plasticizers are typically used to make the film that is formed by the coating layer more flexible, to improve adhesion and spreadability, and to improve the speed of processing. Improved film flexibility is important to minimize chipping, breakage or flaking during storage, handling or sowing processes. Many plasticizers may be used; however, useful plasticizers include polyethylene glycol, oligomeric polyalkylene glycols, glycerol, alkylbenzylphthalates, in particular butylbenzylphthalate, glycol benzoates and related compounds. The range of plasticizer, if present, in the coating layer will be in the range of from about 0.1 % by weight to about 20% by weight.

Agents suitable for solid matrix priming materials which are useful in the present invention include polyacrylamide, starch, clay, silica, alumina, soil, sand, polyurea, polyacrylate, or any other material capable of absorbing or adsorbing the active ingredient(s) and releasing the active ingredient(s) into or onto the seed. It is useful to make sure that active ingredient(s) and the solid matrix material are compatible with each other. For example, the solid matrix material should be chosen so that it can release the active ingredient(s) at a reasonable rate, for example over a period of minutes, hours, or days.

Penetration enhancers suitable for promoting seed imbibition include agriculturally acceptable surface active compounds. The amount of penetration enhancers will usually not exceed 20% by weight, based on the total weight of the composition. Preferably, the amount of penetration enhancers, if present, will be in the range from 2% to 20% by weight.

Colorants according to the invention are all dyes and pigments which are customary for such purposes. In this context, both pigments, which are sparingly soluble in water, and dyes, which are soluble in water, may be used. Examples which may be mentioned are the colorants, dyes and pigments known under the names Rhodamin B, C. I. Pigment Red 112 and C. I. Solvent Red 1, Pigment Blue 15:4, Pigment Blue 15:3, Pigment Blue 15:2, Pigment Blue 15:1, Pigment Blue 80, Pigment Yellow 1, Pigment Yellow 13, Pigment Red 48:2, Pigment Red 48:1, Pigment Red 57:1, Pigment Red 53:1, Pigment Orange 43, Pigment Orange 34, Pigment Orange 5, Pigment Green 36, Pigment Green 7, Pigment White 6, Pigment Brown 25, Basic Violet 10, Basic Violet 49, Acid Red 51, Acid Red 52, Acid Red 14, Acid Blue 9, Acid Yellow 23, Basic Red 10, Basic Red 108. The amount of colorants, if present, will usually not exceed 20 % by weight of the composition and preferably ranges from 1 to 15 % by weight, based on the total weight of the composition. It is generally preferred if the colorants are also active as repellents for warm-blooded animals, e. g. iron oxide, TiO₂, Prussian blue, anthraquinone dyes, azo dyes and metal phtalocyanine dyes.

Antifreezes which can be employed especially for aqueous compositions are in principle all those substances which lead to a depression of the melting point of water.

Suitable antifreezes comprise alcohols such as methanol, ethanol, isopropanol, butanols, glycol, glycerine, diethylenglycol and the like. Typically, the amount of antifreeze will not exceed 20% by weight and, if present, frequently ranges from 1 to 15% by weight, based on the total weight of the composition.

Gelling agents which are suitable are all substances which can be employed for such purposes in agrochemical compositions, for example cellulose derivatives, polyacrylic acid derivatives, xanthan, modified clays, in particular organically modified phyllosilicates and highly-dispersed silicates. A particularly suitable gelling agent is carrageen (Satiagel^{®}). Usually, the amount of gelling agent will not exceed 5% by weight of the composition and, if present, preferably ranges from 0.5 to 5% by weight, based on the total weight of the composition.

Further auxiliary agents that may be present in the seed treatment composition include solvents, wetters, dispersants, emulsifiers, surfactants, thickeners, protective colloids, antifoams, and preservatives.

Water is a preferred solvent. According to a particular embodiment, the compositions of the present invention comprise at least 5% by weight, preferably at least 10% by weight and in particular at least 30% by weight of water. On the other hand, the compositions of the present invention usually comprise at most 99% by weight, preferably at most 90% by weight and in particular at most 80% by weight of water.

Further examples of suitable solvents are organic solvents such as aromatic solvents (for example Solvesso products, xylene), paraffins (for example mineral oil fractions), alcohols (for example methanol, butanol, pentanol, benzyl alcohol), ketones (for example cyclohexanone, gamma-butyrolactone), pyrrolidones (NMP, NOP), acetates (glycol diacetate), glycols, fatty acid dimethylamides, fatty acids and fatty acid esters. In principle, solvent mixtures may also be used. However, according to a particular embodiment, the compositions of the present invention contain less than 15% by weight and preferably less than 6% by weight of said organic solvents.

Surface active compounds are all those surfactants which are suitable for formulating agrochemical actives, in particular for active ingredient(s), and which may be nonionic, cationic, anionic or amphoteric. According to their action, surfactants - sometimes referred to as "additives" - may be divided into wetters, dispersants, emulsifiers or protective colloids; however, these particular groups may overlap and cannot be divided strictly. Typically, the amount of surfactants will not exceed 20% by weight and, if present, frequently ranges from 1 to 15% by weight, based on the total weight of the composition.

Suitable wetters are all those substances which promote wetting and which are conventionally used for formulating agrochemical active ingredients. Alkylnaphthalenesulfonates such as diisopropyl- or diisobutylnaphthalenesulfonates can be used preferably.

Dispersants and/or emulsifiers which are suitable are all nonionic, anionic and cationic dispersants or emulsifiers conventionally used for formulating agrochemical active ingredients. The following can preferably be used: nonionic or anionic dispersants and/or emulsifiers or mixtures of nonionic or anionic dispersants and/or emulsifiers.

Suitable nonionic dispersants and/or emulsifiers which may be employed are, in particular, ethylene oxide/alkylene oxide block copolymers, alkylphenol polyglycol ethers and tristryrylphenol polyglycol ethers, for example polyoxyethylene octylphenol ether, ethoxylated isooctylphenol, octylphenol, nonylphenol, alkylphenol polyglycol ether, tributylphenyl polyglycol ether, tristearylphenyl polyglycol ether, alkylaryl-polyether alcohols, alcohol and fatty alcohol ethylene oxide condensates, ethoxylated castor oil, polyoxyethylene alkyl ether, ethoxylated polyoxypropylene, lauryl alcohol polyglycol ether acetal, sorbitol esters and methyl cellulose.

Suitable anionic dispersants and/or emulsifiers which may be employed are, in particular, alkali metal, alkaline earth metal and ammonium salts of ligninsulfonic acid, naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore arylsulfonate/formaldehyde condensates, for example condensates of sulfonated naphthalene and naphthalene derivatives with formaldehyde, condensates of naphthalene or of naphthalenesulfonic acid with phenol and formaldehyde, ligninsulfonates, lignin-sulfite waste liquors, phosphated or sulfated derivatives of methylcellulose, and salts of polyacrylic acid.

Thickeners are typically water-soluble polymers which exhibit suitable plastic properties in an aqueous medium. Examples include gum arabic, gum karaya, gum tragacanth, guar gum, locust bean gum, xanthan gum, carrageenan, alginate salt, casein, dextran, pectine, agar, 2-hydroxyethyl starch, 2-aminoethyl starch, 2-hydroxyethyl cellulose, methyl cellulose, carboxymethyl cellulose salt, cellulose sulfate salt. Xanthan gum is preferred. Usually, the amount of thickener will not exceed 20 % by weight and, if present, frequently ranges from 1 to 15 % by weight, based on the total weight of the composition.

Protective colloids are typically water soluble, amphiphilic polymers. Examples include proteins und denatured proteins such as casein, polysaccharides such as water soluble starch derivatives and cellulose derivatives, in particular hydrophobic modified starch and celluloses, furthermore polycarboxylates such as polyacrylic acid and acrylic acid copolymers, polyvinylalcohol, polyvinylpyrrolidone, vinylpyrrolidone copolymers, polyvinyl amines, polyethylene imines and polyalkylene ethers. Usually, the amount of protective colloid will not exceed 3 % by weight of the composition and, if present, preferably ranges from 0.1 to 2 % by weight, based on the total weight of the composition.

Antifoams which can be employed are all those substances which inhibit the development of foam and which are conventionally used for formulating agrochemical active ingredients. Silicone antifoams, i.e. aqueous silicon emulsions (e.g. Sitikon® SRE by Wacker or Rhodorsil® by Rhodia), long chain alcohols, fatty acids and salts thereof, e.g. and magnesium stearate are particularly suitable. Usually, the amount of antifoam will not exceed 3 % by weight of the composition and, if present, preferably ranges from 0.1 to 2 % by weight, based on the total weight of the composition.

Preservatives which can be employed are all preservatives used for such purposes in agrochemical compositions. Examples which may be mentioned are dichlorophene, isothiazolenes and isothiazolones such as 1,2-benzisothiazol-3(2H)-one, 2-methyl-2H-isothiazol-3-one-hydrochloride, 5-chloro-2-(4-chlorobenzyl)-3(2H)-isothiazolone, 5-chloro-2-methyl-2H-isothiazol-3-one, 5-chloro-2-methyl-2H-isothiazol-3-one, 5-chloro-2-methyl-2H-isothiazol-3-one-hydrochloride, 4,5-dichloro-2-cyclohexyl-4-isothiazolin-3-one, 4,5-dichloro-2-octyl-2H-isothiazol-3-one, 2-methyl-2H-isothiazol-3-one, 2-methyl-2H-isothiazol-3-one-calcium chloride complex, 2-octyl-2H-isothiazol-3-one and benzyl alcohol hemiformal. Usually, the amount of preservatives will not exceed 2 % by weight of the composition and, if present, preferably ranges from 0.01 to 1 % by weight, based on the total weight of the composition.

The skilled person is essentially familiar with agricultural compositions of active ingredients (see, for instance, Ullmann's Encyclopedia of Industrial Chemistry, Fungicides Chapter 4, 5th ed. on CD-ROM, Wiley-VCH, 1997 and Mollet, H., Grubemann, A., Formulation technology, Wiley VCH Verlag GmbH, Weinheim (Federal Republic of Germany), 2001, which is incorporated herein by reference in its entirety). Examples include water-soluble concentrates (SL, LS), dispersible concentrates (DC), emulsifiable concentrates (EC), emulsions (EW, EO, ES), suspensions (SC, OD, FS), water-dispersible granules (WG, SG), water-dispersible or water-soluble powders (WP, SP, SS, WS), dusts or dustable powders (DP, DS), granules (GR, FG, GG, MG), ULV solutions (UL) and gel formualtions (GF). For seed treatment purposes, such compositions may be applied as such or after addition of a suitable liquid, in particular water, in order to dissolve, emulsify, disperse, supend or dilute the composition. The type of the ready-to-use preparation applied to the seeds thus depends on the type of composition used and the method used for treating the seeds.

The compositions can be prepared in the known manner, for example by extending the active ingredient component with one ore more auxiliary agents (see e.g. for review US 3,060,084, EP-A 707 445 (for liquid concentrates), Browning, "Agglomeration", Chemical Engineering, Dec. 4, 1967, 147-48, Perry's Chemical Engineer's Handbook, 4th Ed., McGraw-Hill, New York, 1963, pages 8-57 and et seq. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 and Mollet, H., Grubemann, A., Formulation technology, Wiley VCH Verlag GmbH, Weinheim (Germany), 2001, 2. D. A. Knowles, Chemistry and Technology of Agrochemical Formulations, Kluwer Academic Publishers, Dordrecht, 1998 (ISBN 0-7514-0443-8), all of which being incorporated by reference in their entirety).

The following formulations simply illustrate said compositions, with a suitable amount of hyperbranched polymer being added to the formulation:
A Water-soluble concentrates, solutions (SL, LS)
   10 parts by weight of the active ingredient(s) and, optionally, wetters or other auxiliaries are dissolved in 90 parts by weight of water or a water-soluble solvent, whereby a formulation with 10 % (w/w) of the active ingredient(s) is obtained. Dilution with water gives a solution.
B Dispersible concentrates (DC)
   20 parts by weight of the active ingredient(s) are dissolved in 70 parts by weight of cyclohexanone with addition of 10 parts by weight of dispersant(s), for example polyvinylpyrrolidone, whereby a formulation with 20% (w/w) of the active ingredient(s) is obtained. Dilution with water gives a dispersion.
C Emulsifiable concentrates (EC)
   15 parts by weight of the active ingredient(s) are dissolved in 70 parts by weight of an organic solvent with addition of calcium dodecylbenzenesulfonate and castor oil ethoxylate (in each case 5 parts by weight), whereby a formulation with 15% (w/w) of the active ingredient(s) is obtained. Dilution with water gives an emulsion.
D Emulsions (EW, EO, ES)
   25 parts by weight of the active ingredient(s) are dissolved in 35 parts by weight of an organic solvent with addition of calcium dodecylbenzenesulfonate and castor oil ethoxylate (in each case 5 parts by weight). This mixture is introduced into 30 parts by weight of water by means of an emulsifier machine (e.g. Ultraturrax) and made into a homogeneous emulsion, whereby a formulation with 25% (w/w) of the active ingredient(s) is obtained. Dilution with water gives an emulsion.
E Suspensions (SC, OD, FS)
   In an agitated ball mill, 20 parts by weight of the active ingredient(s) are comminuted with addition of 10 parts by weight of dispersant(s) and/or wetter(s) and 70 parts by weight of water or of an organic solvent to give a fine active compound(s) suspension, whereby a formulation with 20% (w/w) of the active ingredient(s) is obtained. Dilution with water gives a stable suspension of the active ingredient(s).
F Water-dispersible granules (WG, SG)
   50 parts by weight of the active ingredient(s) are ground finely with addition of 50 parts by weight of dispersant(s) and/or wetter(s) and made as water-dispersible or water-soluble granules by means of technical appliances (for example extrusion, spray tower, fluidized bed), whereby a formulation with 50% (w/w) of the active ingredient(s) is obtained. Dilution with water gives a stable dispersion or solution of the active compound(s).
G Water-dispersible and water-soluble powders (WP, SP, SS, WS)
   75 parts by weight of the active ingredient(s) are ground in a rotor-stator mill with addition of 25 parts by weight of dispersant(s) and/or wetter(s), and silica gel, whereby a formulation with 75% (w/w) of the active ingredient(s) is obtained. Dilution with water gives a stable dispersion or solution of the the active ingredient(s).
H Gel formulation (GF)
   In an agitated ball mill, 20 parts by weight of the active ingredient(s) are comminuted with addition of 10 parts by weight of dispersant(s), 1 part by weight of a gelling agent and 70 parts by weight of water or of an organic solvent to give a fine active compound(s) suspension, whereby a formulation with 20% (w/w) of the active ingredient(s) is obtained. Dilution with water gives a stable suspension of the active ingredient(s).
I Dusts and dustable powders (DP, DS)
   5 parts by weight of the active ingredient(s) are ground finely and mixed intimately with 95 parts by weight of finely divided kaolin. This gives a dustable product having 5% (w/w) of the active ingredient(s).
J Granules (GR, FG, GG, MG),
   0.5 parts by weight of the active ingredient(s) is ground finely and associated with 95.5 parts by weight of carriers, whereby a formulation with 0.5% (w/w) of the active ingredient(s) is obtained. Current methods are extrusion, spray-drying or the fluidized bed.
K ULV solution (UL)
   10 parts by weight of the active ingredient(s) are dissolved in 90 parts by weight of an organic solvent. This gives a product having 10% (w/w) of the active ingredient(s).

Formulations A-K can be diluted with water before application or directly applied.

For the seed treatment according to the present invention, suspensions are preferred. Further, gel formulations are suitable.

According to a particular embodiment of present invention, the seed treatment composition is a liquid or is applied as a liquid. Preference is given to a suspension and especially an aqueous suspension. The suspended particles are active ingredient(s) or auxiliary agents having a melting point above 30°C.

According to the present invention, the following formulations are particularly preferred: flowable concentrates (especially FS). This formulation can be applied to the seed diluted or undiluted.

According to a particular embodiment, the invention relates to a FS formulation. Typcially, an FS formulation may comprise 1-800 g/l of the active ingredient(s), 1-200 g/l dispersant, 0 to 200 g/l antifreezing agent, 1 to 400 g/l of a hyperbranched polymer, 0 to 200 g/l of a colorant and up to 1 liter of a solvent, preferably water.

According to a further particular embodiment, the seed treatment composition of the present invention is a seed coating formulation.

Such seed coating formulations comprise the active ingredient(s), at least one binder (or sticker), i.e., a hyperbranched polymer as defined herein, and optionally at least one further auxiliary agent that is selected from the group consisting of fillers and plasticizers.

Seed coating formulations comprising binders, fillers and/or plasticizers are well-known in the art. Seed coating formulations are disclosed, for example, in U.S. Pat. Nos. 5,939,356, 5,882,713, 5,876,739, 5,849,320, 5,834,447, 5,791,084, 5,661,103, 5,622,003, 5,580,544, 5,328,942, 5,300,127, 4,735,015, 4,634,587, 4,383,391, 4,372,080, 4,339,456, 4,272,417 and 4,245,432, among others.

The amount of the active ingredient(s) that is included in the coating formulation will vary depending upon the type of seed, but the coating formulation will contain an amount of the active ingredient(s) that is pesticidally effective. In general, the amount of the active ingredient(s) in the coating formulation will range from about 0.005 to about 75% of the total weight. A more preferred range for the active ingredient(s) is from about 0.01 to about 40%; more preferred is from about 0.05 to about 20%.

The exact amount of the active ingredient(s) that is included in the coating formulation is easily determined by one skilled in the art and will vary depending upon the size and other characteristics (surface structure etc.) of the seed to be coated. The active ingredient(s) of the coating formulation must not inhibit germination of the seed and should be efficacious in protecting the seed and/or the plant during that time in the target pest's life cycle in which it causes injury to the seed or plant. In general, the coating will be efficacious for approximately 0 to 120 days, preferably for approximately 0 to 60 days, after sowing.

The coating formulations formed with the active ingredient(s) are capable of effecting a slow rate of release of the active ingredient(s) by diffusion or movement through the matrix into the seed or to the surrounding medium.

The present invention also relates to the use of a composition as defined herein for treating seed.

The present invention also relates to a method of treating seed with a composition described herein, which comprises applying an effective amount of a composition as defined herein to a lot of seeds.

The term "batch" or "lot" means a group of seeds that are undergoing the seed treatment. The amount and weight of the seeds can vary depending on the treatment.

The term "loading" refers to the actual amount of an active ingredient or a hyperbaranched polymer that is adhered onto each seed, based on bulk amount of seed.

As used herein, the term "seed" denotes any resting stage of a plant that is physically detached from the vegetative stage of a plant and/or may be stored for prolonged periods of time and/or can be used to re-grow another plant individual of the same species. Here, the term "resting" refers to a state wherein the plant retains viability, within reasonable limits, in spite of the absence of light, water and/or nutrients essential for the vegetative (i.e. non-seed) state. In particular, the term refers to true seeds but does not embraces plant propagules such as suckers, corms, bulbs, fruit, tubers, grains, cuttings and cut shoots.

As used herein, the term "plant" means an entire plant or parts thereof. The term "entire plant" refers to a complete plant individual in its vegetative, i.e. non-seed stage, characterized by the presence of an arrangement of roots, shoots and foliage, depending on the developmental stage of the plant also flowers and/or fruits, all of which are physically connected to form an individual which is, under reasonable conditions, viable without the need for artificial measures. The term may also refer to an entire plant harvested as such.

The term "plant parts" refers to roots, shoots, foliage, flowers or other parts of the vegetative stage of the plant, which, when dislodged and disconnected from the rest, are incapable of survival, unless supported by artificial measures or able to re-grow the missing parts to form an entire plant. As used herein, fruits are also considered as plant parts.

As used herein, the term "root" refers to parts of a plant which are normally, in order to fulfill their physiological functions, located beneath the soil surface. Preferably, the term denotes the parts of a plant which are below the seed and have directly emerged from the latter, or from other roots, but not from shoots or foliage.

As used herein, the "shoots and foliage" of a plant are to be understood to be the shoots, stems, branches, leaves and other appendages of the stems and branches of the plant after the seed has sprouted, but not including the roots of the plant. It is preferable that the shoots and foliage of a plant be understood to be those non-root parts of the plant that have grown from the seed and are located a distance of at least one inch away from the seed from which they emerged (outside the region of the seed), and more preferably, to be the non-root parts of the plant that are at or above the surface of the soil.

As used herein, "fruits" are considered to be the parts of a plant which contain seeds and/or serve to spread seeds, and/or which may be removed from a plant without impairing its viability.

According to the present invention, the seed treatment comprises applying a composition of the invention to a seed. Although the present method can be applied to a seed in any physiological state, it is preferred that the seed be in a sufficiently durable state that it incurs no significant damage during the treatment process. Typically, the seed is a seed that has been harvested from the field; removed from the plant; and/or separated from the fruit and any cob, pod, stalk, outer husk, and surrounding pulp or other non-seed plant material. The seed is preferably also biologically stable to the extent that the treatment would cause no biological damage to the seed. In one embodiment, for example, the treatment can be applied to seed that has been harvested, cleaned and dried to a moisture content below about 15% by weight. In an alternative embodiment, the seed can be one that has been dried and then primed with water and/or another material and then re-dried before or during the treatment with a composition of the invention.

According to a preferred embodiment of the invention, the seed to be treated is thus substantially dry. "Substantially dry" seed includes seed that has a moisture content which results if the seed is allowed to equilibrate in an air atmosphere at 20 to 30°C and 30-90% relative humidity, e.g. at 25°C and 50 % relative humidity.

The term seed treatment comprises all suitable seed treatment and especially seed dressing techniques known in the art, such as seed coating (e.g. seed pelleting), seed dusting and seed imbibition (e.g. seed soaking). Here, "seed treatment" refers to all methods that bring seeds and a composition of the invention into contact with each other, and "seed dressing" to methods of seed treatment which provide the seeds with an amount of the active ingredient, i.e. which generate a seed comprising the active ingredient. In principle, the treatment can be applied to the seed at any time from the harvest of the seed to the sowing of the seed. The seed can be treated immediately before, or during, the planting of the seed, for example using the "hopper-box" or "planter-box" method. However, the treatment may also be carried out several weeks or months, for example up to 12 months, before planting the seed, for example in the form of a seed dressing treatment, without a substantially reduced efficacy being observed.

Expediently, the treatment is applied to unsown seed. As used herein, the term "unsown seed" is meant to include seed at any period from the harvest of the seed to the sowing of the seed in the ground for the purpose of germination and growth of the plant. Preferably, the seed is not a pregerminated seed such as a pregerminated rice seed.

When it is said that unsown seed is "treated", such treatment is not meant to include those practices in which the pesticide is applied to the soil, rather than directly to the seed.

By applying the treatment to the seed prior to the sowing of the seed the operation is simplified. In this manner, seeds can be treated, for example, at a central location and then dispersed for planting. This permits the person who plants the seeds to avoid the handling and use of the active ingredient and to merely handle and plant the treated seeds in a manner that is conventional for regular untreated seeds, which reduces human exposure.

Specifically, the seed treatment follows a procedure in which the seed is exposed to the specifically desired amount of a preparation comprising the active ingredient(s). The preparation may be a composition of the present invention that is applied as such or after previously diluting it, e.g. with water; for instance, it may be expedient to dilute seed treatment compositions 2-10 fold leading to concentrations in the ready-to-use compositions of 0.01 to 60% by weight active compound by weight, preferably 0.1 to 40% by weight. In some instances, it may be expedient to add the hyperbranched polymers of the present invention to a composition that has no or insufficient amounts of binder. Upon addition of the hyperbranched polymers and optional dilution with water the resulting composition is suitable for seed treatment.

Thus, the active ingredient concentrations in ready-to-use preparation can be varied within substantial ranges. In general, they are in the range from 0.01 and 80% by weight, frequently in the range from 0.1 to 50 % by weight, preferably in the range from 0.5 and 20% by weight, based on the total weight of the preparation. The active ingredients can also successfully be used in concentrated form, it being possible to apply, to the seed, preparations with more than 80% by weight of active ingredient, or even the active ingredient without additions. The amount of additives will generally not exceed 30% by weight, preferably 20% by weight, and is, in particular, in the range of from 0.1 to 20% by weight, in each case based on the total weight of the preparation.

Usually, a device which is suitable for seed treatment, for example a mixer for solid or solid/liquid components, is employed until the preparation is distributed uniformly on the seed. Thus, the preparation can be applied to seeds by any standard seed treatment methodology, including but not limited to mixing in a container (e.g., a bottle, bag or tumbler), mechanical application, tumbling, spraying, and immersion. If appropriate, this is followed by drying.

Particular embodiments of the present invention comprise seed coating and imbibition (e.g. soaking). "Coating" denotes any process that endows the outer surfaces of the seeds partially or completely with a layer or layers of non-plant material, and "imbibition" any process that results in penetration of the active ingredient(s) into the germinable parts of the seed and/or its natural sheath, (inner) husk, hull, shell, pod and/or integument. The invention therefore also relates to a treatment of seeds which comprises providing seeds with a coating that comprises the active ingredient(s), and to a treatment of seeds which comprises imbibition of seeds with the active ingredient(s).

Coating is particularly effective in accommodating high loads of the active ingredient(s), as may be required to treat typically refractory pests, while at the same time preventing unacceptable phytotoxicity due to the increased load of the active ingredient(s).

Coating may be applied to the seeds using conventional coating techniques and machines, such as fluidized bed techniques, the roller mill method, rotostatic seed treaters, and drum coaters. Other methods such as the spouted beds technique may also be useful. The seeds may be pre-sized before coating. After coating, the seeds are typically dried and then transferred to a sizing machine for sizing.

Such procedures are known in the art. Seed coating methods and apparatus for their application are disclosed in, for example, U.S. Pat. Nos. 5,918,413, 5,891,246, 5,554,445, 5,389,399, 5,107,787, 5,080,925, 4,759,945 and 4,465,017.

In another particular embodiment, the solid the active ingredient(s), for instance as a solid fine particulate formulation, e.g. a powder or dust, can be mixed directly with seeds. Optionally, a sticking agent can be used to adhere the solid, e.g. the powder, to the seed surface. For example, a quantity of seed can be mixed with a sticking agent (which increases adhesion of the particles on the surface of the seed) and optionally agitated to encourage uniform coating of the seed with the sticking agent. For example, the seed can be mixed with a sufficient amount of sticking agent, which leads to a partial or complete coating of the seed with sticking agent. The seed pretreated in this way is then mixed with a solid formulation containing the active ingredient(s) to achieve adhesion of the solid formulation on the surface of the seed material. The mixture can be agitated, for example by tumbling, to encourage contact of the sticking agent with the active ingredient(s), thereby causing the solid the active ingredient(s) to stick to the seed.

Another particular method of treating seed with the active ingredient(s) is imbibition. For example, seed can be combined for a period of time with an aqueous solution comprising from about 1% by weight to about 75% by weight of the active ingredient(s) in a solvent such as water. Preferably the concentration of the solution is from about 5% by weight to about 50% by weight, more preferably from about 10% by weight to about 25% by weight. During the period that the seed is combined with the solution, the seed takes up (imbibes) at least a portion of the active ingredient(s). Optionally, the mixture of seed and solution can be agitated, for example by shaking, rolling, tumbling, or other means. After the imbibition process, the seed can be separated from the solution and optionally dried in a suitable manner, for example by patting or air-drying.

In yet another particular embodiment of the present invention, the active ingredient(s) can be introduced onto or into a seed by use of solid matrix priming. For example, a quantity of the active ingredient(s) thereof can be mixed with a solid matrix material, and then the seed can be placed into contact with the solid matrix material for a period to allow the active ingredient(s) to be introduced to the seed. The seed can then optionally be separated from the solid matrix material and stored or used, or, preferably, the mixture of solid matrix material plus seed can be stored or planted/sown directly.

In each embodiment of the invention, it is preferred that the composition of the invention is applied to a seed in an effective amount, that is, an amount sufficient to provide sufficient active ingredient, e.g. for protection against pests, to the seed and the plant that grows from the seed. A seed treatment according to the present invention is therefore for protecting not only the seed but also the plant that grows from the seed.

As used herein, "protection" is achieved if the percent of feeding damage to the seed and/or the plant at 10 days after infestation (DAI) with the pest is significantly reduced for treated seeds or plants grown from treated seeds as compared to untreated seeds or plants grown from untreated seeds. In order to be effective, the active ingredient is generally employed in an amount of from 0.1 to 500 g, preferably 0.5 to 200 g, and in particular 0.75 to 100 g, per 100 kilograms of seed.

According to the present invention one purpose of said seed treatment is to control a pest. Such a seed treatment thus involves a pesticidal effect or a pesticidal activity providing protection against damage done by the pest to a seed and/or a plant grown from the seed. Seed treatment can especially be used to protect seeds and seedlings from early season disease and insect pests affecting crop emergencvee and growth.

As used herein, the terms "pesticidal effect" and "pesticidal activity" mean any direct or indirect action on the target pest that results in reduction of feeding damage on the treated seeds as well as on the fruits, roots, shoots and/or foliage of plants grown from treated seeds as compared untreated seeds or to plants grown from untreated seeds, respectively. The terms "active against a (first or second) pest" also have the same meaning. Such direct or indirect actions include killing of the pest, repelling the pest from the plant seeds, fruits, roots, shoots and/or foliage, inhibiting feeding of the pest on, or the laying of its eggs on, the plant seeds, fruits, roots, shoots and/or foliage, and inhibiting or preventing reproduction of the pest.

Pests in particular include soil-borne and soil-dwelling, shoot and foliage pests.

Particular fungi to be controlled include the following:
*Albugo* spp. (white rust) on ornamentals, vegetables (e. g. *A. candida*) and sunflowers (e. g. *A. tragopogonis*); *Alternaria* spp. (Alternaria leaf spot) on vegetables, rape (A. *brassicola* or *brassicae*), sugar beets (A. *tenuis*), fruits, rice, soybeans, potatoes (e. g. *A. solani* or A. *alternata*), tomatoes (e. g. *A. solani* or *A*. *alternata*) and wheat; *Aphanomyces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.) on corn (e. g. *D. maydis),* cereals (e. g. *B. sorokiniana:* spot blotch), rice (e. g. *B. oryzae)* and turfs; *Blumeria* (formerly *Erysiphe*) *graminis* (powdery mildew) on cereals (e. g. on wheat or barley); *Botrytis cinerea* (teleomorph: *Botryotinia fuckeliana:* grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma)* spp. (rot or wilt) on broad-leaved trees and evergreens, e. g. *C. ulmi* (Dutch elm disease) on elms; *Cercospora* spp. (Cercospora leaf spots) on corn, rice, sugar beets (e. g. *C*. *beticola),* sugar cane, vegetables, coffee, soybeans (e. g. *C*. *sojina* or *C*. *kikuchii)* and rice; *Cladosporium* spp. on tomatoes (e. g. *C*. *fulvum:* leaf mold) and cereals, e. g. *C*. *herbarum* (black ear) on wheat; *Claviceps purpurea* (ergot) on cereals; *Cochliobolus* (anamorph: *Helminthosporium* of *Bipolaris*) spp. (leaf spots) on corn (*C*. *carbonum*), cereals (e. g. *C*. *sativus,* anamorph: *B. sorokiniana*) and rice (e. g. *C*. *miyabeanus,* anamorph: *H*. *oryzae*); *Colletotrichum* (teleomorph: *Glomerella)* spp. (anthracnose) on cotton (e. g. *C*. *gossypii*), corn (e. g. *C*. *graminicola*), soft fruits, potatoes (e. g. *C*. *coccodes*: black dot), beans (e. g. *C*. *lindemuthianum*) and soybeans (e. g. *C. truncatum* or *C*. *gloeosporioides*); *Corticium* spp., e. g. *C*. *sasakii* (sheath blight) on rice; *Corynespora cassiicola* (leaf spots) on soybeans and ornamentals; *Cycloconium* spp., e. g. *C*. *oleaginum* on olive trees; *Cylindrocarpon* spp. (e. g. fruit tree canker or young vine decline, teleomorph: *Nectria* or *Neonectria* spp.) on fruit trees, vines (e. g. *C*. *liriodendri,* teleomorph: *Neonectria liriodendri:* Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium,* teleomorph: *Pyrenophora)* spp. on corn, cereals, such as barley (e. g. *D. teres,* net blotch) and wheat (e. g. *D. tritici-repentis:* tan spot), rice and turf; Esca (dieback, apoplexy) on vines, caused by *Formitiporia* (syn. *Phellinus) punctata, F. mediterranea, Phaeomoniella chlamydospora* (earlier *Phaeoacremonium chlamydosporum), Phaeoacremonium aleophilum and*/*or Botryosphaeria obtusa; Elsinoe* spp. on pome fruits (*E. pyri*), soft fruits (*E. veneta:* anthracnose) and vines (*E*. *ampelina:* anthracnose); *Entyloma oryzae* (leaf smut) on rice; *Epicoccum* spp. (black mold) on wheat; *Erysiphe* spp. (powdery mildew) on sugar beets *(E. betae),* vegetables (e. g. *E. pist),* such as cucurbits (e. g. *E. cichoracearum),* cabbages, rape (e. g. *E*. *cruciferarum); Eutypa lata* (Eutypa canker or dieback, anamorph: *Cytosporina lata,* syn. *Libertella blepharis)* on fruit trees, vines and ornamental woods; *Exserohilum (syn. Helminthosporium)* spp. on corn (e. g. *E. turcicum); Fusarium* (teleomorph: *Gibberella)* spp. (wilt, root or stem rot) on various plants, such as *F. graminearum* or *F. culmorum* (root rot, scab or head blight) on cereals (e. g. wheat or barley), *F. oxysporum* on tomatoes, *F. solani* on soybeans and *F. verticillioides* on corn; *Gaeumannomyces graminis* (take-all) on cereals (e. g. wheat or barley) and corn; *Gibberella* spp. on cereals (e. g. *G. zeae)* and rice (e. g. *G. fujikuroi:* Bakanae disease); *Glomerella cingulata* on vines, pome fruits and other plants and *G. gossypii* on cotton; Grain-staining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M. laxa, M. fructicola* and *M*. *fructigena* (bloom and twig blight, brown rot) on stone fruits and other rosaceous plants; *Mycosphaerella* spp. on cereals, bananas, soft fruits and ground nuts, such as e. g. *M*. *graminicola* (anamorph: *Septoria tritici,* Septoria blotch) on wheat or *M*. *fijiensis* (black Sigatoka disease) on bananas; *Peronospora* spp. (downy mildew) on cabbage (e. g. *P*. *brassicae*), rape (e. g. *P*. *parasitica*), onions (e. g. *P. destructor),* tobacco (*P. tabacina*) and soybeans (e. g. *P*. *manshurica*); *Phakopsora pachyrhizi* and *P. meibomiae* (soybean rust) on soybeans; *Phialophora* spp. e. g. on vines (e. g. *P. tracheiphila* and *P. tetraspora)* and soybeans (e. g. *P. gregata:* stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola*: can and leaf spot) and soybeans (e. g. stem rot: *P*. *phaseoli,* teleomorph: *Diaporthe phaseolorum*); *Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*), potatoes and tomatoes (e. g. *P. infestans:* late blight) and broad-leaved trees (e. g. *P*. *ramorum*: sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucorricha* on apples; *Polymyxa* spp., e. g. on cereals, such as barley and wheat *(P. graminis)* and sugar beets *(P. betae)* and thereby transmitted viral diseases; *Pseudocercosporella herpotrichoides* (eyespot, teleomorph: *Tapesia yallundae)* on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ,rotbrenner', anamorph: *Phialophora*) on vines; *Puccinia* spp. (rusts) on various plants, e. g. *P. triticina* (brown or leaf rust), *P*. *striiformis* (stripe or yellow rust), *P. hordei* (dwarf rust), *P. graminis* (stem or black rust) or *P. recondita* (brown or leaf rust) on cereals, such as e. g. wheat, barley or rye, and asparagus (e. g. *P. asparagi); Pyrenophora* (anamorph: *Drechslera) tritici-repentis* (tan spot) on wheat or *P. teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum); Ramularia* spp., e. g. *R. collo-cygni* (Ramularia leaf spots, Physiological leaf spots) on barley and *R*. *beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R*. *solani* (sheath blight) on rice or *R*. *cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum)* and soybeans (e. g. *S*. *rolfsii* or *S. sclerotiorum*); *Septoria* spp. on various plants, e. g. *S. glycines* (brown spot) on soybeans, *S*. *tritici* (Septoria blotch) on wheat and *S*. (syn. *Stagonospora)* nodorum (Stagonospora blotch) on cereals; *Uncinula* (syn. *Erysiphe*) *necator* (powdery mildew, anamorph: *Oidium tuckeri)* on vines; *Setospaeria* spp. (leaf blight) on corn (e. g. *S*. *turcicum,* syn. *Helminthosporium turcicum*) and turf; *Sphacelotheca* spp. (smut) on corn, (e. g. *S. reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria] nodorum)* on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. fritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli)* and sugar beets (e. g. *U*. *betae); Ustilago* spp. (loose smut) on cereals (e. g. *U. nuda* and *U*. *avaenae),* corn (e. g. *U. maydis:* corn smut) and sugar cane; *Venturia* spp. (scab) on apples (e. g. *V*. *inaequalis)* and pears; and *Verticillium* spp. (wilt) on various plants, such as fruits and ornamentals, vines, soft fruits, vegetables and field crops, e. g. *V. dahliae* on strawberries, rape, potatoes and tomatoes.

Particualr insects to be controlled include the following:
lepidopterans (*Lepidoptera*), for example *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni* and *Zeiraphera canadensis;*
beetles *(Coleoptera),* for example *Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, lps typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Otiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus* and *Sitophilus granaria;*
flies, mosquitoes (*Diptera*), e.g. *Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca autumnalis, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga spp., Simulium vittatum, Stomoxys calcitrans, Tabanus bovinus, Tabanus atratus, Tabanus lineola,* and *Tabanus similis, Tipula oleracea,* and *Tipula paludosa;*
thrips (*Thysanoptera*), e.g. *Dichromothrips corbetti, Dichromothrips ssp., Frankliniella fusca, Frankliniella occidentalis, Frankliniella tritici, Scirtothrips citri, Thrips oryzae, Thrips palmi* and *Thrips tabaci,*
termites (*Isoptera*), e.g. *Calotermes flavicollis, Leucotermes flavipes, Heterotermes aureus, Reticulitermes flavipes, Reticulitermes virginicus, Reticulitermes lucifugus, Reticulitermes santonensis, Reticulitermes grassei, Termes natalensis,* and *Coptotermes formosanus;*
cockroaches (*Blattaria - Blattodea*), e.g. *Blattella germanica, Blattella asahinae, Periplaneta americana, Periplaneta japonica, Periplaneta brunnea, Periplaneta fuligginosa, Periplaneta australasiae,* and *Blatta orientalis;*
bugs, aphids, leafhoppers, whiteflies, scale insects, cicadas (*Hemiptera*), e.g. *Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Bemisia argentifolii, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzus persicae, Myzus ascalonicus, Myzus cerasi, Myzus varians, Nasonovia ribisnigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma* spp., and *Arilus critatus;*
ants, bees, wasps, sawflies (*Hymenoptera*), e.g. *Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Lasius niger, Monomorium pharaonis, Solenopsis geminata, Solenopsis invicta, Solenopsis richteri, Solenopsis xyloni, Pogonomyrmex barbatus, Pogonomyrmex californicus, Pheidole megacephala, Dasymutilla occidentalis, Bombus spp., Vespula squamosa, Paravespula vulgaris, Paravespula pennsylvanica, Paravespula germanica, Dolichovespula maculata, Vespa crabro, Polistes rubiginosa, Camponotus floridanus,* and *Linepithema humile;*
crickets, grasshoppers, locusts (*Orthoptera*), e.g. *Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera,* and *Locustana pardalina;*
arachnoidea, such as arachnids (Acarina), e.g. of the families Argasidae, Ixodidae and Sarcoptidae, such as Amblyomma americanum, Amblyomma variegatum, Ambryomma maculatum, Argas persicus, Boophilus annulatus, Boophilus decoloratus, Boophilus microplus, Dermacentor silvarum, Dermacentor andersoni, Dermacentor variabilis, Hyalomma truncatum, Ixodes ricinus, Ixodes rubicundus, Ixodes scapularis, Ixodes holocyclus, Ixodes pacificus, Ornithodorus moubata, Ornithodorus hermsi, Ornithodorus turicata, Ornithonyssus bacoti, Otobius megnini, Dermanyssus gallinae, Psoroptes ovis, Rhipicephalus sanguineus, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and Oligonychus pratensis; Araneida, e.g. Latrodectus mactans, and Loxosceles reclusa;
fleas (*Siphonaptera*), e.g. *Ctenocephalides felis, Ctenocephalides canis, Xenopsylla cheopis, Pulex irritans, Tunga penetrans,* and *Nosopsyllus fasciatus,*
silverfish, firebrat (*Thysanura*), e.g. *Lepisma saccharina* and *Thermobia domestica,*
centipedes (*Chilopoda*), e.g. *Scutigera coleoptrata,*
millipedes (*Diplopoda*), e.g. *Narceus spp.,*
Earwigs (*Dermaptera*), e.g. *forficula auricularia,*
lice (*Phthiraptera*), e.g. *Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus* and *Solenopotes capillatus.*
Collembola (springtails), *e.g. Onychiurus ssp..*

The compositions of the present invention are also suitable for controlling Nematodes : plant parasitic nematodes such as root knot nematodes, *Meloidogyne hapla, Meloidogyne incognita, Meloidogyne javanica,* and other Meloidogyne species; cyst-forming nematodes, *Globodera rostochiensis* and other Globodera species; *Heterodera avenae, Heterodera glycines, Heterodera schachtii, Heterodera trifolii,* and other Heterodera species; Seed gall nematodes, Anguina species; Stem and foliar nematodes, Aphelenchoides species; Sting nematodes, *Belonolaimus longicaudatus* and other Belonolaimus species; Pine nematodes, *Bursaphelenchus xylophilus* and other Bursaphelenchus species; Ring nematodes, Criconema species, Criconemella species, Criconemoides species, Mesocriconema species; Stem and bulb nematodes, *Ditylenchus destructor, Ditylenchus dipsaci* and other Ditylenchus species; Awl nematodes, Dolichodorus species; Spiral nematodes, *Heliocotylenchus multicinctus* and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, *Longidorus elongatus* and other Longidorus species; Lesion nematodes, *Pratylenchus neglectus, Pratylenchus penetrans, Pratylenchus curvitatus, Pratylenchus goodeyi* and other Pratylenchus species; Burrowing nematodes, *Radopholus similis* and other Radopholus species; Reniform nematodes, *Rotylenchus robustus* and other Rotylenchus species; Scutellonema species; Stubby root nematodes, *Trichodorus primitivus* and other Trichodorus species, Paratrichodorus species; Stunt nematodes, *Tylenchorhynchus claytoni,* Tylenchorhynchus dubius and other Tylenchorhynchus species; Citrus nematodes, Tylenchulus species; Dagger nematodes, Xiphinema species; and other plant parasitic nematode species.

The compositions of the present invention are also useful for controlling arachnids (*Arachnoidea*), such as acarians (*Acarina*), e.g. of the families *Argasidae, Ixodidae* and *Sarcoptidae,* such as *Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei,* and Eriophyidae spp. such as *Aculus schlechtendali, Phyllocoptrata oleivora* and *Eriophyes sheldoni;* Tarsonemidae spp. such as *Phytonemus pallidus* and *Polyphagotarsonemus latus*; Tenuipalpidae spp. such as *Brevipalpus phoenicis;* Tetranychidae spp. such as *Tetranychus cinnabarinus, Tetranychus kanzawai, Tetranychus pacificus*, *Tetranychus telarius* and *Tetranychus urticae, Panonychus ulmi, Panonychus citri, and oligonychus pratensis.*

The present invention also provides a seed that has been treated by the method described herein. It also provides a seed obtainable by the method described herein.

Further, the present invention also provides a seed that has been treated with the seed treatment composition described herein, and in particular that is coated with the composition or contains it. It also provides a seed obtainable by using the composition described herein.

According to a particular embodiment, the seeds treated with the composition of the present invention have a loading of active ingredient(s) of 0.1 to 500 g, preferably 0.5 to 200 g, and In particular 0.75 to 100 g, per 100 kilograms of seed.

According to a further particular embodiment, the seeds treated with the composition of the present invention have a loading of hyperbranchend polymer of 1 to 1000 g, preferably 2 to 500 g, and In particular 5 to 250 g, per 100 kilograms of seed.

The term "coated with and/or contains" here signifies that the active ingredient(s) is for the most part on the surface of the seed at the time of application, although a greater or lesser part of the active ingredient(s) may penetrate into the seed, depending on the method of application. When the said seed is (re)planted, it may absorb the active ingredient(s).

According to one embodiment, such a seed comprising the active ingredlent(s) has a coating, wherein the coating comprises the active ingredient(s). According to a further embodiment, such a seed comprising the active ingredient(s) is a seed whose germinable part and/or natural sheath, shell, pod and/or integument comprise(s) the active ingredient(s). Also, the active ingredient(s) can be present In both the coating and the germinable part and/or natural sheath, shell, pod and/or integument of the seed.

Preferably, such seeds comprise an effective amount of the active ingredient(s). Accordingly, the seeds are coated, impregnated or coated and impregnated in such a manner that pest damage during germination and emergence is reduced.

The seeds treated with the composition of the present invention may also be enveloped with a film overcoating to protect the coating containing the active ingredient(s). Such overcoatings are known in the art and may be applied using conventional fluidized bed and drum film coating techniques.

The seeds of the present invention can be used for the propagation of plants. The seeds can be stored, handled, planted/sowed and tilled.

In the context of the present invention, aliphatic hydrocarbon radicals include in particular alkyl, alkylene, alkenyl and cycloalkyl radicals. Aromatic hydrocarbon radicals include in particular aryl and arylene radicals. Araliphatic hydrocarbon radicals include in particular aralkyl radicals.

The expression "alkyl" comprises straight-chain and branched alkyl groups. Suitable short-chain alkyl groups are, e.g., straight-chain or branched C₁-C₇ alkyl, preferably C₁-C₆ alkyl and particularly preferably C₁-C₄ alkyl groups. These include in particular methyl, ethyl, propyl, isopropyl, n-butyl, 2-butyl, sec-butyl, tert-butyl, n-pentyl, 2-pentyl, 2-methylbutyl, 3-methylbutyl, 1,2-dimethylpropyl, 1,1-dimethylpropyl, 2,2-dimethylpropyl, 1-ethylpropyl, n-hexyl, 2-hexyl, 2-methylpentyl, 3-methylpentyl, 4-methylpentyl, 1,2-dimethylbutyl, 1 ,3-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, 1-ethyl-2-methylpropyl, n-heptyl, 2-heptyl, 3-heptyl, 2-ethylpentyl, 1-propylbutyl, octyl, and the like. Suitable long-chain C₈-C₃₀ alkyl groups are straight-chain and branched alkyl or alkenyl groups. In this connection, they are preferably mainly linear alkyl residues, such as those also present in natural or synthetic fatty acids and fatty alcohols and also oxo alcohols, which, if appropriate, in addition can be mono-, di- or polyunsaturated. These include, e.g., n-hexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, and the like.

The expression "alkylene" within the meaning of the present invention represents straight-chain or branched alkanediyl groups with 1 to 7 carbon atoms (short chain), e.g. methylene, 1,2-ethylene, 1,3-propylene, and the like, or with 8 to 40 carbon atoms (long chain).

Alkenyl preferably represents straight-chain and branched alkenyl groups having 2 to 40 carbon atoms, which can be monounsaturated, diunsaturated or polyunsaturated. They are preferably C₉-C₃₅, in particular C₁₀-C₃₀ and especially C₁₂-C₂₆ alkenyl groups. These include in particular octenyl, nonenyl, decenyl, undecenyl, dodecenyl, tridecenyl, tetradecenyl, pentadecenyl, hexadecenyl, heptadecenyl, octadecenyl, nonadecenyl, linolyl, linoleyl, eleostearyl, and the like, and in particular oleyl (9-octadecenyl).

Cycloalkyl preferably represents C₃-C₁₂-cycloalkyl radicals, for example cyclopropyl, cyclobutyl, cyclopentyl, cyclohexyl, cycloheptyl, cyclooctyl, cyclononyl, cyclodecyl, cycloundecyl and cyclododecyl; preference is given to cyclopentyl, cyclohexyl and cycloheptyl. C₅-C₈cycloalkyl, such as cyclopentyl, cyclohexyl, cycloheptyl or cyclooctyl, are usually preferred.

Aryl comprises unsubstituted and substituted aryl groups usually having 6 to 14 carbon atoms and preferably represents phenyl, tolyl, xylyl, mesityl, naphthyl, fluorenyl, anthracenyl, phenanthrenyl, naphthacenyl and in particular phenyl, tolyl, xylyl or mesityl.

Aralkyl comprises unsubstituted and substituted aryl groups usually having 6 to 14 carbon atoms bound to alkylene usually having 1 to 7 carbon atoms.

### Examples

The invention will be illustrated by the following examples, which should not be construed as limiting the invention.

### Reference examples: Preparation of hyperbranched polymers

### Reference example 1:

Hyperbranched polycarbonate from diethylcarbonate and polyoxyethylene triol, having an OH number of 265 mg KOH/g.

In a 6 L flask, equipped with stirrer, internal thermometer and reflux condenser, diethylcarbonate (1183 g, 10.0 moles) was reacted with a triol (2700 g, 10.0 moles; prepared by ethoxylation of trimethylolpropane with 3 units ethylene oxide) at 145°C and normal pressure under nitrogen atmosphere in the presence of potassium carbonate (0.4 g). Ethanol was constantly formed during the reaction as a by-product of the condensation, thus lowering the boiling point to about 100°C within 5hrs. After the boiling temperature remained constant, the reflux condenser was substituted by a distillation unit, comprising a 20 cm packed column, a cooler directed downwards and a receiver, and the ethanol formed during the reaction was distilled off continuously. After about 810 g ethanol (overall) had been removed, corresponding to a conversion of about 88% based on ethanol, the reaction mixture was cooled down to 100°C and adjusted with 85% phosphoric acid to a pH value <7 to neutralise potassium carbonate. The mixture was stirred at 140°C for 1 hr. Then the reaction apparatus was equipped with a gas inlet tube and the mixture was stripped with nitrogen at 180°C for 3hrs. In this way further residual ethanol or low-molecular compounds (about 10 g overall) were removed.

Subsequently, the product was cooled and analysed. The OH number was found to be 265 mg KOH/g. Molecular masses, determined by GPC (eluent = DMAC, calibration = PMMA): Mn = 2150 g/mole, Mw = 7400 g/mole. A 10 % by weight solution of the product in water had a viscosity of 13 mPas, as determined on a TA Instruments CSL 500 Carri Med Rheometer with a cone-plate system at a shear rate of 100 1/s.

### Reference example 2:

Hyperbranched polyester from alkenyl succinic acid anhydride (Pentasize 8) and polyoxyethylene triol, having an OH number of 70 mg KOH/g and an acid number of 28 mg KOH/g.

698 g (2 moles) of a C₁₈-alkenylsuccinic acid anhydride (Pentasize 8, Trigon Chemie GmbH) with a molecular mass of 349 g/mole, 1340 g (2.0 moles) of a trimethylolpropane-based polyetherol, grafted statistically with 12 units ethylene oxide, and 0.1 g dibutyltindilaureate were weighed in to a 4 L glass flask, equipped with stirrer, internal thermometer, a cooler directed downwards with a tubular vacuum connector, and heated slowly to 180°C under stirring. Vacuum was applied continuously and the internal pressure of the apparatus was reduced up to 40 mbar. Due to the gas bubbles formed the mixture foamed slightly. The reaction mixture was stirred at 180°C for 4hrs. at 40 mbar and additional for 2 hrs. at 180°C at 20 mbar while the water formed during the reaction was distilled of continuously.

Decrease in acid number was checked periodically until a value under 30 mg KOH/g was found. Subsequently, the product was cooled and analysed.
The OH number was found to be 70 mg KOH/g, the acid number was 28 mg KOH/g. Molecular masses determined by GPC (eluent = DMAC, calibration = PMMA): Mn = 3400 g/mole, Mw = 21000 g/mole. A 10 % by weight solution of the product in water had a viscosity of 216 mPas, as determined on a TA Instruments CSL 500 Carri Med Rheometer with a cone-plate system at a shear rate of 100 1/s.

### Reference example 3:

Hyperbranched polycarbonate from diethylcarbonate and polyoxyethylene triol, having an OH number of 150 mg KOH/g.

In a 6 L flask, equipped with stirrer, internal thermometer and reflux condenser, diethylcarbonate (590.7 g, 5.0 moles) was reacted with a polyoxyethylene triol (3350 g, 5.0 moles; prepared by ethoxylation of trimethylolpropane with 12 units ethylene oxide) at 145°C at normal pressure under nitrogen atmosphere in the presence of potassium carbonate (0.5 g). Ethanol was constantly formed during the reaction as a by-product of the condensation, thus lowering the boiling point to about 120°C within 6hrs. After the boiling temperature remained constant, the reflux condenser was substituted by a distillation unit, comprising a 20 cm packed column, a cooler directed downwards and a receiver, and the ethanol formed during the reaction was distilled off continuously. After about 405 g ethanol (overall) had been removed, corresponding to a conversion of about 88% based on ethanol, the reaction mixture was cooled down to 100°C and adjusted with 85% phosphoric acid (about 1.2 g) to a pH value <7 to neutralise the potassium carbonate. The mixture was stirred at 140°C for 1hr. Then the reaction apparatus was equipped with a gas inlet tube and the mixture was stripped with nitrogen at 180°C for 3hrs. In this way, further residual of ethanol or low-molecular compounds (about 10 g overall) were removed.

Subsequently, the product was cooled and analysed. The OH number was found to be 150 mg KOH/g. Molecular masses determined by GPC (eluent = DMAC, calibration = PMMA): Mn = 2750 g/mole, Mw = 5700 g/mole. A 10 % by weight solution of the product in water had a viscosity of 2 mPas, as determined on a TA Instruments CSL 500 Carri Med Rheometer with a cone-plate system at a shear rate of 100 1/s.

### Examples 1 to 3: Seed treatment compositions

Ready-to-use treatment slurries were prepared by mixing all ingredients as indicated.

| | 1 | 2 | 3 | Control |
|---|---|---|---|---|
| REGENT 500 FS | 40g | 40g | 40g | 40g |
| Poylmer of Ref. ex. 1 | 10g | | | |
| Poylmer of Ref. ex. 2 | | 10g | | |
| Poylmer of Ref. ex. 3 | | | 10g | |
| WATER | 50g | 50g | 50g | 60g |
| Loss of a.i. | 16 | 19 | 18 | 41 |
| flowability | 24,0 | 23 | 19,5 | 20,5 |

REGENT 500 FS is a commercial seed treatment product from BASF containing 500 g/L of the insecticide fipronil.

Seed treatment experiments were carried out with the slurries by applying 10 g slurry to 2 kg untreated maize in a mini-Rotostat batch treater from SATEC. The flowability of treated maize was determined as the time required for 2 kg maize to flow through a vibrated metal funnel with the following dimensions: 290 mm (diameter), 30 mm (outlet), 290 mm (length).

Adhesion to the seed was determined 24 hours after treatment by shearing the treated seed for 30 seconds in a "dummy" treatment in the same Rotostat and determining the loading with Fipronil before and after shearing. The loss of a.i. is determined as the difference between these two values.

## Claims

1. A method of treating seed, which comprises applying to a lot of seeds an effective amount of a seed treatment composition comprising active ingredient and hyperbranched polymer, wherein the seed is corn, wheat, barley, oat, rye, spelt, vegetable, soybean or rape seed.

2. The method of claim 1, wherein the seeds are substantially dry before the effective amount of the composition is applied.

3. The method of any one of claims 1 to 2, wherein the seed is corn seed.

4. The method according to any one of claims 1 to 3, wherein the hyperbranched polymer has a degree of branching (DB) from 20 to 99%.

5. The method according to any one of claim 1 to 4, wherein the hyperbranched polymer has a weight-average molecular weight of more than 1000 g/mol.

6. The method according to any one of claims 1 to 5, wherein the hyperbranched polymer has a glass transition temperature of - 80°C to 50°C.

7. The method according to any one of claims 1 to 6, wherein the viscosity of a 10% by weight solution of hyperbranched polymer in water is lower than 1000 mPas.

8. The method according to any one of claims 1 to 7, wherein the hyperbranched polymer is selected from hyperbranched polycarbonates, hyperbranched polyesters, hyperbranched polyethers, hyperbranched polyestercarbonates, hyperbranched polyethercarbonates, hyperbranched polyetheresters, hyperbranched polyetherestercarbonates, hyperbranched polyurethanes, hyperbranched polyureas, hyperbranched polyamides, hyperbranched polyamines, hyperbranched polyureaurethanes, hyperbranched polyesteramides, hyperbranched polyesteramines and hyperbranched polyetheramines.

9. Seed coated with a composition as defined in any one of claims 1 to 8, wherein the seed is corn, wheat, barley, oat, rye, spelt, vegetable, soybean or rape seed.

10. The seed of claim 9, wherein the seed is corn seed.

11. The use of a hyperbranched polymer as defined in any one of claims 1 to 8 as coating agent for seed, wherein the seed is corn, wheat, barley, oat, rye, spelt, vegetable, soybean or rape seed.

12. The use of claim 11, wherein the seed is corn seed.

## Patentansprüche

1. Verfahren zum Behandeln von Saatgut, bei dem man eine wirksame Menge einer Saatgutbehandlungszusammensetzung, die Wirkstoff und hyperverzweigtes Polymer umfasst, auf eine Saatgutcharge appliziert, wobei es sich bei dem Saatgut um Mais-, Weizen-, Gersten-, Hafer-, Roggen-, Spelz-, Gemüse-, Sojabohnen- oder Rapssaatgut handelt.

2. Verfahren nach Anspruch 1, wobei die Saatgüter vor dem Applizieren der wirksamen Menge der Zusammensetzung im Wesentlichen trocken sind.

3. Verfahren nach einem der Ansprüche 1 bis 2, wobei es sich bei dem Saatgut um Maissaatgut handelt.

4. Verfahren nach einem der Ansprüche 1 bis 3, wobei das hyperverzweigte Polymer einen Verzweigungsgrad DB (Degree of Branching) von 20 bis 99% aufweist.

5. Verfahren nach einem der Ansprüche 1 bis 4, wobei das hyperverzweigte Polymer ein gewichtsmittleres Molekulargewicht von mehr als 1000 g/mol aufweist.

6. Verfahren nach einem der Ansprüche 1 bis 5, wobei das hyperverzweigte Polymer eine Glasübergangstemperatur von -80°C bis 50°C aufweist.

7. Verfahren nach einem der Ansprüche 1 bis 6, wobei die Viskosität einer 10 gew.-%igen Lösung des hyperverzweigten Polymers in Wasser weniger als 1000 mPas beträgt.

8. Verfahren nach einem der Ansprüche 1 bis 7, wobei das hyperverzweigte Polymer aus der Reihe hyperverzweigte Polycarbonate, hyperverzweigte Polyester, hyperverzweigte Polyether, hyperverzweigte Polyestercarbonate, hyperverzweigte Polyethercarbonate, hyperverzweigte Polyetherester, hyperverzweigte Polyetherestercarbonate, hyperverzweigte Polyurethane, hyperverzweigte Polyharnstoffe, hyperverzweigte Polyamide, hyperverzweigte Polyamine, hyperverzweigte Polyharnstoffurethane, hyperverzweigte Polyesteramide, hyperverzweigte Polyesteramine und hyperverzweigte Polyetheramine ausgewählt ist.

9. Saatgut, das mit einer Zusammensetzung wie in einem der Ansprüche 1 bis 8 definiert beschichtet ist, wobei es sich bei dem Saatgut um Mais-, Weizen-, Gersten-, Hafer-, Roggen-, Spelz-, Gemüse-, Sojabohnen- oder Rapssaatgut handelt.

10. Saatgut nach Anspruch 9, wobei es sich bei dem Saatgut um Maissaatgut handelt.

11. Verwendung eines hyperverzweigten Polymers wie in einem der Ansprüche 1 bis 8 definiert als Beschichtungsmittel für Saatgut, wobei es sich bei dem Saatgut um Mais-, Weizen-, Gersten-, Hafer-, Roggen-, Spelz-, Gemüse-, Sojabohnen- oder Rapssaatgut handelt.

12. Verwendung nach Anspruch 11, wobei es sich bei dem Saatgut um Maissaatgut handelt.

## Revendications

1. Méthode de traitement de semences, comprenant l'application à un lot de semences d'une quantité efficace d'une composition de traitement de semences, comprenant un ingrédient actif et un polymère hyper-ramifié, dans laquelle la semence est issue du maïs, du blé, de l'orge, de l'avoine, du seigle, de l'épeautre, de légumes, du soja ou du colza.

2. Méthode selon la revendication 1, dans laquelle les semences sont sensiblement sèches avant l'application de la quantité efficace de la composition.

3. Méthode selon l'une quelconque des revendications 1 à 2, dans laquelle la semence est une semence de maïs.

4. Méthode selon l'une quelconque des revendications 1 à 3, dans laquelle le polymère hyper-ramifié possède un degré de ramification (DR) allant de 20 à 99%.

5. Méthode selon l'une quelconque des revendications 1 à 4, dans laquelle le polymère hyper-ramifié possède un poids moléculaire moyen en poids supérieur à 1000 g/mol.

6. Méthode selon l'une quelconque des revendications 1 à 5, dans laquelle le polymère hyper-ramifié possède une température de transition vitreuse allant de -80°C à 50°C.

7. Méthode selon l'une quelconque des revendications 1 à 6, dans laquelle la viscosité d'une solution à 10% en poids du polymère hyper-ramifié dans l'eau est inférieure à 1000 mPa.s.

8. Méthode selon l'une quelconque des revendications 1 à 7, dans laquelle le polymère hyper-ramifié est choisi parmi les polycarbonates hyper-ramifiés, les polyesters hyper-ramifiés, les polyéthers hyper-ramifiés, les carbonates de polyester hyper-ramifiés, les carbonates de polyéther hyper-ramifiés, les polyétheresters hyper-ramifiés, les carbonates de polyétherester hyper-ramifiés, les polyuréthanes hyper-ramifiés, les polyurées hyper-ramifiées, les polyamides hyper-ramifiés, les polyamines hyper-ramifiées, les polyurée-uréthanes hyper-ramifiés, les polyesteramides hyper-ramifiés, les polyesteramides hyper-ramifiés, les polyesteramines hyper-ramifiées et les polyétheramines hyper-ramifiées.

9. Semence enrobée d'une composition telle que définie selon l'une quelconque des revendications 1 à 8, **caractérisée en ce que** la semence est issue du maïs, du blé, de l'orge, de l'avoine, du seigle, de l'épeautre, de légumes, du soja ou du colza.

10. Semence selon la revendication 9, **caractérisée en ce que** la semence est une semence de maïs.

11. Utilisation d'un polymère hyper-ramifié tel que défini selon l'une quelconque des revendications 1 à 8, comme agent d'enrobage pour semences, dans laquelle la semence est issue du maïs, du blé, de l'orge, de l'avoine, du seigle, de l'épeautre, de légumes, du soja ou du colza.

12. Utilisation selon la revendication 11, dans laquelle la semence est une semence de maïs.
